# EUROPEAN PATENT SPECIFICATION

(11) **EP 1 440 117 B1**
(45) Date of publication and mention of the grant of the patent: **27.12.2006**
(21) Application number: 02785142.7
(22) Date of filing: 01.10.2002
(51) Int. Cl.: C08K 5/13, C08L 67/02, C08L 77/00, C08G 63/00

(54) **POLYESTER AND POLYAMIDE COMPOSITIONS OF LOW RESIDUAL ALDEHYDE CONTENT**
POLYESTER- UND POLYAMIDZUSAMMENSETZUNGEN MIT NIEDRIGEM RESTALDEHYDGEHALT
COMPOSITIONS DE POLYESTER ET DE POLYAMIDE A FAIBLE CONTENU EN ALDEHYDE RESIDUEL

(30) Priority: 09.10.2001 US 327944 P; 06.12.2001 US 338253 P; 01.08.2002 US 400158 P
(43) Date of publication of application: 28.07.2004
(73) Proprietor: Ciba Specialty Chemicals Holding Inc., 4057 Basel (CH)
(72) Inventor: STOLL, Klaus, D-79589 Binzen (DE); TINKL, Michael, CH-5074 Eiken (CH); ANDREWS, Stephen, Mark, New Fairfield, CT 06812 (US); VOLDRICH, Jan, CH-4056 Basel (CH); STAMP, Melissa, B., Bear, DE 19701 (US); REINICKER, Roger, Hockessin, DE 19707 (US); ODORISIO, Paul, Angelo, Leonia, NJ 07605 (US); FISCHER, Walter, CH-4153 Reinach (CH); MÜLLER, Daniel, CH-4051 Basel (CH); BERTHELON, Natacha, F-68128 Village Neuf (FR); SIMON, Dirk, 67112 Mutterstadt (DE)
(86) International application number: PCT/EP2002/010995
(87) International publication number: WO 2003/031507

(56) References cited:
- WO-A-01/02489
- WO-A-99/67232
- US-A- 5 648 032
- US-A- 5 656 221

## Description

A mixture of a polyester, such as poly(ethylene terephthalate) PET, or a polyamide, and a suitable compound selected from the group consisting of the Mannich bases, when melt processed exhibits a lower residual aldehyde content than does polyester or polyamide alone when similarly treated. The invention pertains to any polyester or polyamide used in the manufacture of fibers, films or molded articles, for instance bottles or containers which are used to store consumer materials, for example food, beverages and water.

Acetaldehyde is known as a decomposition product of polyesters such as PET. The acetaldehyde imparts an undesirable taste or flavor to bottled water stored in PET bottles. It has been a long sought objective of the industry to reduce the level of acetaldehyde which migrates out of the PET bottle walls into the water or other beverage stored therein. A number of engineering or design changes to extruders, injection molding machines for preforms and bottle making machinery have been made to minimize formation of acetaldehyde when poly-(ethylene terephthalate) PET is processed. Modification to the PET composition itself have been made to lower its melting point or its melt viscosity in order to allow less severe thermal or mechanical damage when PET is processed into preforms or bottles.

Aldehydes may be formed in polyamides, for instance polyamide 6 and polyamide 6,6, under conditions of thermal stress. These aldehydes initiate a chain of events that lead to unwanted yellowing and a reduction in mechanical properties.

U.S. 4,361,681 teaches that polyester containing anhydride end-cap agents have a reduced acetaldehyde generation rate.

U.S. 5,459,224 discloses polyesters having 4-oxybenzylidene end-cap agents to impart improved weatherability and photostability, but no mention is made as to evolution of acetaldehyde. However, it is indicated that such polyesters are suitable for food and beverage packaging.

Polyesters can be synthesized by a number of routes known in the art using a variety of catalyst systems. EP-A-0 826 713 teaches that lower levels of acetaldehyde occur during copolymerization of PET when a phosphite such as bis(2,4-di-tert-butylphenyl)pentaerythritol phosphite is present during the polymerization.

U.S. 4,837,115; U.S. 5,258,233; U.S. 5,266,413; U.S. 5,340,884; U.S. 5,648,032 U.S. 5,650,469; WO-A-93/20147; WO-A-93/23474; WO-A-98/07786 and WO-A-98/39388 teach the use of polyamides as a means of reducing the concentration of acetaldehyde, presumably via a Schiff-base reaction with the aldehyde, which is reversible in the presence of water.

EP-A-0 191 701 describes biaxially oriented containers having excellent barrier properties said container comprising a blend of a poly(ethylene terephthalate) resin and an ethylene-vinyl alcohol copolymer resin. This reference is focused on improved gas barrier properties and is silent as to any reduction of acetaldehyde content.

JP Sho 62-257959 describes biaxially stretched vessels built of synthetic resin consisting of poly(ethylene terephthalate) blended with a copolymer of a polyamide, or blended with ethylene-vinyl alcohol at a weight fraction of 0.1 to 15 percent. The examples are limited to a single EVOH polymer (EVEL G110, Kuraray Co.). It is taught that a lower level of acetaldehyde occurs when the EVOH polymer is present.

EP-A-0 714 832 teaches a method of manufacturing a container comprising poly(ethylene terephthalate), polycarbonate or PEN polyester with an additive in the bottle wall which binds acetaldehyde. The additives is generally described as a polyamide.

U.S. 5,656,221 describes a process of producing polyester with reduced acetaldehyde concentration using certain catalysts or inert gas conditions or by adding an amide compound. These include commercial polyamides or long chain aliphatic amide compounds.

U.S. 5,856,385 teaches the use of polyamide or amide-wax to reduce the level of acetaldehyde which occurs when sorbitol-based clarifying agent is heated in polyolefins.

U.S. 4,873,279 discloses a composition comprising a copolyester-carbonate resin, a polyester resin, and a minor amount of a mixture of a polyol and at least one epoxide.

U.S. 4,394,470 discloses a polyethylene terephthalate molding composition with a caramel colorant. The caramel colorant may have been formed in situ from a mono- or disaccharide.

U.S. 5,681,879 discloses a flame-retardant polyester composition comprising a polyester resin, a polyhydric alcohol having not less than 3 hydroxyl groups, an inorganic flame retardant and a halogen-based flame retardant.

WO-A-00/66659 discloses molding compositions comprising PET and polyhydric alcohol additives for the reduction of acetaldehyde formation.

WO-A-01/00724 discloses the use of polyols towards reducing acetaldehyde formation in extruded products of PET.

WO-A01/30899 discloses the use of fumed silicon dioxide towards a marginal reduction in the formation of acetaldehyde in molded performs of PET.

U.S. 6,274,212 teach the use of various organic compounds towards reducing acetaldehyde formation.

Despite the efforts towards a solution for reducing aldehydic contaminates in PET water bottles, there still remains a need for more effective solutions.

The instant invention is useful for any polyester or polyamide where aldehydic compounds, for instance acetaldehyde, are formed or evolved during thermal processing of said polyester or polyamide. Thermal processing of polyester or polyamide includes the synthesis thereof, thermal exposure during solid state polymerization (SSP), any injection molding, injection-blow molding or stretch-blow molding used in the manufacture of preforms, parissons, or bottles and containers, or extrusion of film, or melt-spinning of fiber, or during any melt processing of polyester or polyamide above its glass transition temperature and below its decomposition temperature.

The instant invention provides for a lower amount of contaminants (i.e. aldehydes) in PET water bottles thus providing for improved taste or flavor in bottled water or other bottled beverages in said PET containers. The reduction in the amount of acetaldehyde is highly beneficial in this respect.

Further, the compositions of the present invention impart no unacceptable color or haze to PET bottles. "Haze" is an undesirable, perceptible graying effect.

The instant invention pertains to a composition, stabilized against the formation of aldehydic contaminants during melt processing of said composition, which comprises
(a) a polyester or polyamide, and
(b) an effective stabilizing amount of at least one effective stabilizing amount of at least one compound selected from the group consisting of the Mannich base compounds of formulae (Ia), (Ib), (IIa), (IIb), (IIc), (IIIa), (IIIb), (IIIc) (IVa), (IVb) and (IVc) 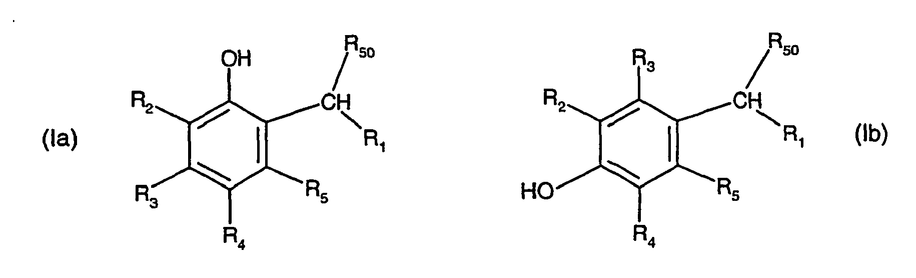 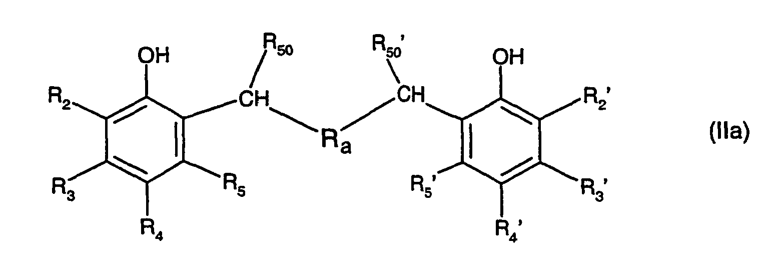 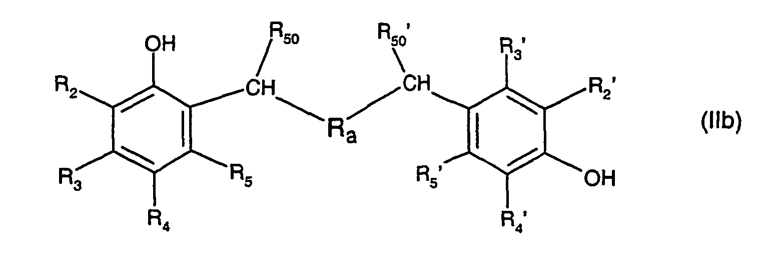 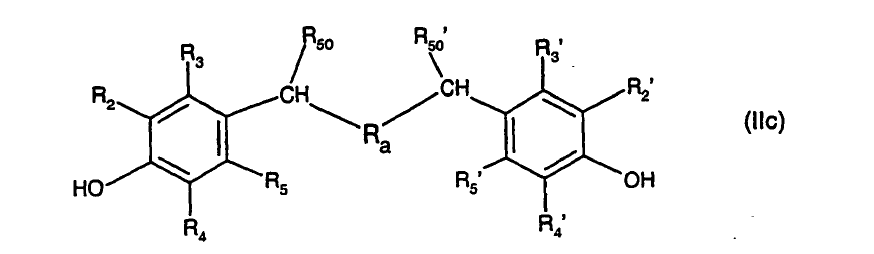 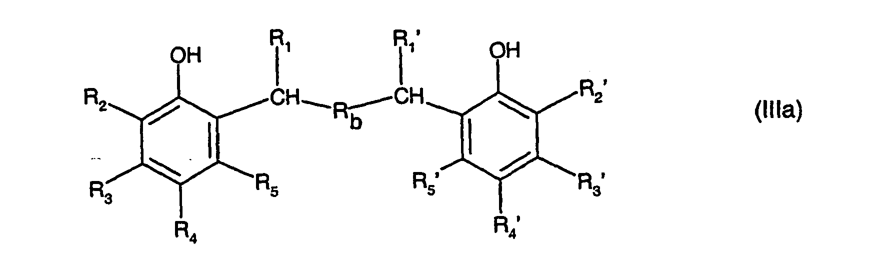 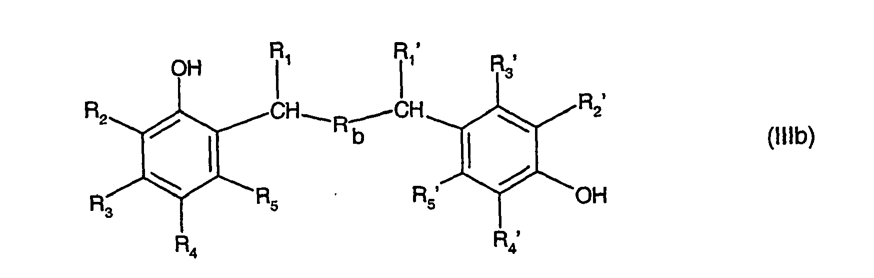 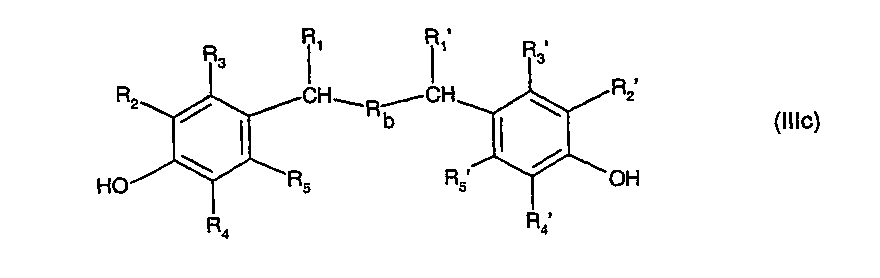 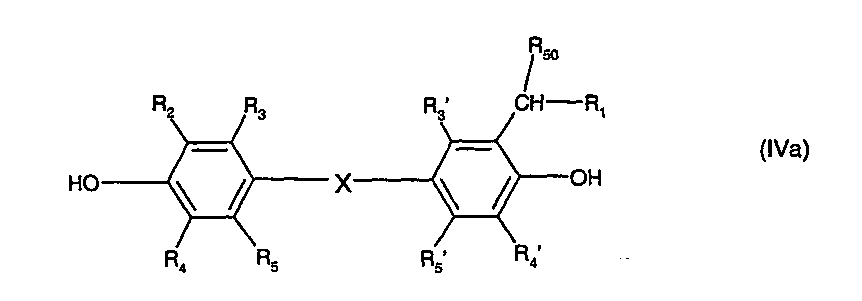 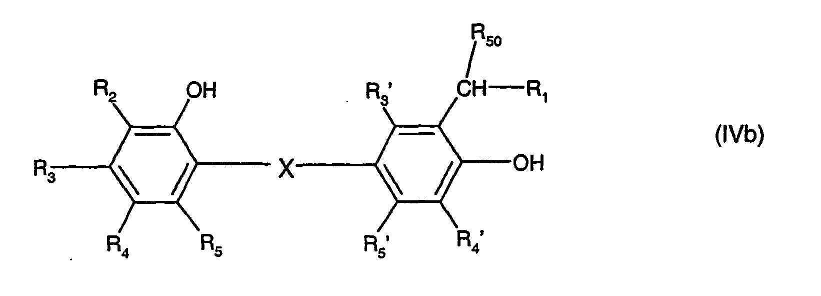 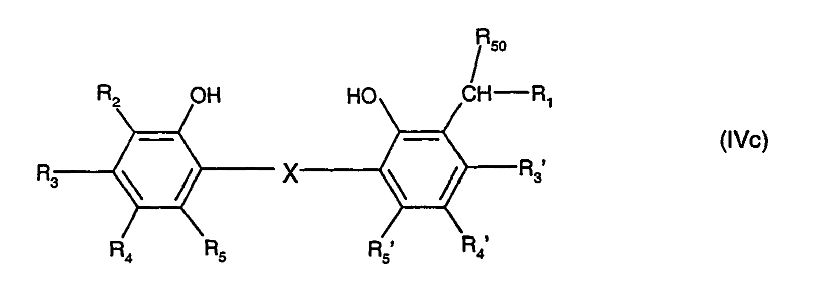
wherein
**R**₁ is hydrogen, hydroxy, C₁-C₂₅alkyl, C₇-C₉phenylalkyl, unsubstituted or C₁-C₄alkyl-substituted G₅-C₈cycloalkyl; naphthyl, phenanthryl, anthryl, 5,6,7,8-tetrahydro-2-naphthyl, thienyl, benzo[b]thienyl, naphtho[2,3-b]thienyl, thianthrenyl, furyl, benzofuryl, isobenzofuryl, dibenzofuryl, xanthenyl, phenoxathiinyl, pyrrolyl, imidazolyl, pyrazolyl, pyridinyl, pyrazinyl, pyrimidinyl, pyridazinyl, indolizinyl, isoindolyl, indolyl, indazolyl, purinyl, quinolizinyl, isoquinolyl, quinolyl, phthalazinyl, naphthyridinyl, quinoxalinyl, quinazolinyl, cinnolinyl, pteridinyl, carbazolyl, β-carbolinyl, phenanthridinyl, acridinyl, perimidinyl, phenanthrolinyl, phenazinyl, isothiazolyl, phenothiazinyl, isoxazolyl, furazanyl, biphenyl, terphenyl, fluorenyl or phenoxazinyl, each of which is unsubstituted or substituted by fluorine, hydroxy, C₁-C₁₈alkyl, C₁-C₁₈alkoxy, C₁-C₁₈alkylthio, di(C₁-C₄alkyl)amino, phenyl, benzyl, benzoyl or by benzoyloxy or R₁ is a radical of formula 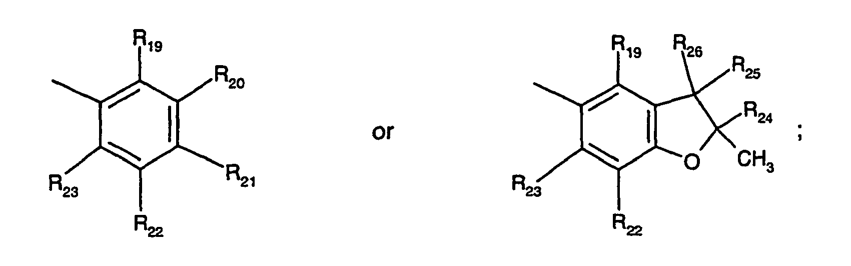
**R₂, R₃, R₄ and R₅** are each independently hydrogen, fluorine, hydroxy, C₁-C₂₅alkyl, C₁-C₂₅alkenyl, C₇-C₉phenylalkyl, C₇-C₉phenylalkenyl, unsubstituted or C₁-C₄alkyl- or alkenyl- substituted phenyl, unsubstituted or C₁-C₄alkyl-substituted C₅-C₈cycloalkyl, C₁-C₁₈alkoxy, C₁-C₁₈alkylthio, C₁-C₄alkylamino, di(C₁-C₄alkyl)amino, C₁-C₂₅alkanoyloxy, C₁-C₂₅alkanoylamino, C₃-C₂₅-alkanoyloxy interrupted by oxygen, sulfur or by >NR₈; -(CH₂)_{P}-C(O)OR₈, C₆-C₉cycfoalkylcarbonyloxy, benzoyloxy or C₁-C₁₂alkyl-substituted benzoyloxy, or adjacent radicals R₂ and R₃ or R₃ and R₄ or R₄ and R₅, together with the carbon atoms to which they are bonded, form a benzo ring, or R₂ and R₄ may each be -(CH₂)_{P}-COR₉ or -(CH₂)_{q}OH, or
**R₂ and R₄** may each be -CH(R₁)R₅₀;
**R₁', R₂', R₃', R₄'** and **R₅'** are independently defined as for R₁, R₂, R₃, R₄ and R₅ respectively;
**Rₐ** is C₁-C₁₈alkylene; C₂-C₁₈alkylene interrupted by oxygen, sulfur or by >NR₁₄; or Rₐ is C₂-C₂oalkylidene, C₇-C₂₀phenylalkylidene, C₅-C₈cycloalkylene, C₇-C₈bicyctoatkyiene, phenylene or naphthylene each unsubstituted or substituted by C₁-C₄alkyl or by fluorine; or is -R₆-Y-R₇-;
**R_{b}** is -NR₅₃, C₁-C₂₅alkylenediimino, C₁-C₂₅alkylenetriimino, C₁-C₂₅alkylenetetraimino, or C₅-C₈cycloalkylenediimino;
**X** is defined as for Rₐ or is a direct bond, -CR₁R₂-, -O-, -NR₁₀- or -S-, or X is phenylene substituted by R₂, R₃, R₄ and R₅, or X is alkylene substituted by -CF₃, C₁-C₁₂alkyl or phenyl, or X is a C₅-C₈cycloalkylene ring unsubstituted or substituted by 1 to 3 C₁-C₄alkyl groups;
**Y** is a direct bond, oxygen, sulfur or -NR₁₀-;
**R₆ and R₇** are each independently of the other phenylene or naphthylene each unsubstituted or substituted by C₁-C₄alkyl;
**R₈** is C₁-C₂₅alkyl;
**R₉** is hydroxy, 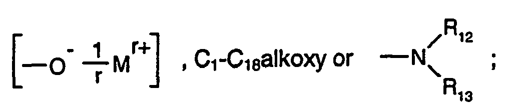
**R₁₀** is hydrogen, hydroxy, C₁-C₂₅alkyl or said alkyl unsubstituted or substituted by -OH, -OR₈, -NH(R₈) or -N(R₈)₂; C₂-C₂₅alkyl interrupted by oxygen or by sulfur, C₇-C₉phenylalkyl, unsubstituted or C₁-C₄alkyl-substituted C₅-C₈cycloalkyl, or a dendrimeric, oligomeric or polymeric C₄-C₁₀₀hydrocarbon radical;
**R₁₂** and **R₁₃** are each independently of the other hydrogen or C₁-C₁₈alkyl;
**R₁₄** is hydrogen or C₁-C₁₈alkyl;
**R₁₉, R₂₀, R₂₁, R₂₂** and **R₂₃** are each independently hydrogen, cyano, perfluoroalkyl of 1 to 12 carbon atoms, fluoro, chloro, hydroxy, C₁-C₂₅alkyl; C₂-C₂₅alkyl interrupted by oxygen, sulfur or by >NR₈; C₁-C₂₅alkoxy; C₂-C₂₅alkoxy interrupted by oxygen, sulfur or by >NR₈; C₁-C₄alkylamino, di(C₁-C₄alkyl)amino, C₁-C₂₅alkanoyl, C₁-C₂₅alkanoyloxy, C₁-C₂₅alkanoylamino; C₁-C₂₅alkylthio, C₇-C₉phenylalkyl, C₇-C₉phenylalkoxy, unsubstituted or C₁-C₄alkyl-substituted phenyl; unsubstituted or C₁-C₄alkyl-substituted phenoxy; unsubstituted or C₁-C₄alkyl-substituted C₅-C₈cycloalkyl; unsubstituted or C₁-C₄alkyl-substituted C₅-C₈cycloalkoxy; C₃-C₂₅alkanoyl interrupted by oxygen, sulfur or by >NR₈; C₁-C₂₅alkanoylcarbonyl; C₃-C₂₅alkanoylcarbonyl interrupted by oxygen, sulfur or by >NR₈; C₁-C₂₅alkylaminocarbonyl; C₃-C₂₅alkylaminocarbonyl interrupted by oxygen, sulfur or by >NR₈; di-C₁-C₂₅alkylaminocarbonyl; di-C₃-C₂₅alkylaminocarbonyl interrupted by oxygen, sulfur or by >NR₈; C₁-C₂₅alkanoyloxy; C₃-C₂₅alkanoyloxy interrupted by oxygen, sulfur or by >NR₈; C₁-C₂₅alkanoylamino, C₆-C₉cycloalkylcarbonyl, C₆-C₉cycloalkylcarbonyloxy, benzoyl or C₁-C₁₂alkyl-substituted benzoyl; benzoyloxy or C₁-C₁₂alkyl-substituted benzoyloxy; 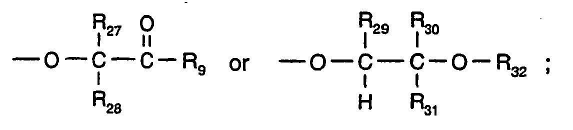
**R₂₄** is hydrogen, C₁-C₄alkyl, or unsubstituted or C₁-C₄alkyl-substituted phenyl;
**R₂₅ and R₂₆** are hydrogen, C₁-C₄alkyl or phenyl, with the proviso that at least one of the radicals **R₂₅** and **R₂₆** is hydrogen;
**R₂₇ and R₂₈** are each independently of the other hydrogen, C₁-C₄alkyl or phenyl;
**R₂₉** is hydrogen or C₁-C₄alkyl;
**R₃₀** is hydrogen, unsubstituted or C₁-C₄alkyl-substituted phenyl; C₁-C₂₅alkyl; C₂-C₂₅alkyl interrupted by oxygen, sulfur or by >NR₈; C₇-C₉phenylalkyl unsubstituted or substituted on the phenyl radical by from 1 to 3 C₁-C₄alkyl groups; or C₇-C₂₅phenylalkyl interrupted by oxygen, sulfur or by >NR₈ and unsubstituted or substituted on the phenyl radical by from 1 to 3 C₁-C₄alkyl groups;
**R₃₁** is hydrogen or C₁-C₄alkyl;
**R₃₂** is hydrogen, C₁-C₂₅alkanoyl; C₃-C₂₅alkanoyl interrupted by oxygen, sulfur or by >NR₈; C₂-C₂₅alkanoyl substituted by a di(C₁-C₆alkyl) phosphonate group; C₆-C₉cycloalkylcarbonyl, thenoyl, furoyl, benzoyl or C₁-C₁₂alkyl-substituted benzoyl, 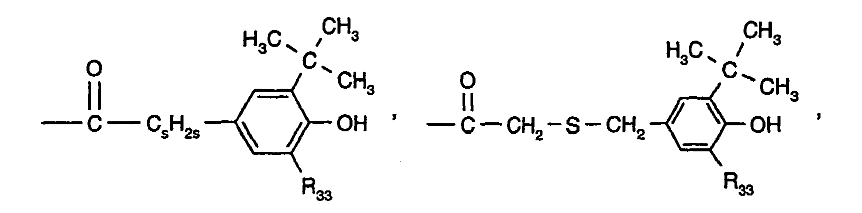 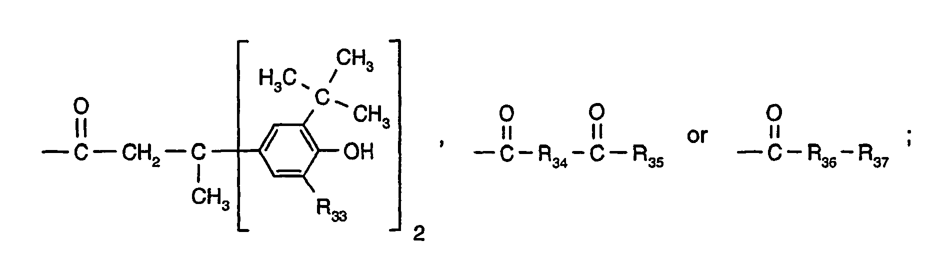
**R₃₃** is hydrogen or C₁-C₈alkyl;
**R₃₄** is a direct bond, C₁-C₁₈alkylene; C₂-C₁₈alkylene interrupted by oxygen, sulfur or by >NR₈; C₂-C₂₀alkylidene, C₇-C₂₀phenylalkylidene, C₅-C₈cycloalkylene, C₇-C₈bicycloalkylene, unsubstituted or C₁-C₄alkyl-substituted phenylene, 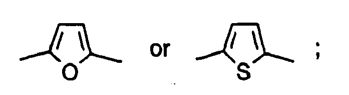
**R₃₅** is hydroxy, 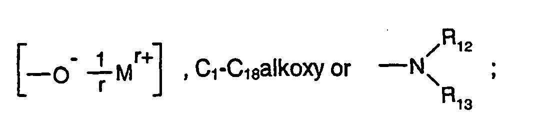
**R₃₆** is oxygen, 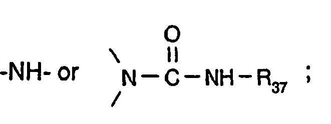
**R₃₇** is C₁-C₁₈alkyl or phenyl;
**R₅₀** is -OR₅₁, -O-C(O)-R₅₁, -SR₅₂, -S(O)R₅₂, -S(O)₂R₅₂, -N(H)R₅₃, pyrrolino, pyrrolidino, 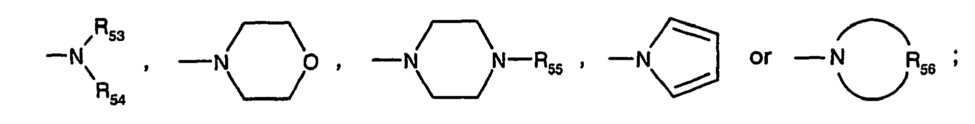
**R₅₀'** is independently defined as for R₅₀;
**R₅₁** is C₁-C₂₅alkyl, unsubstituted or substituted by -OH, -OR₈, -NH(R₈) or -N(R₈)₂; C₂-C₂₅alkyl interrupted by oxygen or by sulfur; C₇-C₉phenylalkyl, unsubstituted or C₁-C₄alkyl-substituted C₅-C₈cycloalkyl; unsubstituted or C₁-C₄alkyl-substituted phenyl;
**R₅₂** is C₁-C₂₅alkyl, unsubstituted or substituted by -OH, -OR₈, -NH(R₈) or -N(R₈)₂; C₂-C₂₅alkyl interrupted by oxygen or by sulfur; C₇-C₉phenylalkyl, unsubstituted or C₁-C₄alkyl-substituted C₅-C₈cycloalkyl; unsubstituted or C₁-C₄alkyl-substituted phenyl;
**R₅₃ and R₅₄** are each independently of the other hydrogen, hydroxy; C₁-C₂₅alkyl, unsubstituted or substituted by -OH, -OR₈, -NH(R₈) or -N(R₈)₂; C₂-C₂₅alkyl interrupted by oxygen or by sulfur; C₇-C₉phenylalkyl, unsubstituted or C₁-C₄alkyl-substituted C₅-C₈cycloalkyl; or a dendrimeric, oligomeric or polymeric C₄-C₁₀₀hydrocarbon radical;
**R₅₅** is C₁-C₂₅alkyl; C₂-C₂₅alkyl interrupted by oxygen or by sulfur; C₇-C₉phenylalkyl, unsubstituted or C₁-C₄alkyl-substituted C₅-C₈cycloalkyl; unsubstituted or C₁-C₄alkyl-substituted phenyl;
**R₅₆** is unsubstituted or C₁-C₄alkyl-substituted C₂-C₁₂alkylene;
**M** is an r-valent metal cation;
**p** is 0, 1 or 2;
**q** is 1, 2, 3, 4, 5 or 6;
**r** is 1, 2 or 3; and
**s** is 0, 1 or 2.

Of interest is a composition wherein component (b) is a compound selected from the group consisting of the Mannich base compounds of formulae (Ia), (Ib), (IIa), (IIb) and (IIc).

Also of interest is a composition wherein component (a) is a polyester or a polyamide, and component (b) is an effective stabilizing amount of at least one compound selected from the group consisting of the Mannich base compounds of formula (Ia) and formula (lb) 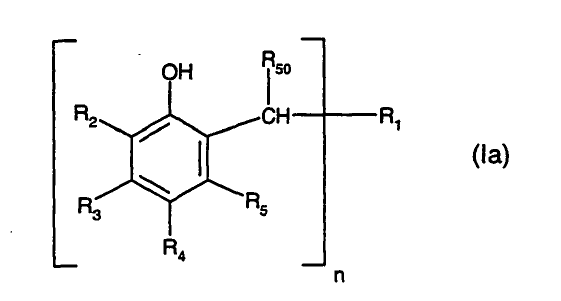 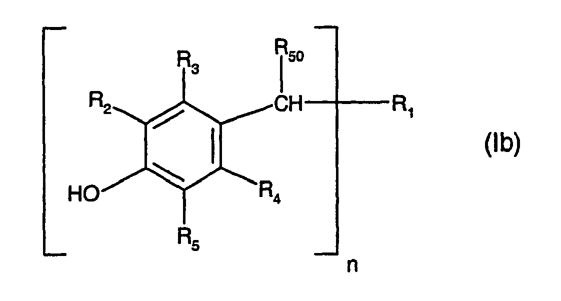 wherein
n is 1 or 2, and
when n is 1,
**R₁** is hydrogen, C₁-C₂₅alkyl, C₇-C₉phenylalkyl, unsubstituted or C₁-C₄alkyl-substituted C₅-C₈-cycloalkyl; naphthyl, phenanthryl, anthryl, 5,6,7,8-tetrahydro-2-naphthyl, thienyl, benzo[b]thienyl, naphtho[2,3-b]thienyl, thianthrenyl, furyl, benzofuryl, isobenzofuryl, dibenzofuryl, xanthenyl, phenoxathiinyl, pyrrolyl, imidazolyl, pyrazolyl, pyrazinyl, pyrimidinyl, pyridazinyl, indolizinyl, isoindolyl, indolyl, indazolyl, purinyl, quinolizinyl, isoquinolyl, quinolyl, phthalazinyl, naphthyridinyl, quinoxalinyl, quinazolinyl, cinnolinyl, pteridinyl, carbazolyl, β-carbolinyl, phenanthridinyl, acridinyl, perimidinyl, phenanthrolinyl, phenazinyl, isothiazolyl, phenothiazinyl, isoxazolyl, furazanyl, biphenyl, terphenyl, fluorenyl or phenoxazinyl, each of which is unsubstituted or substituted by fluorine, hydroxy, C₁-C₁₈alkyl, C₁-C₁₈alkoxy, C₁-C₁₈alkylthio, di(C₁-C₄alkyl)-amino, phenyl, benzyl, benzoyl or by benzoyloxy or R₁ is a radical of formula (II) or (III) 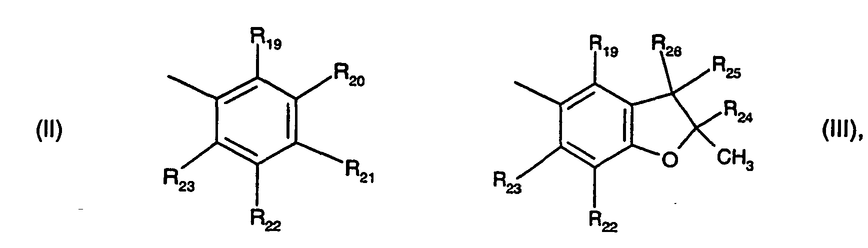 and
when n is 2,
**R₁** is C₁-C₁₈alkylene; C₂-C₁₈alkylene interrupted by oxygen, sulfur or by >NR₁₄; C₂-C₂₀alkylidene, C₇-C₂₀phenylalkylidene, C₅-C₈cycloalkylene, C₇-C₈bicycloalkylene, phenylene or naphthylene each unsubstituted or substituted by C₁-C₄alkyl or by fluorine; or is -R₆-X-R₇-,
**R₂, R₃, R₄ and R₅** are each independently hydrogen, fluorine, hydroxy, C₁-C₂₅alkyl, C₇-C₉phenylalkyl, unsubstituted or C₁-C₄alkyl-substituted phenyl, unsubstituted or C₁-C₄alkyl-substituted C₅-C₈cycloalkyl; C₁-C₁₈alkoxy, C₁-C₁₈alkylthio, C₁-C₄alkylamino, di(C₁-C₄alkyl)amino, C₁-C₂₅alkanoyloxy, C₁-C₂₅alkanoylamino; C₃-C₂₅alkanoyloxy interrupted by oxygen, sulfur or by >NR₈; C₆-C₉cycloalkylcarbonyloxy, benzoyloxy or C₁-C₁₂alkyl-substituted benzoyloxy, or the radicals R₂ and R₃ or the radicals R₄ and R₅, together with the carbon atoms to which they are bonded, form a benzo ring, or in the compounds of formula (Ia) the radicals R₃ and R₄, together with the carbon atoms to which they are bonded, form a benzo ring; or in the compounds of formula (la), R₄ is additionally -(CH₂)ₚ-COR₉ or -(CH₂)_{q}OH or also in the compounds of formula (la), when R₃ and R₅ are hydrogen, R₄ is may additionally be a radical of formula (IV) 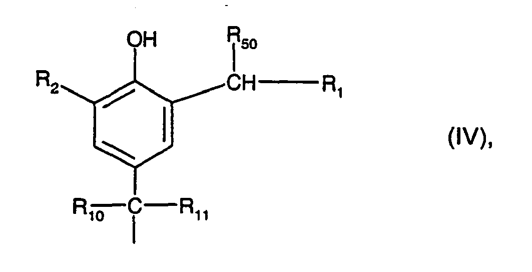 wherein R₁ is as defined for the where n = 1,
**R₆ and R₇** are each independently of the other phenylene or naphthylene each unsubstituted or substituted by C₁-C₄alkyl,
**R₈** is C₁-C₈alkyl,
**R₉** is hydroxy, 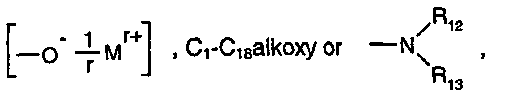
**R₁₀ and R₁₁** are each independently of the other hydrogen, CF₃, C₁-C₁₂alkyl or phenyl, or R₁₀ and R₁₁, together with the carbon atom to which they are bonded, form a C₅-C₈cycloalkylidene ring unsubstituted or substituted by from 1 to 3 C₁-C₄alkyl groups;
**R₁₂ and R₁₃** are each independently of the other hydrogen or C₁-C₁₈alkyl,
**R₁₄** is hydrogen or C₁-C₁₈alkyl,
**R₁₉, R₂₀, R₂₁, R₂₂ and R₂₃** are each independently hydrogen, cyano, perfluoroalkyl of 1 to 12 carbon atoms, fluoro, chloro, hydroxy, C₁-C₂₅alkyl; C₂-C₂₅alkyl interrupted by oxygen, sulfur or by >NR₈; C₁-C₂₅alkoxy; C₂-C₂₅alkoxy interrupted by oxygen, sulfur or by >NR₈; C₁-C₂₅alkylthio, C₇-C₉phenylalkyl, C₇-C₉phenylalkoxy, unsubstituted or C₁-C₄alkyl-substituted phenyl; unsubstituted or C₁-C₄alkyl-substituted phenoxy; unsubstituted or C₁-C₄alkyl-substituted C₅-C₈cycloalkyl; unsubstituted or C₁-C₄alkyl-substituted C₅-C₈cycloalkoxy; di(C₁-C₄alkyl)amino, C₁-C₂₅alkanoyl; C₃-C₂₅alkanoyl interrupted by oxygen, sulfur or by >NR₈; C₁-C₂₅alkanoylcarbonyl; C₃-C₂₅alkanoylcarbonyl interrupted by oxygen, sulfur or by >NR₈; C₁-C₂₅alkylaminocarbonyl; C₃-C₂₅alkylaminocarbonyl interrupted by oxygen, sulfur or by >NR₈; di-C₁-C₂₅alkylaminocarbonyl; di-C₃-C₂₅alkylaminocarbonyl interrupted by oxygen, sulfur or by >NR₈; C₁-C₂₅alkanoyloxy; C₃-C₂₅alkanoyloxy interrupted by oxygen, sulfur or by >NR₈; C₁-C₂₅alkanoylamino, C₆-C₉cycloalkylcarbonyl, C₆-C₉cycloalkylcarbonyloxy, benzoyl or C₁-C₁₂alkylsubstituted benzoyl; benzoyloxy or C₁-C₁₂alkyl-substituted benzoyloxy; 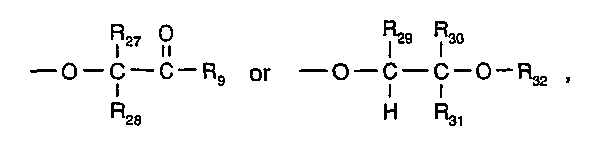
**R₂₄** is hydrogen, C₁-C₄alkyl, or unsubstituted or C₁-C₄alkyl-substituted phenyl,
**R₂₅** and R₂₆ are hydrogen, C₁-C₄alkyl or phenyl, with the proviso that at least one of the radicals R₂₅ and R₂₆ is hydrogen,
**R₂₇ and R₂₈** are each independently of the other hydrogen, C₁-C₄alkyl or phenyl,
**R₂₉** is hydrogen or C₁-C₄alkyl,
**R₃₀** is hydrogen, unsubstituted or C₁-C₄alkyl-substituted phenyl; C₁-C₂₅alkyl; C₂-C₂₅alkyl interrupted by oxygen, sulfur or by >NR₈; C₇-C₉phenylalkyl unsubstituted or substituted on the phenyl radical by from 1 to 3 C₁-C₄alkyl groups; or C₇-C₂₅phenylalkyl interrupted by oxygen, sulfur or by >NR₈ and unsubstituted or substituted on the phenyl radical by from 1 to 3 C₁-C₄alkyl groups,
**R₃₁** is hydrogen or C₁-C₄alkyl,
**R₃₂** is hydrogen, C₁-C₂₅alkanoyl; C₃-C₂₅alkanoyl interrupted by oxygen, sulfur or by >NR₈; C₂-C₂₅alkanoyl substituted by a di(C₁-C₆alkyl) phosphonate group; C₆-C₉cycloalkylcarbonyl, thenoyl, furoyl, benzoyl or C₁-C₁₂alkyl-substituted benzoyl; 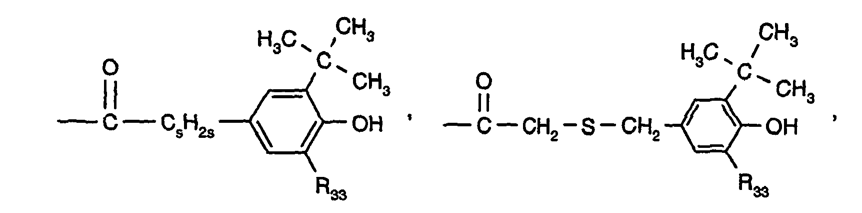 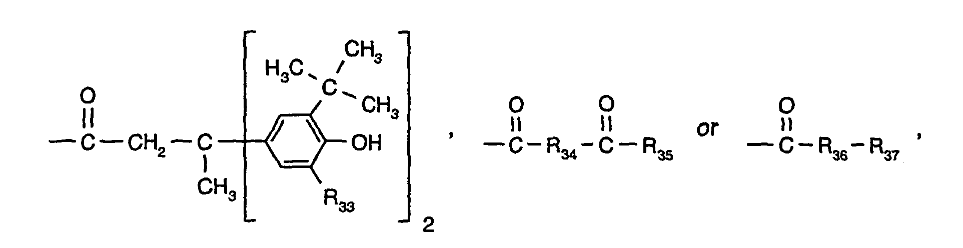
**R₃₃** is hydrogen or C₁-C₈alkyl,
**R₃₄** is a direct bond, C₁-C₁₈alkylene; C₂-C₁₈alkylene interrupted by oxygen, sulfur or by >NR₈; C₂-C₂₀alkylidene, C₇-C₂₀phenylalkylidene, C₅-C₈cycloalkylene, C₇-C₈bicycloalkylene, unsubstituted or C₁-C₄alkyl-substituted phenylene, 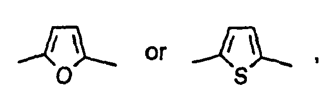
**R₃₅** is hydroxy, 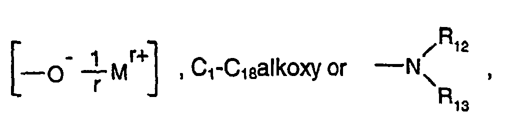
**R₃₆** is oxygen, 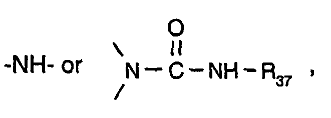
**R₃₇** is C₁-C₁₈alkyl or phenyl,
**R₅₀** is 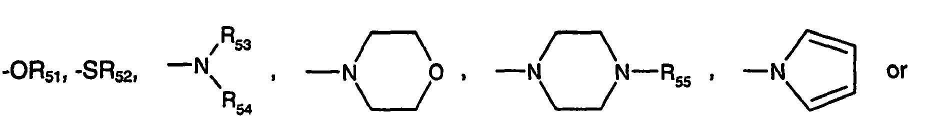 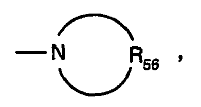
**R₅₁** is C₁-C₂₅alkyl; C₂-C₂₅alkyl interrupted by oxygen or by sulfur; C₇-C₉phenylalkyl, unsubstituted or C₁-C₄alkyl-substituted C₅-C₈cycloalkyl; unsubstituted or C₁-C₄alkyl-substituted phenyl,
**R₅₂** is C₁-C₂₅alkyl; C₂-C₂₅alkyl interrupted by oxygen or by sulfur; C₇-C₉phenylalkyl, unsubstituted or C₁-C₄alkyl-substituted C₅-C₈cycloalkyl; unsubstituted or C₁-C₄alkyl-substituted phenyl,
**R₅₃ and R₅₄** are each independently of the other hydrogen, C₁-C₂₅alkyl; C₂-C₂₅alkyl interrupted by oxygen or by sulfur; C₇-C₉phenylalkyl, unsubstituted or C₁-C₄alkyl-substituted C₅-C₈-cycloalkyl; or a dendrimeric, oligomeric or polymeric C₄-C₁₀₀hydrocarbon radical,
**R₅₅** is C₁-C₂₅alkyl; C₂-C₂₅alkyl interrupted by oxygen or by sulfur; C₇-C₉phenylalkyl, unsubstituted or C₁-C₄alkyl-substituted C₅-C₈cycloalkyl; unsubstituted or C₁-C₄alkyl-substituted phenyl; or a radical of formula (V) 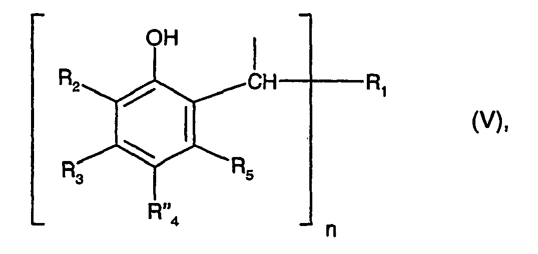 wherein R₁, R₂, R₃, R₄, R₅ and n are as defined previously,
**R₅₆** is unsubstituted or C₁-C₄alkyl-substituted C₂-C₁₂alkylene,
**M** is an r-valent metal cation,
**X** is a direct bond, oxygen, sulfur or -NR₁₄-,
**p** is 0, 1 or 2,
**q** is 1, 2, 3, 4, 5 or 6,
**r** is 1, 2 or 3, and
**S** is 0, 1 or 2.

Of special interest is a composition in which in the compounds of formulae (Ia), (Ib), (IIa), (IIb), (IIc), (IIIa), (IIIb), (IIIc), (IVa), (IVb) and (IVc)
R₁ is hydrogen, C₁-C₂₅alkyl or C₁-C₁₈alkylene;
Rₐ is C₁-C₁₈alkylene, phenylene or naphthylene each unsubstituted or substituted by C₁-C₄alkyl or by fluorine; or is -R₆-Y-R₇-;
R_{b} is -NR₅₃, C₁-C₂₅alkylenedimino or C₅-C₈cycloalkylenediimino; and
X is C₁-C₁₈alkylene, -O-, -NR₁₀- or -S-.

For example in the present compounds of formulae (Ia)-(IVc), R₂, R₃, R₄ and R₅ are each independently hydrogen, fluorine, hydroxy or C₁-C₂₅alkyl.

For example, in the present compounds of formulae (Ia)-(IVc), R₂, R₃, R₄ and R₅ are each hydrogen or tert-butyl.

For example, in the compositions of the present invention, the compounds of formulae (Ia)-(IVc) are selected from the group consisting of
2,4-di-tert-butyl-6-(phenyl-piperidin-1-yl-methyl)-phenol,
2,4-di-tert-butyl-6-(dimethylamino-phenyl-methyl)-phenol,
2,6-bis-dimethylaminomethyl-4-(1,1,3,3-tetramethyl-butyl)-phenol,
2,4-di-tert-butyl-6-piperidin-1-ylmethyf-phenol,
2,6-di-tert-butyl-4-(phenyl-piperidin-1-yl-methyl)-phenol,
2,6-di-tert-butyl-4-piperidin-1-yl-methyl-phenol,
3-[3-tert-Butyl-4-hydroxy-5-(phenyl-piperidin-1-yl-methyl)-phenyl]-propionic acid methyl ester,
2,4-di-tert-butyl-6-dimethylaminomethyl-phenol,
2,4-di-tert-butyl-6-N-morpholino-4-ylmethyl-phenol,
2,4-di-tert-butyl-6-di-n-butylaminomethyl-phenol,
2,4-di-tert-butyl-6-cyclohexylaminomethyl-phenol,
2,6-bis-dimethylaminomethyl-4-(1,1,3,3-tetramethyl-butyl)-phenol,
2,4,6-tris-dimethylaminomethyl-phenol,
2,4-bis-dimethylaminomethyl-6-methyl-phenol,
2,6,2',6'-tetrakis(dimethylaminomethyl)-4,4'-isopropylidene-diphenol,
1-(N-morpholino-4-yl-methyl)-2-naphthol,
n-butyl-bis-(2-hydroxy-1-naphthylmethyl)-amine,
3,5-di-tert-butyl-2-hydroxy-benzyl-acetate,
2,4-di-tert-butyl-6-methoxymethyl-phenol and
2,4-bis-(n-octadecylthiomethyl)-6-methyl-phenol.

Mannich bases are well known, and are for example the reaction product of an amine, an aldehyde or aldehyde equivalent, and a nucleophilic carbon. Reviews on their syntheses disclosing useful reaction components and possibilities for their preparation are described in the literature, for example by M. Tramontini in Synthesis (1973), pages 703 - 775, M. Tramontini & L. Angiolini in Tetrahedron 46, No. 6 (1990) pages 1791-1837 and M. Arend, B. Westermann & N. Risch in Angew. Chem. Int. Ed. 37 (1998) pages 1044 - 1070, the contents of which are incorporated herewith by reference.

Mannich bases may be classified as amino-alkylation products of alkyl- and aryl-ketones, phenols, indols, nitro- and cyano-componds and the like. Many Mannich bases are easily prepared from common raw materials in good yields, and further show good thermal and chemical stability. Specific Mannich bases may be selected according to economical and ecological criteria.

Mannich bases suitable in the present invention are taught for example in WO-A-99/67232 the relevant parts of which are incorporated herein by reference.

Alkanoyl having up to 25 carbon atoms is a branched or unbranched radical, for example formyl, acetyl, propionyl, butanoyl, pentanoyl, hexanoyl, heptanoyl, octanoyl, nonanoyl, decanoyl, undecanoyl, dodecanoyl, tridecanoyl, tetradecanoyl, pentadecanoyl, hexadecanoyl, heptadecanoyl, octadecanoyl, icosanoyl or docosanoyl. Alkanoyl has for instance from 2 to 18, for example from 2 to 12, e.g. from 2 to 6, carbon atoms. For example acetyl.

C₂-C₂₅AIkanoyl substituted by a di(C₁-C₆alkyl) phosphonate group is, for example, (CH₃CH₂O)₂POCH₂CO-, (CH₃O)₂POCH₂CO-, (CH₃CH₂CH₂CH₂O)₂POCH₂CO-, (CH₃CH₂O)₂POCH₂CH₂CO-, (CH₃O)₂POCH₂CH₂CO-, (CH₂CH₂CH₂CH₂O)₂POCH₂CH₂CO-, (CH₃CH₂O)₂PO(CH₂)₄CO-, (CH₃CH₂O)₂PO(CH₂)₈CO- or (CH₃CH₂O)₂PO(CH₂)₁₇CO-.

Alkanoyloxy having up to 25 carbon atoms is a branched or unbranched radical, for example formyloxy, acetoxy, propionyloxy, butanoyloxy, pentanoyloxy, hexanoyloxy, heptanoyloxy, octanoyloxy, nonanoyloxy, decanoyloxy, undecanoyloxy, dodecanoyloxy, tridecanoyloxy, tetradecanoyloxy, pentadecanoyloxy, hexadecanoyloxy, heptadecanoyloxy, octadecanoyloxy, icosanoyloxy or docosanoyloxy. For example alkanoyloxy having from 2 to 18, for example from 2 to 12, e.g. from 2 to 6, carbon atoms. For example acetoxy.

C₃-C₂₅Alkenoyloxy interrupted by oxygen, sulfur or by >NR₈ is, for example, CH₃OCH₂CH₂CH=CHCOO- or CH₃OCH₂CH₂OCH=CHCOO-.

C₃-C₂₅Alkanoyl interrupted by oxygen, sulfur or by >NR₈ is, for example, CH₃-O-CH₂CO-, CH₃-S-CH₂CO-, CH₃-N(CH₃)-CH₂CO-, CH₃-O-CH₂CH₂-O-CH₂CO-, CH₃-(O-CH₂CH₂-)₂O-CH₂CO-, CH₃-(O-CH₂CH₂-)₃O-CH₂CO- or CH₃-(O-CH₂CH₂-)₄O-CH₂CO-.

C₃-C₂₅Alkanoyloxy interrupted by oxygen, sulfur or by >NR₈ is, for example, CH₃-O-CH₂COO-, CH₃-S-CH₂COO-, CH₃-N(CH₃)-CH₂COO-, CH₃-O-CH₂CH₂-O-CH₂COO-, CH₃-(O-CH₂CH₂-)₂O-CH₂COO-, CH₃-(O-CH₂CH₂-)₃O-CH₂COO- or CH₃-(O-CH₂CH₂-)₄O-CH₂COO-.

C₆-C₉Cycloalkylcarbonyl is, for example, cyclopentylcarbonyl, cyclohexylcarbonyl, cycloheptylcarbonyl or cyclooctylcarbonyl. For instance cyclohexylcarbonyl.

C₆-C₉Cycloalkylcarbonyloxy is, for example, cyclopentylcarbonyloxy, cyclohexylcarbonyloxy, cycloheptylcarbonyloxy or cyclooctylcarbonyloxy. For example cyclohexylcarbonyloxy.

C₁-C₁₂Alkyl-substituted benzoyl, which carries for example from 1 to 3, for instance 1 or 2, alkyl groups, is, for example, o-, m- or p-methylbenzoyl, 2,3-dimethylbenzoyl, 2,4-dimethylbenzoyl, 2,5-dimethylbenzoyl, 2,6-dimethylbenzoyl, 3,4-dimethylbenzoyl, 3,5-dimethylbenzoyl, 2-methyl-6-ethylbenzoyl, 4-tert-butylbenzoyl, 2-ethylbenzoyl, 2,4,6-trimethylbenzoyl, 2,6-dimethyl-4-tert-butylbenzoyl or 3,5-di-tert-butylbenzoyl. Examples of substituents are C₁-C₈alkyl, for instance C₁-C₄alkyl.

C₁-C₁₂Alkyl-substituted benzoyloxy, which carries for example from 1 to 3, for instance 1 or 2, alkyl groups, is, for example, o-, m- or p-methylbenzoyloxy, 2,3-dimethylbenzoyloxy, 2,4-dimethylbenzoyloxy, 2,5-dimethylbenzoyloxy, 2,6-dimethylbenzoyloxy, 3,4-dimethylbenzoyloxy, 3,5-dimethylbenzoyloxy, 2-methyl-6-ethylbenzoyloxy, 4-tert-butylbenzoyloxy, 2-ethylbenzoyloxy, 2,4,6-trimethylbenzoyloxy, 2,6-dimethyl-4-tert-butylbenzoyloxy or 3,5-di-tert-butylbenzoyloxy. Substituents are for example C₁-C₈alkyl, for instance C₁-C₄alkyl.

Alkyl having up to 25 carbon atoms is a branched or unbranched radical, for example methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, icosyl or docosyl. One of the definitions for R₂ and R₄ is, for example, C₁-C₁₈alkyl. For instance R₄ is C₁-C₄alkyl.

Alkenyl is an unsaturated version of alkyl, for example isopropenyl, propenyl, hexenyl, heptenyl, and the like.

C₂₇C₂₅Alkyl interrupted by oxygen, sulfur or by >NR₈ is, for example, CH₃-O-CH₂-, CH₃-S-CH₂-, CH₃-N(CH₃)-CH₂-, CH₃-O-CH₂CH₂-O-CH₂-, CH₃-(O-CH₂CH₂-)₂O-CH₂-, CH₃-(O-CH₂CH₂-)₃O-CH₂- or CH₃-(O-CH₂CH₂-)₄O-CH₂-,

C₇-C₉Phenylalkyl is, for example, benzyl, α-methylbenzyl, α,α-dimethylbenzyl or 2-phenylethyl. For example benzyl and α,α-dimethylbenzyl.

C₇-C₉Phenylalkyl unsubstituted or substituted on the phenyl radical by from 1 to 3 C₁-C₄alkyl groups is, for example, benzyl, α-methylbenzyl, α,α-dimethylbenzyl, 2-phenylethyl, 2-methylbenzyl, 3-methylbenzyl, 4-methylbenzyl, 2,4-dimethylbenzyl, 2,6-dimethylbenzyl or 4-tert-butylbenzyl. For example benzyl.

C₇-C₂₅Phenylalkyl interrupted by oxygen, sulfur or by >NR₈ and unsubstituted or substituted on the phenyl radical by from 1 to 3 C₁-C₄alkyl groups is a branched or unbranched radical, for example phenoxymethyl, 2-methyl-phenoxymethyl, 3-methyl-phenoxymethyl, 4-methyl-phenoxymethyl, 2,4-dimethyl-phenoxymethyl, 2,3-dimethyl-phenoxymethyl, phenylthiomethyl, N-methyl-N-phenyl-aminomethyl, N-ethyl-N-phenyl-aminomethyl, 4-tert-butyl-phenoxymethyl, 4-tert-butyl-phenoxyethoxy-methyl, 2,4-di-tert-butyl-phenoxymethyl, 2,4-di-tert-butyl-phenoxyethoxymethyl, phenoxyethoxyethoxyethoxymethyl, benzyloxymethyl, benzyloxyethoxymethyl, N-benzyl-N-ethyl-aminomethyl or N-benzyl-N-isopropyl-aminomethyl.

C₇-C₉Phenylalkoxy is, for example, benzyloxy, α-methylbenzyloxy, α,α-dimethylbenzyloxy or 2-phenylethoxy. For example benzyloxy.

C₁-C₄Alkyl-substituted phenyl, which contains for example 1 to 3, for instance 1 or 2, alkyl groups, is, for example, o-, m- or p-methylphenyl, 2,3-dimethylphenyl, 2,4-dimethylphenyl, 2,5-dimethylphenyl, 2,6-dimethylphenyl, 3,4-dimethylphenyl, 3,5-dimethylphenyl, 2-methyl-6-ethylphenyl, 4-tert-butylphenyl, 2-ethylphenyl or 2,6-diethylphenyl.

C₁-C₄Alkyl-substituted phenoxy, which contains for example from 1 to 3, for instance 1 or 2, alkyl groups, is, for example, o-, m- or p-methylphenoxy, 2,3-dimethylphenoxy, 2,4-dimethylphenoxy, 2,5-dimethylphenoxy, 2,6-dimethylphenoxy, 3,4-dimethylphenoxy, 3,5-dimethylphenoxy, 2-methyl-6-ethylphenoxy, 4-tert-butylphenoxy, 2-ethylphenoxy or 2,6-diethylphenoxy.

Unsubstituted or C₁-C₄alkyl-substituted C₅-C₈cycloalkyl is, for example, cyclopentyl, methylcyclopentyl, dimethylcyclopentyl, cyclohexyl, methylcyclohexyl, dimethylcyclohexyl, trimethylcyclohexyl, tert-butylcyclohexyl, cycloheptyl or cyclooctyl. For example cyclohexyl and tert-butylcyclohexyl.

Cycloalkylenediimino is for example piperazinyl, that is 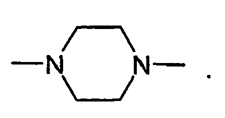 Alkylenediimino, triimino and tetraimino are for example hexamethylenediimio, that is -NH(CH₂)₆NH-, and the like.

Unsubstituted or C₁-C₄alkyl-substituted C₅-C₈cycloalkoxy is, for example, cyclopentyloxy, methylcyclopentyloxy, dimethylcyclopentyloxy, cyclohexyloxy, methylcyclohexyloxy, dimethylcyclohexyloxy, trimethylcyclohexyloxy, tert-butylcyclohexyloxy, cycloheptyloxy or cyclooctyloxy. For example cyclohexyloxy and tert-butylcyclohexyloxy.

Alkoxy having up to 25 carbon atoms is a branched or unbranched radical, for example methoxy, ethoxy, propoxy, isopropoxy, n-butoxy, isobutoxy, pentyloxy, isopentyloxy, hexyloxy, heptyloxy, octyloxy, decyloxy, tetradecyloxy, hexadecyloxy or octadecyloxy. For example alkoxy having from 1 to 12, for instance from 1 to 8, e.g. from 1 to 6, carbon atoms.

C₂-C₂₅Alkoxy interrupted by oxygen, sulfur or by >NR₈ is, for example, CH₃-O-CH₂CH₂O-, CH₃-S-CH₂CH₂O-, CH₃-N(CH₃)-CH₂CH₂O-, CH₃-O-CH₂CH₂-O-CH₂CH₂O-, CH₃-(O-CH₂CH₂-)₂O-CH₂CH₂O-, CH₃-(O-CH₂CH₂-)₃O-CH₂CH₂O- or CH₃-(O-CH₂CH₂-)₄O-CH₂CH₂O-.

Alkylthio having up to 25 carbon atoms is a branched or unbranched radical, for example methylthio, ethylthio, propylthio, isopropylthio, n-butylthio, isobutylthio, pentylthio, isopentylthio, hexylthio, heptylthio, octylthio, decylthio, tetradecylthio, hexadecylthio or octadecylthio. For example alkylthio having from 1 to 12, for example from 1 to 8, e.g. from 1 to 6, carbon atoms.

Alkylamino having up to 4 carbon atoms is a branched or unbranched radical, for example methylamino, ethylamino, propylamino, isopropylamino, n-butylamino, isobutylamino or tert-butylamino.

Di(C₁-C₄alkyl)amino means also that the two radicals are each independently of the other branched or unbranched, for example, dimethylamino, methylethylamino, diethylamino, methyl-n-propylamino, methylisopropylamino, methyl-n-butylamino, methylisobutylamino, ethylisopropylamino, ethyl-n-butylamino, ethylisobutylamino, ethyl-tert-butylamino, diethylamino, diisopropylamino, isopropyl-n-butylamino, isopropylisobutylamino, di-n-butylamino or di-isobutylamino.

Alkanoylamino having up to 25 carbon atoms is a branched or unbranched radical, for example formylamino, acetylamino, propionylamino, butanoylamino, pentanoylamino, hexanoylamino, heptanoylamino, octanoylamino, nonanoylamino, decanoylamino, undecanoylamino, dodecanoylamino, tridecanoylamino, tetradecanoylamino, pentadecanoylamino, hexadecanoylamino, heptadecanoylamino, octadecanoylamino, icosanoylamino or docosanoylamino. For example alkanoylamino having from 2 to 18, for instance from 2 to 12, e.g. from 2 to 6, carbon atoms.

C₁-C₁₈Alkylene is a branched or unbranched radical, for example methylene, ethylene, propylene, trimethylene, tetramethylene, pentamethylene, hexamethylene, heptamethylene, octamethylene, decamethylene, dodecamethylene or octadecamethylene. For example C₁-C₁₂alkylene, for instance C₁-C₈alkylene. R₅₆ is for example C₂-C₈alkylene, for instance C₄-C₈alkylene, for example tetramethylene or pentamethylene.

C₂-C₁₈Alkylene interrupted by oxygen, sulfur or by >NR₈ is, for example, -CH₂-O-CH₂-, -CH₂-S-CH₂-, -CH₂-N(CH₃)-CH₂-, -CH₂-O-CH₂CH₂-O-CH₂-, -CH₂-(O-CH₂CH₂-)₂O-CH₂-, -CH₂-(O-CH₂CH₂-)₃O-CH₂-, -CH₂-(O-CH₂CH₂-)₄O-CH₂- or -CH₂CH₂-S-CH₂CH₂-.

Alkylidene having from 2 to 20 carbon atoms is, for example, ethylidene, propylidene, butylidene, pentylidene, 4-methylpentylidene, heptylidene, nonylidene, tridecylidene, nonadecylidene, 1-methylethylidene, 1-ethylpropylidene or 1-ethylpentylidene. For example C₂-C₈alkylidene.

Phenylalkylidene having from 7 to 20 carbon atoms is, for example, benzylidene, 2-phenylethylidene or 1-phenyl-2-hexylidene. For example C₇-C₉phenylalkylidene.

C₅-C₈Cycloalkylene is a saturated hydrocarbon group having two free valences and at least one ring unit and is, for example, cyclopentylene, cyclohexylene, cycloheptylene or cyclooctylene. For example cyclohexylene.

C₇-C₈Bicycloalkylene is, for example, bicycloheptylene or bicyclooctylene.

Phenylene or naphthylene each unsubstituted or substituted by C₁-C₄alkyl is, for example, 1,2-, 1,3- or 1,4-phenylene or 1,2-, 1,3-, 1,4-, 1,6-, 1,7-, 2,6- or 2,7-naphthylene. For instance 1,4-phenylene.

A C₅-C₈cycloalkylidene ring substituted by C₁-C₄alkyl, which contains for example from 1 to 3, for instance 1 or 2, branched or unbranched alkyl group radicals, is, for example, cyclopentylidene, methylcyclopentylidene, dimethylcyclopentylidene, cyclohexylidene, methylcyclohexylidene, dimethylcyclohexylidene, trimethylcyclohexylidene, tert-butylcyclohexylidene, cycloheptylidene or cyclooctylidene. For example cyclohexylidene and tert-butylcyclohexylidene.

A mono-, di- or tri-valent metal cation is for example an alkali metal cation, alkaline earth metal cation or aluminium cation, for example Na⁺, K⁺, Mg⁺⁺, Ca⁺⁺ or Al⁺⁺⁺.

Dendrimeric, oligomeric or polymeric C₄-C₁₀₀hydrocarbon radicals are, for example, those such as are disclosed by R. Mülhaupt et al. in Angew. Chem., Int. Ed. 32 (9),1306 (1993).

Alkanoylcarbonyl groups are ester groups, for example -COOalkyl. Alkylaminocarbonyl and di-alkylaminocarbonyl groups are amide groups, for example -CONHalkyl and -CON(di-alkyl), respectively. Perfluoroalkyl of 1 to 12 carbon atoms is for example -CF₃.

The polyester or polyamide of component (a) is for example 95 to 99.99 % by weight and the stabilizer or stabilizers of component (b), in total, are 5 to 0.01 % by weight, based on the total weight of (a) and (b).

Component (a) is preferably 98 to 99.99 % by weight and component (b) is preferably 2 to 0.01 % by weight of the total of (a) and (b); for example component (a) is 99 to 99.97 % by weight and component (b) is 1 to 0.01 % by weight, based on the total weight of (a) and (b).

For example, component (b) is from 0.75 to 0.01 %, from 0.50 to 0.01 %, from 0.25 to 0.01 % or from 0.125 to 0.01 % by weight, based on the total weight of (a) and (b).

The additives of component (b) may be added to the polyester or polyamide of component (a) by known techniques. For example, the additives of component (b) may be added neat or as a solution or dispersion in a suitable solid or liquid carrier, with or without subsequent evaporation of the solvent. Component (b) may also be added to the polyester or polyamide to be stabilized in the form of a masterbatch or concentrate which contains component (b) in a concentration of, for example, 2.5 % to 95 % by weight. The masterbatch may contain further additives such as stabilizers, property modifiers, pigments, dyestuffs and the like.

It is contemplated that one or more than one (a combination of) Mannich base compounds of the present invention may be employed in the compositions.

The polyester of component (a) has dicarboxylic acid repeat units selected from the group consisting of aromatic dicarboxylic acids having 8 to 14 carbon atoms, aliphatic dicarboxylic acids having 4 to 12 carbon atoms, cycloaliphatic dicarboxylic acids having 8 to 12 carbon atoms, and mixtures thereof.

For example such diacids are terephthalic acid, isophthalic acid, o-phthalic acid, naphthalene dicarboxylic acid, cyclohexane dicarboxylic acid, cyclohexanediacetic acid, diphenyl-4,4'-dicarboxylic acid, succinic acid, glutaric acid, adipic acid, sebacic acid and mixtures thereof.

Specific examples are terephthalic acid and 2,6-naphthalene dicarboxylic acid.

The diol or glycol portion of the polyester of component (a) are derived from the generic formula HO-R-OH where R is an aliphatic, cycloaliphatic or aromatic moiety of 2 to 18 carbon atoms.

Preferably such diols or glycols are ethylene glycol, diethylene glycol, triethylene glycol, propane-1,3-diol, propane-1,2-diol, butane-1,4-diol, pentane-1,5-diol, hexane-1,6-diol, 1,4-cyclohexanedimethanol, 3-methylpentane-2,4-diol, 2-methylpentane-1,4-diol, 2,2-diethylpropane-1,3-diol, 1,4-di-(hydroxyethoxy)benzene, 2,2-bis(4-hydroxycyclohexyl)-propane, 2,4-dihydroxy-1,1,3,3-tetramethylcyclobutane, 2,2-bis-(3-hydroxyethoxyphenyl)propane, 2,2-bis-(4-hydroxypropoxyphenyl)ethane and mixtures thereof.

Most preferably, the diol is ethylene glycol and 1,4-cyclohexanedimethanol.

The polyester of component (a) is preferably poly(ethylene terephthalate) PET or poly(ethylene 2,6-naphthalene-2,6-dicarboxylate); most preferably poly(ethylene terephthalate).

It is also contemplated that the polyester of component (a) can also be a blend of polyesters or copolyesters including components mentioned above.

The polyamides of the present invention are for instance those prepared by the polymerization of a monoamino-monocarboxylic acid or a lactam thereof having at least 2 carbon atoms between the amino and carboxylic acid group, of substantially equimolar proportions of a diamine which contains at least 2 carbon atoms between the amino groups and a dicarboxylic acid, or of a monoaminocarboxylic acid or a lactam thereof as defined above together with substantially equimolar proportions of a diamine and a dicarboxylic acid. The term "substantially equimolar" proportions includes both strictly equimolar proportions and slight departures therefrom which are involved in conventional techniques for stabilizing the viscosity of the resultant polyamides. The dicarboxylic acid may be used in the form of a functional derivative thereof, for example, an ester or acid chloride.

Examples of the aforementioned monoamino-monocarboxylic acids or lactams thereof which are useful in preparing the polyamides include those compounds containing from 2 to 16 carbon atoms between the amino and carboxylic acid groups, said carbon atoms forming a ring containing the -CO-NH- group in the case of a lactam. As particular examples of aminocarboxylic acids and lactams there may be mentioned ε-aminocaproic acid, butyrolactam, pivalolactam, ε-caprolactam, capryllactam, enantholactam, undecanolactam, dodecanolactam and 3- and 4-aminobenzoic acids.

Diamines suitable for use in the preparation of the polyamides include the straight chain and branched chain alkyl, aryl and alkaryl diamines. Illustrative diamines are trimethylenediamine, tetramethylenediamine, pentamethylenediamine, octamethylenediamine, hexamethylenediamine, trimethylhexamethylenediamine, m-phenylenediamine and m-xylylenediamine.

The dicarboxylic acids may be represented by the formula

HOOC-B-COOH

wherein B is a divalent aliphatic or aromatic group containing at least 2 carbon atoms. Examples of aliphatic acids are sebacic acid, octadecanedioic acid, suberic acid, glutaric acid, pimelic acid and adipic acid.

Both crystalline and amorphous polyamides may be employed, with the crystalline species known for their solvent resistance. Typical examples of the polyamides or nylons, as these are often called, include, for example, polyamide-6 (polycaprolactam), 6,6 (polyhexamethylene adipamide), 11, 12, 4,6, 6,10 and 6,12 as well as polyamides from terephthalic acid and/or isophthalic acid and trimethylhexamethylenediamine; from adipic acid and m-xylylenediamines; from adipic acid, azelaic acid and 2,2-bis(p-aminophenyl)propane or 2,2-bis-(p-aminocyclohexyl)propane and from terephthalic acid and 4,4'-diaminodicyclohexylmethane. Mixtures and/or copolymers of two or more of the foregoing polyamides or prepolymers thereof, respectively, are also within the scope of the present invention. Polyamides of the present invention are for instance polyamide-6; 4; 6; 6,6; 6,4; 6,9; 6,10; 6,12; 11 and 12. For example, the polyamide of the present invention is polyamide-4, polyamide-6, polyamide-6,6, polamide-12 or polyamide-6,4.

The polyamides of the present invention may also include known polyamide stabilizers, for example Irgafos^{®} 168, Irganox^{®} 1098, Nylostab^{®} S-EED (Clariant, CAS# 42774-15-2) and Polyad^{®} 201 (Cul/KI/Zn stearate; 10%/80%/10% ratio w/w). Irganox^{®} 1098 (Ciba) is N,N'-bis-(3,5-di-tert-butyl-4-hydroxyphenylpropionyl)hexamethylenediamide. The polyamide stabilizers are employed at their known levels, for example from 0.01 to 1 % by weight, based on polyamide.

The polyamide compositions of the present invention exhibit improved resistance to yellowing and improved mechanical properties.

It is contemplated that the polymer of component (a) can be virgin polymer or alternatively polymer recyclate. Additionally, it is possible to add the stabilizer or stabilizers described for component (b) as part of a concentrate with a polyester or a polyamide carrier resin.

The novel compositions provided by this invention are useful in the manufacture of containers or packages for comestibles such as beverages and food. Articles molded from these polyesters or polyamides exhibit good thin-wall rigidity, excellent clarity and good barrier properties with respect to moisture and atmospheric gases, particularly carbon dioxide and oxygen.

The plastic containers and films of the present invention are rigid or flexible mono- and/or multi-layered constructions. Typical multi-layer constructions have two or more layer laminates, manufactured either by thermoforming, or extrusion of multi-layer flexible films, or extrusion of bottle "preforms" or "parissons" followed by subsequent blow molding of the preforms into bottles. In a multi-layer system, layers of any suitable plastic may be employed.

Multi-layered containers and films of this invention may for example, be formed from layers of polyesters, polyamides, polyolefins, polyolefin copolymers such as ethylene-vinyl acetate, polystyrene, poly(vinyl chloride), poly(vinylidene chloride), polyamides, cellulosics, polycarbonates, ethylene-vinyl alcohol, poly(vinyl alcohol), styrene-acrylonitrile and ionomers, with the proviso that at least one layer comprises a polyester or polyamide composition of the present invention.

For both films and rigid packaging (bottles), typically the exterior layer, and innermost layer contacting the contents, are composed, for example, of polyesters such as PET or PEN [poly(ethylene naphthalate)], polypropylene, or polyethylene such as HDPE. The middle layers, often called 'barrier' or 'adhesive' or 'tie' layers, are composed of one or more combinations of either PET, PEN, carboxylated polyethylene ionomer such as Surlyn^{®}, vinyl alcohol homopolymers or copolymers such as poly(vinyl alcohol), partially hydrolyzed poly-(vinyl acetate), poly(ethylene-co-vinyl alcohol) such as EVOH or EVAL, nylons or polyamides such as Selar^{®} (DuPont) or polyamides based on metaxylenediamine (sometimes called nylon MXD-6), or polyvinylidene chloride (PVDC), or polyurethanes.

Accordingly, the present invention also pertains to a mono- or multi-layered plastic container or film, stabilized against the formation of aldehydic contaminants during melt processing of said container or film, comprising at least one layer which comprises (a) a polyester or polyamide, and (b) an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc).

Rigid containers may be manufactured by known mechanical processes:
a) Single-stage blow molding such as performed on Nissei, Aoki, or Uniloy machines,
b) Two-stage, injection molding of pre-forms such as on Netstal or Husky machines, and pre-forms converted to bottles by blow molding (e.g., on Sidel, Corpoplast and Krones machines),
c) Integrated blow molding of pre-forms to bottles, such as processes conducted on Sipa, Krupp Kautex, or Husky ISB machines, and
d) Stretch blow molding (SBM) of pre-forms to bottles.

Preferably, the plastic container is a rigid bottle.

The pre-forms may be mono-layer or multi-layer in construction. The bottles may optionally be post-treated to alter the inner wall properties. Bottles may optionally be surface treated on the exterior such as by application of surface coatings. UV absorbers and other known stabilizers may be present in such added surface coatings.

By the use of known heat-setting techniques, certain of the polyesters are, in terms of color, I.V. and heat distortion, stable at temperatures up to about 100°C. Such stability characteristics are referred to herein as "hot-fill" stability. The linear polyesters employed in articles having "hot-fill" stability comprise poly(ethylene terephthalate), poly(ethylene terephthalate) wherein up to 5 mole percent of the ethylene glycol residues have been replaced with residues derived from 1,4-cyclohexanedimethanol and poly(ethylene 2,6-naphthalenedicarboxylate), wherein the polyesters have been sufficiently heat set and oriented by methods well known in the art to give a desired degree of crystallinity.

The polyester or polyamide fibers of the present invention are prepared by known techniques. They may be woven or nonwoven. The are prepared by melt extrusion processes to form fibers or filaments. In accordance with known technology such as continuous filament spinning for yarn or staple fiber, and nonwoven processes such as spunbond production and meltblown production, the fibers or filaments are formed by extrusion of the molten polymer through small orifices. In general, the fibers or filaments thus formed are then drawn or elongated. In nonwoven processes such as spunbonding and meltblowing, the fibers or filaments are directly deposited onto a foraminous surface, such as a moving flat conveyor and are at least partially consolidated by any of a variety of means including, but not limited to, thermal, mechanical or chemical methods of bonding. It is known to those skilled in the art to combine processes or the fabrics from different processes to produce composite fabrics which possess certain desirable characteristics. Examples of this are combining spunbond and meltblown to produce a laminate fabric that is best known as SMS, meant to represent two outer layers of spunbond fabric and an inner layer of meltblown fabric. Additionally either or both of these processes may be combined in any arrangement with a staple fiber carding process or bonded fabrics resulting from a nonwoven staple fiber carding process. In such described laminate fabrics, the layers are generally at least partially consolidated by one of the means listed above.

In laminate fabrics of the present invention, at least one layer comprises a composition of the present invention.

Fibers of the present invention are for example described in U.S. 5,650,509; U.S. 5,911,902; U.S. 6,294,254; U.S. 5,049,447; U.S. 5,512,340; U.S. 6,010,789; U.S. 5,589,530 and U.S. 6,020,421, the relevant disclosures of which are hereby incorporated by reference.

Fibers of the present invention may be employed for example in upholstery, clothing, garments, ropes, nets, tire cords, kites, parachutes and the like.

Molded polyamide articles are for example employed in automotive applications (under the hood), and the like.

Polyester films are well known in the art. PET films are employed for packaging for example for medical, food, industrial and decorative products. They are used as business graphics films in labels, printing base, office graphics and signs. They are used as industrial films for example in liners, as carrier, tape backing, protective overlay, membrane switch and for laminating. They are used for example as imaging films in medial and proofing applications and as solar control and security window films. They are used for example in white coated film, white voided film, dimensionally stable film, extrusion coated film, tear resistant film, polarizing film, reflective film, dispensable film, coated film, co-extruded film, insulation film, weather resistant film, laminating film and mirror film.

PEN films are used for example in labels, flexible printed circuitry and electrical insulation.

The polyester films of this invention may be used for example, in combination with other films such as polyolefin films.

Polyamide films, for example PA 6 and PA 6,6 films, are used for example in co-extruded films for packaging. For example, polyamide films are employed in microwaveable food packaging.

The instant invention also pertains to a process for preventing the formation of aldehydic contaminants during melt processing of a polyester or polyamide which comprises incorporating into said polyester or polyamide an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc).

The instant invention also pertains to a process for forming a bottle preform or a bottle or container suitable for storing water (mineral, natural, ozonated) or other foodstuffs, which allows the desirable taste of the water or foodstuff after packaging to remain unaltered after being placed in said bottle or container prepared from the polyester or polyamide composition of the instant invention.

The instant plastic container or film stabilized by a compound or compounds of component (b) may also optionally have incorporated therein or applied thereto from 0.01 to 10 % by weight; for example from 0.025 to 5 % by weight, for instance from 0.05 to 2 % by weight, based on the total weight of the composition, of additional coadditives such as antioxidants, other UV absorbers, hindered amines, phosphites or phosphonites, benzofuran-2-ones, thiosynergists, polyamide stabilizers, metal stearates, nucleating agents, oxygen scavengers, fillers, reinforcing agents, lubricants, emulsifiers, dyes, pigments, optical brighteners, flame retardants, antistatic agents, blowing agents and the like, such as the materials listed below, or mixtures thereof.
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
   1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
   1,3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
   1.4. Tocopherols, for example α-tocopherol, β-tocopherol, γ-tocopherol, δ-tocopherol and mixtures thereof (vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenryl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methy1-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra(5-tert-butyl-4-hydroxy-2-methylphenyl)pentane.
   1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
   1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, di-dodecylmercaptoethyl-2,2-bis(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
   1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl-3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
   1.12. Acylaminophenols, for example 4-hydroxylauranilide, 4-hydroxystearanilide, octyl N-(3,5-di-tert-butyl-4-hydroxyphenyl)carbamate.
   1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5,5]-undecane.
   1,15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®}XL-1, supplied by Uniroyal).
   1.18. Ascorbic acid (vitamin C)
   1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyvisohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene.
2. UV absorbers and light stabilizers
   2.1. 2-(2'-Hydroxyphenyl)benzotriazoles, for example 2-(2'-hydroxy-5'-methylphenyl)benzotriazole, 2-(3',5-di-tert-butyl-2'-hydroxyphenyl)benzotdazole, 2-(5'-tert-butyl-2'-hydroxyphenyl)benzotriazole, 2-(2'-hydroxy-5'-(1,1,3,3-tetramethylbutyl)phenyl)benzotriazote, 2-(3',5'-di-tert-butyl-2'-hydroxyphenyl)-5-chlorobenzotriazole, 2-(3'-tert-butyf-2'-hydroxy-5'-methytphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyt-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-yiphenol]; the transesterification product of 2-[3'-tert-butyl-5'-(2-methoxycarbonylethyl)-2'-hydroxyphenyl]-2H-benzotriazole with polyethylene glycol 300; 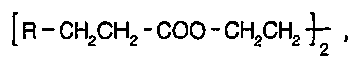 where R = 3'-tert-butyl-4'-hydroxy-5'-2H-benzotriazol-2-ylphenyl, 2-[2'-hydroxy-3'-(α,α-dimethylbenzyt)-5'-(1,1,3,3-tetramethylbutyl)phenyl]benzotriazole; 2-[2'-hydroxy-3'-(1,1,3,3-tetramethylbutyl)-5'-(α,α-dimethylbenzyl)phenyl]benzotriazole.
   2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, for example 4-tert-butylphenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butyiphenyl 3,5-di-tert-butyl-4-hydroxybenzoate.
   2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.
   2.5. Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyidiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.
   2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octy)oxy-2,2,6,6-tetramethylpiperidyl)sebacate, bis(1-octyloxy-2,2,6,6-tetramethy)piperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-a-olefin copolymer with 2,2,6,6-tetramethyl-4-aminopiperidine or 1,2,2,6,6-pentamethyl-4-aminopiperidine.
      The sterically hindered amine may also be one of the compounds described in U.S. 5,980,783, the relevant parts of which are hereby incorporated by reference, that is compounds of component I-a), I-b), I-c), I-d), I-e), I-f), I-g), I-h), I-i), I-j), I-k) or I-l), in particular the light stabilizer 1-a-1, 1-a-2, 1-b-1, 1-c-1, 1-c-2, 1-d-1, 1-d-2, 1-d-3, 1-e-1, 1-f-1, 1-g-1, 1-g-2 or 1-k-1 listed on columns 64 - 72 of said U.S. 5,980,783.
      The sterically hindered amine may also be one of the compounds described in EP-A-0 782 994, for example compounds as described in claims 10 or 38 or in Examples 1-12 or D-1 to D-5 therein.
   2.7. Sterically hindered amines substituted on the N-atom by a hydroxy-substituted alkoxy group, for example compounds such as 1-(2-hydroxy-2-methylpropoxy)-4-octadecanoyloxy-2,2,6,6-tetramethylpiperidine, 1-(2-hydroxy-2-methylpropoxy)-4-hexadecanoyloxy-2,2,6,6-tetramethylpiperidine, the reaction product of 1-oxyl-4-hydroxy-2,2,6,6-tetramethylpiperidine with a carbon radical from t-amylalcohol, 1-(2-hydroxy-2-methylpropoxy)-4-hydroxy-2,2,6,6-tetramethylpiperidine, 1-(2-hydroxy-2-methylpropoxy)-4-oxo-2,2,6,6-tetramethylpiperidine, bis(1-(2-hydroxy-2-methylpropoxy)-2,2,6,6-tetramethylpiperidin-4-yl) sebacate, bis(1-(2-hydroxy-2-methylpropoxy)-2,2,6,6-tetramethylpiperidin-4-yl) adipate, bis(1-(2-hydroxy-2-methylpropoxy)-2,2,6,6-tetramethylpiperidin-4-yl) succinate, bis(1-(2-hydroxy-2-methylpropoxy)-2,2,6,6-tetramethylpiperidin-4-yl) glutarate and 2,4-bis{N-[1-(2-hydroxy-2-methylpropoxy)-2,2,6,6-tetramethylpiperidin-4-yl]-N-butylamino}-6-(2-hydroxyethylamino)-s-triazine.
   2.8. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
   2.9. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxvpropoxy)phenyo-4,6-bis(2,4-dimethyl)-1,3,5-teiazine, 2-[2-hydroxy-4-(2-hydroxy-3-octyloxypropyloxy)phenylJ-4,6-bis(2,4-dimethyl)-1,3,5-triazine, 2-[4-(dodecyloxy/tridecyloxy-2-hydroxypropoxy)-2-hydroxyphenylJ-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine.
3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-di-cumylphenyl)pentaerythritol diphosphite, bis(2,6-di-tert-butyl-4-methylphenyl)pentaerythrftol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythrftol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.
   The following phosphates and phosphonites are especially preferred:
   Tris(2,4-di-tert-butylphenyl) phosphite (Irgafos^{®}168, Ciba Specialty Chemicals Inc.), tris(nonylphenyl) phosphite, 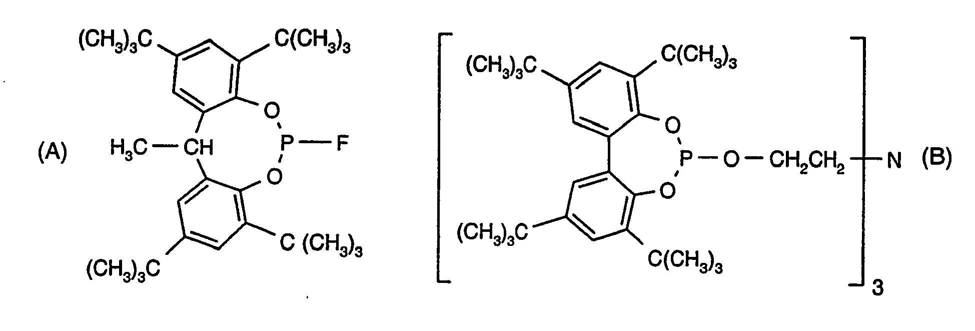 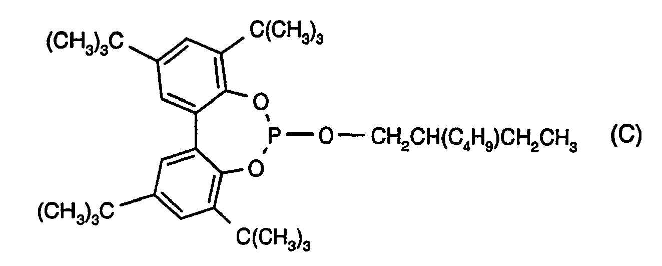 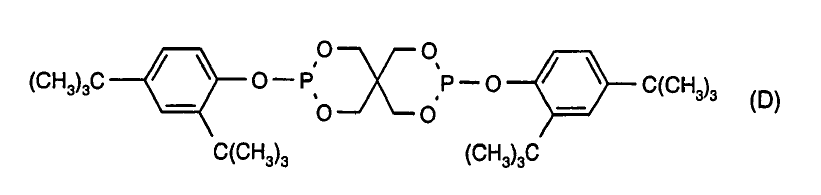 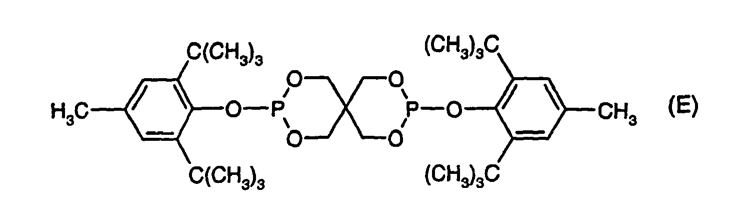 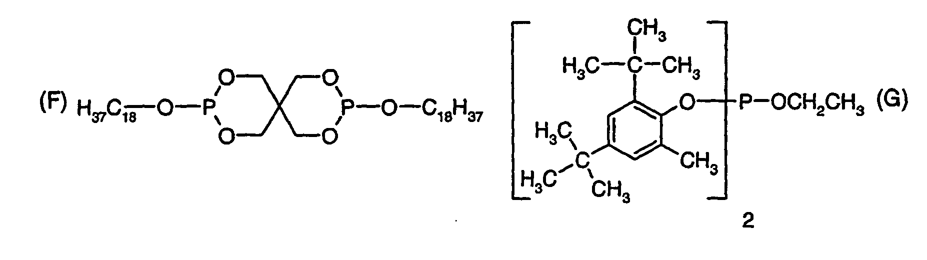 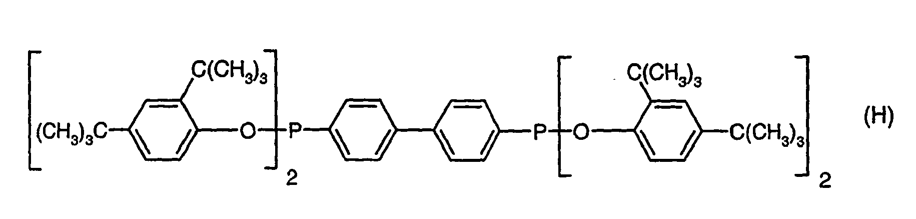
5. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butylbenzofuran-2-one, 5,7-di-tert-butyl-3-[4-(2-stearoyloxyethoxy)phenyl]-benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one.
6. Thiosynergists, for example dilauryl thiodipropionate or distearyl thiodipropionate.
7. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
8. Polyamide stabilizers, for example copper salts in combination with iodides and/or phosphorus compounds and salts of divalent manganese.
9. Basic co-stabilisers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.
10. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbftol, 1,3:2,4-di(paramethyldibenzylidene)sorbitol, and 1,3:2,4-di(benzylidene)sorbitol.
11. Fillers and reinforcing agents, for example calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.
12. Dispersing agents, such as polyethylene oxide waxes or mineral oil.
13. Dyes & pigments, for example those which are of violet color, which when admixed with polyester of polyamide containing yellowness, gives an acceptable b* value coloration close to original manufactured polyester of polyamide. Such pigments and dyes include Ciba Chromophtal^{™} Violet B and PV-37, SV 13 to include Bayer Macrolex^{™} Violet B Gran., Cobalt salts such as cobalt acetate, cobalt stearate and cobalt octoate.
14. Other additives, for example plasticizers, lubricants, emulsifiers, pigments, dyes, optical brighteners, rheology additives, catalysts, flow-control agents, slip agents, crosslinking agents, crosslinking boosters, halogen scavengers, smoke inhibitors, flameproofing agents, antistatic agents, clarifiers such as substituted and unsubstituted bisbenzylidene sorbitols, benzoxazinone UV absorbers such as 2,2'-p-phenylene-bis(3,1-benzoxazin-4-one), anthranilamide (AAA), Cyasorb^{®} 3638 (CAS# 18600-59-4), and blowing agents, and oxygen absorbers such as Cryovac's Oxbar ^{™} and Ciba^{®} Shelfplus^{™} 02.

It is also contemplated that the present polyester or polyamide compositions may be further stabilized against the formation of aldehydic contaminants during melt processing with the incorporation therein of poly(vinyl alcohol), ethylene/vinyl alcohol copolymer, polyhydric alcohols, polyacrylamide, polymethacrylamide or an acrylamide or methacrylamide copolymer with at least one ethylenically unsaturated comonomer.

It is also contemplated that the present polyester or polyamide compositions may be further stabilized against the formation of aldehydic contaminants during melt processing with the incorporation therein of a compound selected from the group consisting of hydroxylamine, substituted hydroxylamine, nitrone and amine oxide stabilizers.

Accordingly, the present invention also pertains to a composition, stabilized against the formation of aldehydic contaminants during melt processing of said composition, which comprises
(a) a polyester or polyamide, and
(b) an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc) according to claim 1; and optionally
(c) an effective stabilizing amount of a polymer which is poly(vinyl alcohol) or an ethylene/vinyl alcohol copolymer; and optionally
(d) an effective stabilizing amount of a polyhydric alcohol; and optionally
(e) an effective stabilizing amount of a polymer which is polyacrylamide, polymethacrylamide or an acrylamide or methacrylamide copolymer with at least one ethylenically unsaturated comonomer; and optionally
(f) an effective stabilizing amount of at least one compound selected from the group consisting of
   i.) hydroxylamine stabilizers,
   ii.) substituted hydroxylamine stabilizers,
   iii.) nitrone stabilizers, and
   iv.) amine oxide stabilizers; and optionally
(g) an effective stabilizing amount of at least one polymer or copolymer derived from at least one 2-propenoic acid ester monomer wherein the polyhydric alcohol of (d) is of the formula G-(OH)ₐ where a is 2 to 4000, and G is a hydrocarbyl moiety, and
wherein the polymer or copolymer of component (g) is of the formula 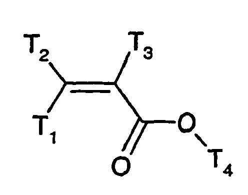 where T₁, T₂ and T₃ are independently hydrogen, straight or branched chain alkyl of 1 to 24 carbon atoms, cycloalkyl of 5 to 12 carbon atoms, aralkyl of 7 to 15 carbon atoms, or said alkyl, cycloalkyl or aralkyl which is further substituted by one or more
- OT₅, -NT₆T₇, -CO₂T₈ or -CONT₉T₁₀ wherein T₅, T₆, T₇, T₈, T₉, and T₁₀ are independently hydrogen or straight or branched chain alkyl of 1 to 18 carbon atoms; or T₁, T₂, T₃ are independently a group -CO₂T₄,
   T₄ is a polyhydric alcohol substituent of the formula -E-(OH)ₐ where a is 2 to 4000, and E is a hydrocarbylene moiety.

A hydrocarbyl moiety according to this invention is for example an aliphatic, cycloaliphatic, aromatic or a mono-, di- or poly-saccharride moiety.

The hydrocarbyl moieties for the definition of G may be interrupted by heteroatoms, for example by -O-.

Polyhydric alcohols of component (d) may be for example glycerin,1,2,3-butanetriol, 1,2,4-butanetriol, erythritol, ribitol, xylitol, dulcitol, sorbitol, 1,2,3-cyclohexatriol, inositol, glucose, galactose, mannose, galacturonic acid, xylose, glucosamine, galactosamine, 1,1,2,2-tetramethyloylcyclohexane, 1,1,1-trimethylolpropane, 1,1,2-trimethyloylpropane, 1,1,1-trimethylolbutane, 1,1,2-trimethylolbutane, 1,1,1-trimethylolpentane, 1,1,2-trimethylolpentane, 1,2,2-trimethylolpentane, trimethylolpentane, pentaerythritol, dipentaerythritol, 1,1,3,3-tetrahydroxypropane, 1,1,5,5-tetrahydroxypentane, 2,2,6,6-tetrakis(hydroxymethyl)cyclohexane and 2,2,6,6-tetrakis(hydroxymethyl)cyclohexanol.

The polyhydric alcohol is for instance starch, cellulose or a sugar or a sugar alcohol.

The polyhydric alcohols include degraded starch (dextrins and cyclodextrins), maltose and its derivatives, maltitol, maltopentaose hydrate, maltoheptaose, maltotetraose, maltulose monohydrate, D,L-glucose, dextrose, sucrose and D-mannitol.

Commercial polyhydric alcohols include trimethylol propane, triethylol propane, glycerol, sorbitol and pentaerythritol.

Specific examples of compounds of component (f) are the N,N-di(alkyl)hydroxylamine produced by the direct oxidation of N,N-di(hydrogenated tallow)amine (Irgastab^{®} FS-042), O-allyl-N,N-dioctadecylhydroxylamine, N-octadecyl-α-heptadecyinitrone, and Genox^{™} EP, a di(C₁₆-C₁₈)alkyl methyl amine oxide, CAS# 204933-93-7.

Preferably, the alcohols of component (d) are selected from the group consisting of pentaerythritol, dipentaerythritol and trimethylolpropane and the compounds of component (f) are selected from the group consisting of the N,N-di(alkyl)hydroxylamine produced by the direct oxidation of N,N-di(hydrogenated tallow)amine, O-allyl-N,N-dioctadecylhydroxylamine, N-octadecyl-α-heptadecylnitrone and di(C₁₆-C₁₈)alkyl methyl amine oxide.

Irgastab^{®} FS-042 is available from Ciba Specialty Chemicals. Genox^{™} EP is available from GE Chemicals. O-allyl-N,N-dioctadecylhydroxylamine is as prepared in Example 3 of U.S. 5,045,583. N-octadecyl-α-heptadecylnitrone is as prepared in Example 3 of U.S. 4,898,901.

A hydrocarbylene moiety according to this invention is a divalent group derived from for example an aliphatic, cycloaliphatic, aromatic or a mono-, di- or poly-saccharride moiety.

The hydrocarbylene moieties for the definition of E may be interrupted by heteroatoms, for example by -O-.

The hydrocarbylene moiety E is derived for example from glycerin,1,2,3-butanetriol, 1,2,4-butanetriol, erythritol, ribitol, xylitol, dulcitol, sorbitol, 1,2,3-cyclohexatriol, inositol, glucose, galactose, mannose, galacturonic acid, xylose, glucosamine, galactosamine, 1,1,2,2-tetramethyloylcyclohexane, 1,1,1-trimethylolpropane, 1,1,2-trimethyloylpropane, 1,1,1-trimethylolbutane, 1,1,2-trimethylofbutane, 1,1,1-trimethylolpentane, 1,1,2-trimethylolpentane, 1,2,2-trimethylolpentane, trimethylolpentane, pentaerythritol, dipentaerythritol, 1,1,3,3-tetrahydroxypropane, 1,1,5,5-tetrahydroxypentane, 2,2,6,6-tetrakis(hydroxymethyl)cyclohexane and 2,2,6,6-tetrakis(hydroxymethyl)cyclohexanol.

The hydrocarbylene moiety E is derived for example from starch, cellulose or a sugar or a sugar alcohol; for example degraded starch (dextrins and cyclodextrins), maltose and its derivatives, maltitol, maltopentaose hydrate, maltoheptaose, maltotetraose, maltulose monohydrate, D,L-glucose, dextrose, sucrose and D-mannitol; as well as from commercial polyhydric alcohols which include trimethylol propane, triethylol propane, glycerol, sorbitol and pentaerythritol.

The polyester or polyamide of component (a) is for example 95 to 99.99 % by weight and the polymer of component (c) is for example 5 to 0.01 % by weight, based on the total weight of (a) and (c).

For instance, the polyester or polyamide of component (a) is 99.925 to 99.995 % by weight and component (c) is 0.075 to 0.005 % by weight based on the total weight of components (a) and (c).

The polyester or polyamide of component (a) is for example 95 to 99.99 % by weight and the polyhydric alcohol of component (d) is for example 5 to 0.01 % by weight, based on the total weight of (a) and (d).

For example, component (a) is 98 to 99.99 % by weight and component (d) is 2 to 0.01 % by weight of the total weight of (a) and (d); for instance component (a) is 99 to 99.97 % by weight and component (d) is 1 to 0.03 % by weight of the total weight of (a) and (d).

The polyester or polyamide of component (a) is for example 95 to 99.99 % by weight and the polymer of component (e) is for example 5 to 0.01 % by weight, based on the total weight of (a) and (e).

The polyester or polyamide of component (a) is for example 95 to 99.99 % by weight and the stabilizer or stabilizers of component (f), in total, are for example 5 to 0.01 % by weight, based on the total weight of (a) and (f).

For example, component (a) is 98 to 99.99 % by weight and component (f) is 2 to 0.01 % by weight of the total of (a) and (f); for instance component (a) is 99 to 99.97 % by weight and component (f) is 1 to 0.03 % by weight, based on the total weight of (a) and (f).

The polyester or polyamide of component (a) is for example 95 to 99.99 % by weight and the stabilizer or stabilizers of component (g), in total, are for example 5 to 0.01 % by weight, based on the total weight of (a) and (g).

For instance, component (a) is for example 98 to 99.99 % by weight and component (g) is for example 2 to 0.01 % by weight of the total of (a) and (g); for instance component (a) is 99 to 99.97 % by weight and component (g) is 1 to 0.03 % by weight, based on the total weight of (a) and (g).

It is well known that Mannich base compounds may be chemically converted to quinone methide compounds (and equivalents) under the action of heat and/or light. It has been found that the thermal transformation products of the present Mannich base compounds are also active as aldehyde scavengers in polyester and polyamide. The present compounds where R₅₀ is selected from -OR₅₁, -O-C(O)-R₅₁, -SR₅₂, -S(O)R₅₂, -S(O)₂R₅₂ may also be transformed into quionone methides under the influence of heat and/or light, which compounds are also suitable to scavenge aldehydes in polyester and polyamide.

The onium salts of Mannich bases and related ethers or thioethers, i.e. when R₅₀ is -[N(H)₂ R₅₂]⁺Y⁻, -[N(H) R₅₂R₅₃]⁺Y⁻, -[NR₅₂R₅₃ R₅₄]⁺Y⁻, [-OR₅₁ R₅₂]⁺Y⁻ or -[S R₅₁R₅₂]⁺Y⁻, where Y⁻ is a mono-valent anion - are equally "capped" precursors of quionone methides and may correspondingly be used as scavengers of aldehydes formed during processing of polyester or polyamide.

Further, the activity of these thermal transformation products is increased with the addition of a co-additive amine. The amine compounds are for example the corresponding amines of the Mannich base compounds of formulae (Ia)-(IVc) according to this invention. That is, the amino substituents of R₅₀ whose open valence is satisfied with a hydrogen atom. For example dialkylamines, piperidine, dipiperidine, morpholine, etc.

It is also contemplated that amine co-additives may be advantageously employed in addition to the present Mannich bases in polyester or polyamide compositions.

Accordingly, the present invention also pertains to a composition, stabilized against the formation of aldehydic contaminants during melt processing of said composition, which comprises
(a) a polyester or polyamide, and
(b) an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc) according to claim 1, and
(c) at least one compound selected from the group consisting of the amine compounds.

The present invention also pertains to a composition, stabilized against the formation of aldehydic contaminants during melt processing of said composition, which comprises
(a) a polyester or polyamide, and
(b) an effective stabilizing amount of at least one compound selected from the group consisting of the thermal products of the Mannich base compounds of formulae (Ia), (Ib), (IIa), (IIb), (IIc), (IIIa), (IIIb), (IIIc), (IVa), (IVb) and (IVc) according to claim 1, and
(c) at least one compound selected from the group consisting of the amine compounds.

The amine compounds are for example the corresponding amines of the Mannich base compounds of formulae (Ia)-(IVc) according to this invention. That is, the amino substituents of R₅₀ whose open valence is satisfied with a hydrogen atom. For example dialkylamines, piperidine, dipiperidine, morpholine, etc.

It has been discovered that certain pigments and/or dyes or other colorants, in the compositions of this invention, prevent yellowing of the stabilized polyester of polyamide compositions.

Accordingly, the present invention also pertains to a composition, stabilized against the formation of aldehydic contaminants and against yellowing during melt processing of said composition, which comprises
(a) a polyester or polyamide, and
(b) an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc) according to claim 1, and
(c) one or more colorants selected from the group consisting of pigments and dyes.

Suitable pigments or dyes are organic or inorganic. For example cobalt salts, ultramarine blue, polymer soluble blue dyestuffs, and copper phthalocyanine blue are suitable. Cobalt salts are for example cobalt aluminate, cobalt acetate, cobalt stearate and cobalt octoate. Suitable pigments are for example red, blue or violet organic pigments. For example, organic pigments of the Diketo pyrrolo pyrrole, quinacridone, azo condensation, anthraquinone, perinone, chrome complex, benzimidazolone, aminoanthraquinone, napthol, indanthrone, carbazole dioxazine and perylene classes are suitable. Suitable pigments and dyes include Ciba Cromophtal^{™} Violet B and Violet GT (of the dioxazine class), Pigment Violet 23 and 37, Disperse Violet 57, Solvent Violet 13, Ciba Gracet^{™} Violet TR, Ciba Oracet^{™} Violet B, and Bayer Macrolex^{™} Violet B Gran (of the anthraquinone dye class), PV-19, Cromophtal Violet R RT-891-D, Cromophtal Red 2020, Monastral Red Y RT-759, Monastral Red B RT-790-D, PR-202, Monastral Magenta RT-235-D, and Monastral Red B RT195-D all of the quinacridone pigment class. SV-46, Filamid Violet RB (1:2 chrome complex dyes), and SB-132, Filamid Blue R (anthraquinone) are also suitable. Additional colorants include, PR-177, Cromophtal Red A3B (anthraquinone), PR-264, Irgazin DPP Rubine TR (diketo pyrrolo pyrrole), SR-135, Oracet Red G (perinone), PB 15:3, Cromophtal^{™} Blue 4GNP, Cromophtal Blue LGLD, PB 15:1, Irgalite Blue BSP, PB-60, Cromophtal Blue A3R (indanthrone), SB-67, and Ciba Oracet^{™} Blue G.

The present invention pertains also to a fiber, film or molded article stabilized against the formation of aldehydic contaminants during melt processing of said fiber, film or article, which comprises
(a) a polyester or polyamide, and
(b) an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc).

The present Mannich base additives may be advantageously added during the synthesis of a polyester or a polyamide to result in a polymer that is low in acetaldehyde formation during subsequent melt processing.

Accordingly, disclosed is a process for the preparation of a stabilized polyester or polyamide that is Icw in the generation of aldehydes during subsequent melt processing, which process comprises preparing the polyester or polyamide from its monomer components in the presence of an effective amount of a stabilizer selected from the group consisting of the Mannich base compounds of formulae (Ia), (Ib), (IIa), (IIb), (IIc), (IIIa), (IIIb), (IIIc), (IVa), (IVb) and (IVc).

The monomer components of the polyester and polyamide are as described herein.

Specifically, disclosed is a process for the preparation of a stabilized polyester that is low in the generation of aldehydes during subsequent melt processing, which process comprises reacting one or more diacids with one or more diols in an esterification process, and/or one or more diesters with one or more diols in a transesterification process in the presence of an effective amount of a stabilizer selected from the group consisting of the Mannich base compounds of formulae (Ia), (Ib), (IIa), (IIb), (IIc), (IIIa), (IIIb), (IIIc), (IVa), (IVb) and (IVc).

When the Mannich base additives are added during the synthesis of a polyester or polyamide, the levels of use are as before.

Another subject of the present invention is a polyester or a polyamide obtained by the process which comprises preparing the polyester or polyamide from its monomer components in the presence of an effective amount of a stabilizer selected from the group consisting of the Mannich base compounds of formulae (Ia), (Ib), (IIa), (IIb), (IIc), (IIIa), (IIIb), (IIIc), (IVa), (IVb) and (IVc).

A preferred embodiment of the present invention is the use of component (b) for preventing the formation of aldehydic contaminants during melt processing of a polyester or a polyamide.

The following examples are for illustrative purposes only and are not to be construed to limit the scope of the instant invention in any manner whatsoever.

General - PET bottle grade pellets are subjected to extrusion compounding to simulate the heat history which PET experiences when thermally injection molded into bottle preforms and subsequently stretch-blow molded into bottles. The efficacy of an additive added to reduce the formation of acetaldehyde is determined by quantitative analysis using thermal desorption GC-MS or GC-FID after adoption of published methods. An unstabilized PET is extruded each day to provide a control polymer for measuring acetaldehyde formation.

Extrusion - PET is pre-dried in vacuo under nitrogen at an oven temperature of about 70°C to a moisture level of about 30 ppm which is verified on a Mitsubishi VA-O6 moisturemeter. A Leistritz 18 mm or 27 mm co-rotating, non-intermeshing twin screw extruder is configured as follows: set temps = throat (220-230°C), zones and die (270°C), actual extrudate melt temperature is 275-280°C, screw at 100-110 rpm, hopper feeder = 10-15 ppm.

PET Pellet Color - Yellowness index (YI), and L*, a*, b* by ASTM D1925, D65 10degm specular included, measured on PET pellets using a DCI spectrophotometer.

Acetaldehyde Analysis - The concentration of acetaldehyde in PET is quantitatively determined using a thermal desorption GC-FID method adapted from B. Nijassen et al., Packaging Technology and Science, 9, 175 (1996); S. Yong Lee, SPE ANTEC 1997, pp 857-861; and M. Dong et al., J. Chromatographic Science, 18, 242 (1980). A general example follows below:

The PET samples are analyzed, typically in triplicate, by weighing 500 mg of powdered PET pellets (obtained by cryogenically pulverizing ~ 20 grams of the PET) in a 5 ml crimp sealed headspace vial. The sample vial is heated at 120°C for one hour in a Tekmar model 7000 static headspace analyzer. The headspace gas (5 ml) is then transferred via a heated transfer line to a Varian 3600 GC-FID system for quantification of the acetaldehyde (AA). By using a known acetaldehyde value for PET, the ratio of peak areas for the known PET resin and for the experimental PET resin blends are compared and the amount of acetaldehyde in the experimental blend can be obtained.

### Example A: Preparation of 2,4-di-tert-butyl-6-(phenyl-piperidin-1-yl-methyl)-phenol (1071).

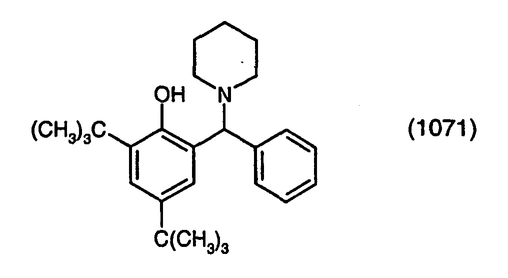

A solution of 255.5 g (3.00 mol) of piperidine in toluene (250 ml) is added dropwise during a time of 5 minutes, at room temperature, to a solution of 278.6 g (2.63 mol) of benzaldehyde in 500 ml of toluene. An exothermicity to 40°C is observed. The slightly yellow-colored solution is boiled under reflux for 1 hour; approximately 34 ml of water are separated using a water separator, and a solution of 515.8 g (2.50 mol) of 2,4-di-tert-butylphenol in 500 ml of toluene is then added dropwise over a period of 45 minutes. The reaction mixture is boiled at reflux for a further hour and then cooled to room temperature. Hexane is added and the mixture is cooled to 0°C whereas the product precipitates. The solid material is filtered and washed with cold hexane to yield 814 g (85 %) of the title compound as a white solid, m.p. 140-141°C. Molecular weight C₂₆H₃₇NO (379.588). Analysis, calculated: C 82.27; H 9.82; N 3.69 %. Analysis, found: C 82.06; H 9.83; N 3.77 %. ¹HNMR (300 MHz, CDCl₃, ppm): 1.24 (s, 9H); 1.50 (s, 11 H); 1.66 (bs, 4H); 2.39 (bs, 4H); 4.48 (s, 1 H); 6.79 (d, 1 H); 7.32 (m, 6H); 12.60 (s, 1 H).

### Example B: Preparation of 2,4-di-tert-butyl-6-(dimethylamino-phenyl-methyl)-phenol (1070).

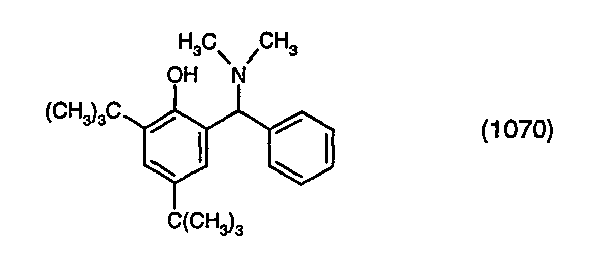

A mixture of 51.5 g (0.25 mol) of 2,4-di-tert-butylphenol, 26.5 g (0.25 mol) of benzaldehyde and 42.3 g (0.375 mol) of a 40 % aqueous solution of dimethylamine is heated in a closed vessel at 140°C (oilbath) for 10 hours, the internal pressure rising to 5 bar. After cooling to room temperature, the reaction mixture solidifies. Crystallization of the residue from isopropanol yields 65.2 g (77 %) of the title compound as a white solid, m.p. 120-123°C. Molecular weight C₂₃H₃₃NO (339.52). Analysis, calculated: C 81.37; H 9.80; N 4.13 %. Analysis, found: C 81.25; H 9.86; N 4.00 %. ¹HNMR (300 MHz, CDCl₃, ppm): 1.19 (s, 9H); 1.44 (s, 9H); 2.26 (s, 6H); 4.34 (s, 1 H); 6.75 (d, 1 H); 7.29 (m, 6H); 12.43 (s, 1H).

### Example C: Preparation of 2,4-di-tert-butyl-6-piperidin-1-ylmethyl-phenol (0858).

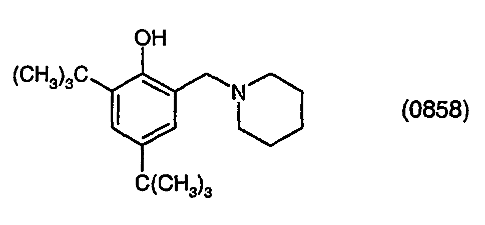

2,4-Di-tert.-butylphenol (70 g, 0.34 mol), piperidine (70 ml, 0.714 mol), a formaldehyde solution (35% in water) (27 ml, 0.34 mol) and ethanol (1 liter) are added to a flask. The resulting yellow solution is stirred under reflux for 6 h. The solvent is evaporated *in vacuo* whereas a red crystalline solid is formed. Hexane is added to the residue and the resulting white crystals are filtered. The mother liquor isconcentrated and the residue treated with 2-propanol to afforded a total yield 56 g (54 %) of the title compound as a white solid. Molecular weight C₂₀H₃₃NO (303,49). ¹HNMR (400 MHz, CDCl₃, ppm): 1.2 (s, 9H); 1.32 (s, 9H); 1.55 (s, 5H); 2.1-2.7 (m, 5H); 3.55 (s, 2H); 6.71 (1 H); 7.1.(s, 1H); >7.2 (s, 1H).

### Example D: Preparation of 2,6-di-tert-butyl-4-(phenyl-piperidin-1-yl-methyl)-phenol (0868).

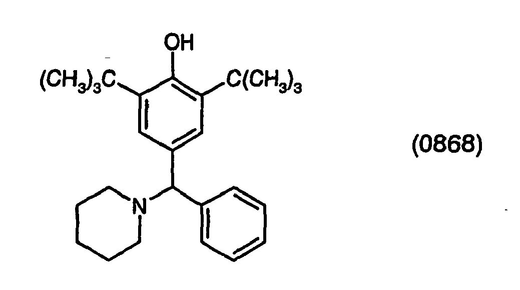

2,6-Di-tert-butylphenol (70 g, 0.34 mol), piperidine (70 ml, 0.714 mol), benzaldehyde (38 ml, 0.374 mol) and ethanol (1 liter) are added to a flask. The pale yellow solution is stirred under reflux for 14 h. The mixture is cooled to room temperature, whereas white crystals precipitate that are collected. The mother liquor is concentrated, whereas further crystals are formed. The solid materials are combined and washed with cold ethanol to yield 86 g (67 %) of the title compound as a pale yellow solid. Molecular weight C₂₆H₃₇NO (379,59). ¹HNMR (400 MHz, CDCl₃, ppm): 1.3 (s, 18H); 1.4-1.55 (m, 5H); 2.2 (s, 5H); 4.08 (s, 1 H); 4.92 (s, 1H); 7.0 -7.3 (m, 7H).

### Example E: Preparation of 2,6-di-tert-butyl-4-piperidin-1-yl-methyl-phenol (0867).

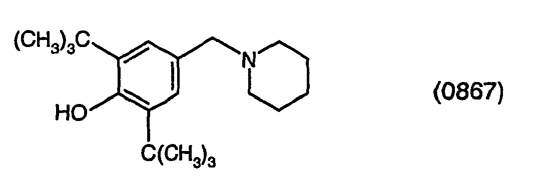

2,6-Di-tert-butylphenol (70 g, 0.34 mol), piperidine (70 ml, 0.714 mol), a formaldehyde solution (35% in water) (27 ml, 0.34 mol) and ethanole (1 L) are added to a flask. The slightly yellow-coloured solution is stirred under reflux for 5 hours. The reaction mixture is concentrated *in vacuo.* The resulting red oil is purified by chromatography (SiO₂, hexane/ethylacetate = 1:9) to yield 84 g (80 %) of the title compound as a white solid. Molecular weight C₂₀H₃₃NO (303.49). ¹HNMR (400 MHz, CDCl₃, ppm): 1.5 (s, 18H); 1.6 (m, 5H); 2.5 (s, 5H); 3.45 (s, 2H); 5.62 (s, 1 H); 7.1 (s, 2H).

### Example F: Preparation of 3-[3-tert-butyl-4-hydroxy-5-(phenyl-piperidin-1-yl-methyl)-phenyl]-propionic acid methyl ester (0888).

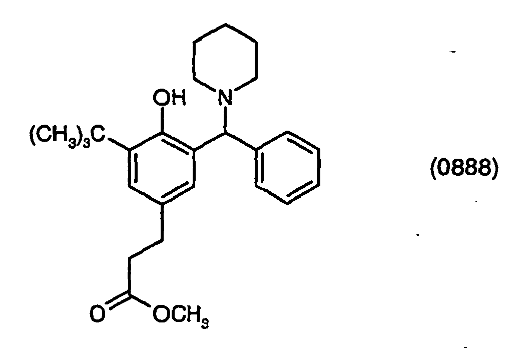

A solution of piperidine (60ml, 0.63 mol) in toluene (250 ml) is added dropwise at room temperature during a time of 5 minutes to a solution of benzaldehyde (36ml, 0.36 mol) in 500 ml of toluene. An exothermicity to 40°C is observed. The pale yellow solution is stirred under reflux for 2.5 hours; whereas approximately 8.5 ml of water separated in a water separator. A solution of of 3-(3-tert-butyl-4-hydroxy-phenyl)-propionic acid methyl ester (70 g, 0.3 mol) in toluene (500 ml) is then added dropwise over a period of 20 minutes. The reaction mixture is stirred at reflux for 14 hours and then cooled to room temperature. The mixture is concentrated *in vacuo,* and hexane is added to the residual red oil. The solid material is filtered and washed with cold hexane to yield 78 g (63 %) of the title compound as a white solid. Molecular weight C₂₆H₃₅NO₃ (409,57). ¹HNMR (400 MHz, CDCl₃, ppm): 1.3-1.4 (s, 9H); 2.3-2.5 (t, 2H); 2.6-2.7 (t, 2H); 3.5 (s, 3H); 4.4 (s, 1 H); 6.5-7.4 (m, 7H).

### Example G: Preparation of 2,4-di-tert-butyl-6-dimethylaminomethyl-phenol (1402).

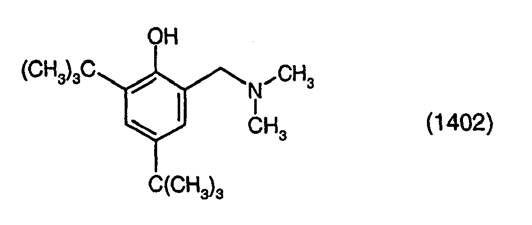

A mixture of 1.5 l ethanol, 300 g (1.5 mol) of 2,4-di-tert-butylphenol, 193 g (2.25 mol) of aqueous formaldehyde (35%) and 253 g (2.25 mol) of aqueous dimethylamine (40 %) is stirred for 2 days at room temperature. The product crystallizes slowly as the reaction proceeds and is eventually filtered-off to afford 250 g (0.95 mol) of the title compound as a white solid; m.p. 54 - 56 °C. After partial removal of the residual ethanol in vacuo, another 40 g of the title compound can be isolated from the filtrate. Total yield: 290 g (1.1 mol), molecular weight 263.43 (C₁₇H₂₉NO). ¹H-NMR (400 MHz, CDCl₃, ppm): 1.35 (s, 9H); 1.48 (s, 9H); 2.38 (s, 6H); 3.65 (s, 2H); 6.88 (s, 1 H); 7.18 (s, 1 H); >10 (broad s, -OH).

### Example H: Preparation of 2,4-di-tert-butyl-6-N-morpholino-4-ylmethyl-phenol (1457).

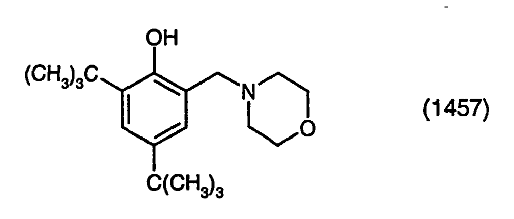

A mixture of 700 ml of toluene, 46.2 g (0.539 mol) of aqueous formaldehyde (35%) and 47 g (0.539 mol) of morpholine is refluxed at a water separator for approximately 2 hours, until the water separation is complete. Then, a solution of 100 g (0.49 mol) 2,4-di-tert-butylphenol in 300 ml of toluene is slowly added under these conditions, which are maintained for approximately 16 hours. After cooling to room temperature, the solvent is removed in vacuo, and the obtained yellowish, oily residue dispersed in 200 ml of iso-propanol. The product crystallizes during cooling with methanol/dry-ice and is filtered-off to afford 85 g (0.323 mol) of the title compound as a white solid. M.p. 108 - 109 °C, molecular weight 305.46 (C₁₉H₃₁NO₂). ¹H-NMR (400 MHz, CDCl₃, ppm): 1.25 (s, 9H); 1.4 (s, 9H); 2.5 (m, 4H); 3.6 (s, 2H); 3.7 (m, 4H); 6.8 (s, 1 H); 7.2 (s, 1 H); >10 (broad s, -OH).

### Example I: Preparation of 2,4-di-tert-butyl-6-di-n-butylaminomethyl-phenol (1596).

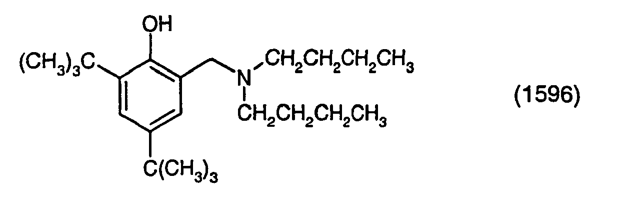

To a solution of 39.5 g (0.31 mol) of di-n-butylamine and 60 g (0.29 mol) of 2,4-di-tert-butylphenol in 150 ml of ethanol, 26.1 g (0.31 mol) of aqueous formaldehyde (35%) are added within 10 minutes, then stirred at 50°C for 2 days. After cooling to room temperature, two phases are formed (upper ethanol-water phase over the product layer). Addition of some ml of n-hexane facilitates the phase separation. The lower product phase is dried over Na₂SO₄, filtered and the solvent removed in vacuo to yield 88 g (0.25 mol) of the title compound as slightly yellowish oil, which solidifies upon standing over several days to form colorless crystals of the product with m.p. 33 - 35 °C; molecular weight C₂₃H₄₁NO (347.59). ¹H-NMR (400 MHz, CDCl₃, range 0 -10 ppm): 0.7 - 0.9 (t, 6H), 1.28 (s, 9H), 1.28 - 1.32 (m, 4H), 1.4 (s, 9H), 1.45 - 1.55 (m, 4H), 2.43 - 2.49 (t, 4H), 3.7 (s, 2H), 6.8 (s, 1 H), 7.18 (s, 1H) ; >10 (broad s, -OH).

### Example J: Preparation of 2,4-di-tert-butyl-6-cyclohexylaminomethyl-phenol (1655).

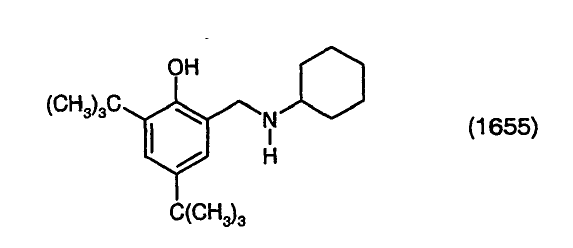

120 g (0.46 mol) of 2,4-di-tert-butyl-6-dimethylaminomethyl-phenol in 150 ml of cyclohexylamine are heated to 140°C for 16 hours; the dimethylamine formed is allowed to evaporate. After removal of all volatiles in vacuo, the remaining yellow oil is dispersed in approximately 200 ml of iso-propanol. During cooling to about -25 °C, the product crystallizes and is filtered-off to yield 70 g (0.22 mol) of the title compound as a white powder. M.p. 67 - 70 °C, molecular weight 317.52 (C₂₁H₃₅NO). ¹H-NMR (400 MHz, CDCl₃, range 0-10 ppm): 1.16 (m, 2H); 1.23 (m, 3H); 1.28 (s, 9H); 1.4 (s, 9H); 1.61 (m, 1 H); 1.75 (m, 2H); 1.97 (m, 2H); 2.56 (m, 1 H); 3.97 (s, 2H), 6.88 (s, 1 H); 7.21 (s, 1 H) ; >10 (broad s, -OH).

### Example K: Preparation of 2,6-bis-dimethylaminomethyl-4-(1,1,3,3-tetramethyl-butyl)-phenol (1672).

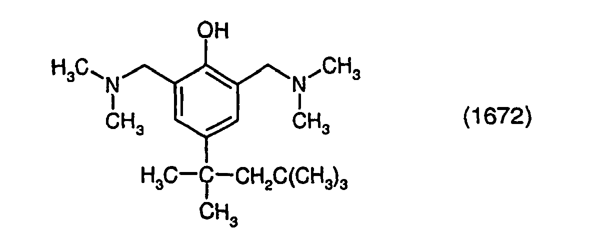

87.5 g (1.02 mol) of aqueous formaldehyde (35 %) is added to solution of 100 g (0.486 mol) of 4-tert-octylphenol in 450 ml of ethanol. During the subsequent, slow addition of 114.8 g (1.02 mol) of aqueous dimethylamine (40%), the temperature rises from 25 to 37 °C. The colorless solution is then heated to reflux for 5 to 7 hours. After removal of approximately 300 ml of the solvent in vacuo, two liquid phases are formed. The phase separation is improved by addition of about 300 ml of n-hexane so that the lower product phase can be easily separated from the upper ethanol-water layer. The product solution is then dried over Na₂SO₄, filtered and remaining solvent removed in vacuo to afford 134 g (0.42 mol) of the title compound as a slightly yellowish oil; molecular weight 320.52 (C₂₀H₃₆N₂O). ¹H-NMR (400 MHz, CDCl₃, range 0-10 ppm): 0.67 (s, 9H), 1.26 (s, 6H), 1.65 (s, 2H), 2.25 (s, 12H), 3.5 (s, 4H), 6.96 (s, 2H) ; >10 (broad s, -OH).

### Example L: 2,4,6-tris-dimethylaminomethyl-phenol (1673).

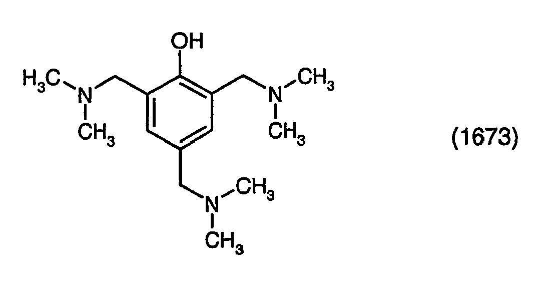

2,4,6-tris-dimethylaminomethyl-phenol (1673) is available for example from Aldrich Chemical Company Inc.: Molecular weight 265.40 (C₁₅H₂₇N₃O); ¹H-NMR (400 MHz, CDCl₃, ppm): 2.18 (s, 6H); 2.25 (s, 12H); 3.26 (s, 2H); 3.49 (s, 4H); 6.91 (s, 2H); >10 (broad s, -OH).

### Example M: Preparation of 2,4-bis-dimethylaminomethyl-6-methyl-phenol (1678).

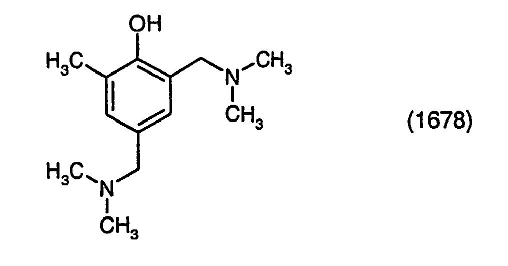

A solution of 49.2 g (0.46 mol) of o-cresol and 500 ml of ethanol is slowly mixed with 109 g (1.27 mol) of aqueous formaldehyde (35 %). During the subsequent addition of 133.5 g (1.19 mol) of aqueous dimethylamine (40 %), the temperature increases from 24 °C to 33 °C. The homogeneous reaction mixture is then heated to reflux for 3.5 hours. After cooling to room temperature, approximately 300 ml of the solvent is removed in vacuo and two liquid phases are formed. The phase separation is facilitated by addition of about 200 ml of n-hexane so that the lower product phase can be easily separated from the upper ethanol-water layer. The product solution is then dried over Na₂SO₄, filtered and the remaining solvent removed to give 88 g (0.4 mol) of the title compound as pale yellowish oil; molecular weight 222.33 (C₁₃H₂₂N₂O). ¹H-NMR (400 MHz, CDCl₃, ppm): 2.14 (s, 6H), 2.15 (s, 3H), 2.23 (s, 6H), 3.2 (s, 2H), 3.52 (s, 2H), 6.7 (s, 1 H), 6.9 (s, 1 H) ; >10 (broad s, -OH).

### Example N: Preparation of 2,6,2',6'-Tetrakis(dimethylaminomethyl)-4,4'-isopropylidene-diphenol (0263).

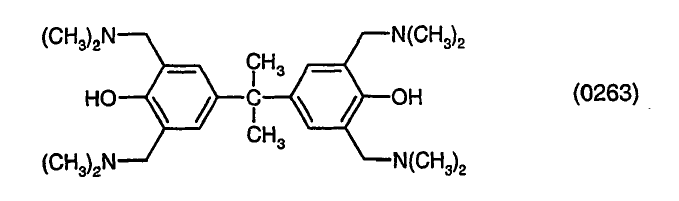

95 ml (1.14 mol) of aqueous formaldehyde (35 %) is added to a solution of 60 g (0.26 mol) of bisphenol A in 130 ml of ethanol. During the subsequent, slow addition of 150 ml (1.14 mol) of aqueous dimethylamine (d = 0.89; 40 %), the temperature rises from 22°C to 60°C. The slightly yellowish solution is then heated to reflux for 15 hours. After complete removal of the ethanol in vacuo, two liquid phases are formed. The addition of 400 ml of of n-hexane facilitates the phase separation, so that the upper product phase can easily be removed from the ethanol water layer. The product solution is dried over Na₂SO₄, filtered and the remaining solvent stripped-off in vacuo. The yellowish oily residue is treated again with 530 ml of n-hexane; while stirring the mixture the product crystallizes to give 60 g (0.13 mol) of the title compound as a white powder; molecular weight 456.68 (C₂₇H₄₄N₄O₂), m.p. 88 - 90°C. ¹H-NMR (400 MHz, CDCl₃, ppm): 1.61 (s, 6H), 2.26 (s, 24H), 3.48 (s, 8H), 6.83 (s, 4H), >10 (broad s, -OH).

### Example O: Preparation of 1-(N-morpholino-4-yl-methyl)-2-naphthol (0485).

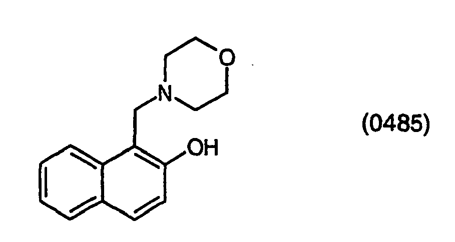

66 ml of aqueous formaldehyde (d = 1.09 g/ml; 35 %, 0.83 mol) is added to a solution of 120 g (0.83 mol) of β-naphthol in 500 ml of ethanol. During the subsequent, slow addition of 73 ml (0.83 mol) of morpholine (d = 1.0 g/ml) the temperature rises up to 38°C. The slightly brownish solution is then heated at 55°C for 3 hours. The product crystallizes during cooling, is filtered-off and washed with cold ethanol (raw yield: 185 g). After recrystallization from 700 ml of n-hexane, 177 g (0.73 mol) of the title compound is obtained as a white powder; molecular weight 243.31 (C₁₅H₁₇NO₂), m.p. 115 - 116°C. ¹H-NMR (400 MHz, CDCl₃, ppm): 2.68 (m, 4H), 3.8 (m, 4H), 4.2 (s, 2H), 7.1-7.85 (m, 6H), >10 (broad s, -OH).

### Example P: Preparation of n-butyl-bis-(2-hydroxy-1-naphthylmethyl)-amine (0486).

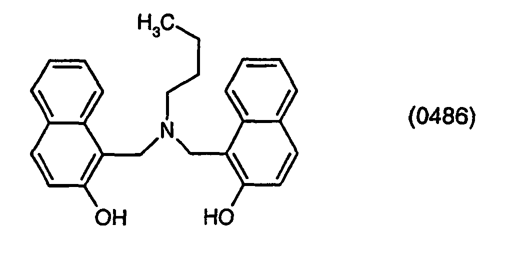

82 ml (1.04 mol) of aqueous formaldehyde (d = 1.09 g/ml; 35 %) is slowly added to a solution of 150 g (1.04 mol) of β-naphthol in 350 ml of methanol. During the subsequent, slow addition of 52 ml (0.52 mol) of n-butylamine in 350 ml of methanol the temperature rises to 32°C. Already during addition of the n-butylamine the product starts to crystallize slowly from the reaction mixture. The slightly brownish suspension is further stirred at room temperature for 30 hours. Afterwards the product is filtered-off, washed with 100 ml of methanol and dried [raw yield 164 g (0.42 mol)]. After recrystallization from 1400 ml of aceton/methanol =1:1, 140 g (0.36 mol) of the title compound is obtained as a white powder; molecular weight 385.51 (C₂₆H₂₇NO₂), m.p. 130 - 131°C. ¹H-NMR (400 MHz, CDCl₃, ppm): 0.6 -0.69 (t, 3H), 1.05 - 1.17 (m, 2H), 1.58 - 1.68 (m, 2H), 2.55 - 2.64 (m, 2H), 4.14 (s, 4H), 6.8 -7.75 (m, 12H), >10 (broad s, 2H -OH).

### Example Q: Preparation of 3,5-di-tert-butyl-2-hydroxy-benzyl-acetate (0487).

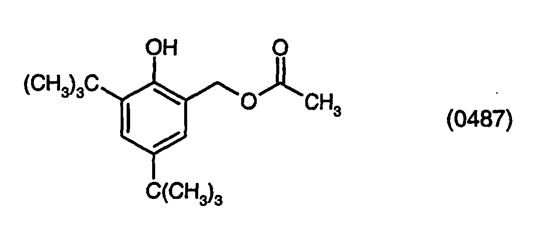

54.61 g (1.82 mol) of paraformaldehyde and 25 ml (0.242 mol; d = 0.704 g/ml) of diethylamine is added to a solution of 250 g (1.21 mol) of 2,4-di-tert-butyl phenol in 800 ml of acetic acid. The temperature increases slightly from 19 to 25°C. The mixture is heated to reflux for 40 hours. Afterwards, the excess of acetic acid is removed in vacuo, the yellow oily residue crystallizes on standing over night. The mixture is then treated with 100 ml of methanol for 2 hours, the crystals filtered-off, washed twice with 10 ml of very cold (-20 °C) methanol and dried in vacuo at 40°C to afford 124 g (0.45 mol) of the title compound as a white powder; molecular weight 278.39 (C₁₇H₂₆O₃), m.p. 71 - 72°C. ¹H-NMR (400 MHz, CDCl₃, ppm): 1.32 (s, 9H), 1.44 (s, 9H), 2.13 (s, 3H), 5.14 (s, 2H), 7.15 (m, 1 H), 7.4 (m, 1H), >10 (broad s, -OH).

### Example R: Preparation of 2,4-di-tert-butyl-6-methoxymethyl-phenol (0490).

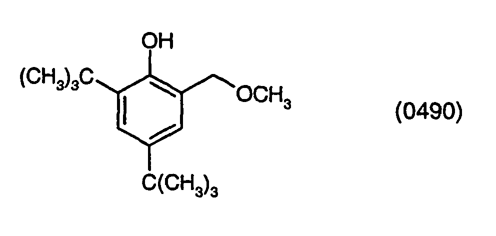

A solution of 100 g (0.36 mol) of acetic acid-3,5-di-tert-butyl-2-hydroxybenzyl-ester in 200 ml of methanol is stirred at 75°C under reflux for 26 hours. The solvent is then stripped-off in vacuo, the residue treated with 200 ml of n-hexane and extracted with 70 ml of water. The organic layer is dried over Na₂SO₄ and filtered; the solvent is again entirely removed in vacuo. The orange, oily residue slowly crystallizes overnight. The crystals are dissolved in approximately 100 ml of ethanol and re-precipitated by drop-wise addition of 20 ml of water. The white precipitate is filtered-off and washed with 60 ml of a mixture of water/ethanol (1/5) to give 37 g (0.147 mol) of the tile compound as a white powder: molecular weight 250.38 (C₁₆H₂₆O₂), m.p. 36 - 39°C. ¹H-NMR (400MHz, CDCl₃, ppm): 1.31 (s, 9H), 1.42 (s, 9H), 3.47 (s, 3H), 4.66 (s, 2H), 6.90 (m, 1 H), 7.29 (m,1H), >10 (broad s, -OH).

### Example S: Preparation of acetic acid-2-acetoxymethyl-4,6-di-tert-butyl-phenyl-ester (0603).

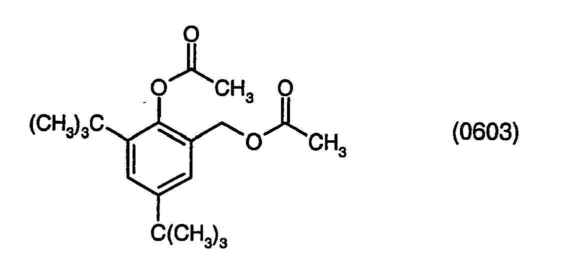

A solution of 200 g (0.72 mol) of 2,4-di-tert-butyl-6-dimethylaminomethyl-phenol in 200 ml (1.44 mol) of triethylamine and 500 ml (5.3 mol) of acetic acid anhydride is stirred at 140°C for 2 hours. After cooling to 40°C, the mixture is poured on ice/water and stirred for 2 hours. The product is then extracted with 300 ml of n-hexane, dried over Na₂SO₄ and filtered. The solvent and volatiles are removed in vacuo. The orange, oily residue is purified by distillation under reduced pressure to yield 162 g (0.51 mol) of the title compound as a faintly yellowish oil; molecular weight 320.43 (C₁₉H₂₈O₄), b.p. 121 °C (0.098 mbar). ¹H-NMR (400MHz, CDCl₃, ppm): 1.35 (s, 9H), 1.38 (s, 9H), 2.1 (s, 3H), 2.36 (s, 3H), 5.00 (s, 2H), 7.32 (m, 1 H), 7.45 (m, 1 H).

It is contemplated that "capping" off the phenolic -OH as in this Mannich base compound will result in another class of organic compounds that are active as stabilizers against aldehyde formation. Phenolic hydroxyls may be capped off by known methods, for example by acylating or alkylating. Acyl and alkyl groups are as defined herein.

### Example T: Preparation of 2,4-bis(n-octadecylthiomethyl)-6-methyl-phenol (1620).

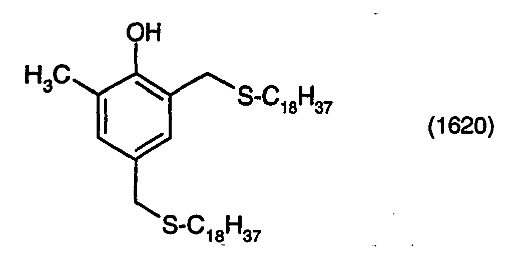

The title compound is prepared in accordance to U.S. 5,116,894; Example 1; after recrystallization, a white powder is obtained: m.p. 42 - 43°C, molecular weight 705.30 (C₄₅H₈₄S₂O).

### Example 1: Stabilization of poly(ethylene terephthalate) (PET).

Unstabilized commercial PET (CLEARTUF 8006, M&G) is used as a control PET. The PET as received from M&G had an initial AA (acetaldehyde) concentration of 0.4 ppm as reported by the supplier. Upon a single extrusion heat history, the unstabilized PET increases in acetaldehyde content to an average of 3.4 ppm, indicating that PET produces undesirable AA upon heated melt processing. When PET is extrusion compounded, a significant reduction in the amount of acetaldehyde (AA) is observed in samples stabilized with additives of the present invention compared to unstabilized PET. The % AA reduction is the amount less compared to the amount of AA in the control, all measured by GC-FID. The results are summarized in Table 1. Additive levels are in parts per million (ppm) based on PET.

**Table 1:**

| Formulation | Additive | Additive Level (ppm) | % AA Reduction | GC-FID avg. ppm, AA |
|---|---|---|---|---|
| Control | none | none | none | 3.41 |
| Example 1a | 1071 | 500 | 74 | 0.88 |
| Example 1b | 1071 | 5000 | 92 | 0.26 |

It is seen that the additives of the present invention provide significant reduction of acetaldehyde versus the control in PET.

### Example 2: Stabilization of poly(ethylene terephthalate) (PET).

Unstabilized commercial PET (CLEARTUF 8006, M&G) is used as a control PET. The PET as received from M&G had an initial AA concentration of 0.4 ppm as reported by the supplier. Upon a single extrusion heat history, the unstabilized PET increases in acetaldehyde (AA) content to an average of 2.8 ppm, indicating that PET produces undesirable AA upon heated melt processing. When PET is extrusion compounded, a significant reduction in the amount of acetaldehyde (AA) is observed in samples stabilized with additives of the present invention compared to unstabilized PET. The % AA reduction is the amount less compared to the amount of AA in the control, all measured by GC-FID. The results are disclosedd in Table 2. Additive levels are in parts per million (ppm) based on PET.

**Table 2:**

| Formulation | Additive | Additive Level (ppm) | % AA Reduction | GC-FID avg. ppm AA | Haze |
|---|---|---|---|---|---|
| Control | none | none | none | 2.84 | 2.3 |
| Example 2a | 1071 | 250 | 43.3 | 1.61 | 2.0 |
| Example 2b | 1071 | 500 | 65.5 | 0.98 | 1.7 |
| Example 2c | 1071 | 1000 | 85.9 | 0.40 | 1.7 |

### Example 3: Stabilization of poly(ethylene terephthalate) (PET).

An extruder evaluation as in the previous Examples is conducted. Upon a single extrusion heat history, the unstabilized PET increases in acetaldehyde (AA) content to an average of 3.34 ppm, indicating that PET produces undesirable AA upon heated melt processing. The additive compound 0611 is a thermally produced dimer from the compound 1071. The dimer itself is active in AA reduction by itself at 1000 ppm loading. Additive levels are in weight percent based on PET. The results are summerized in Table 3.

**Table 3:**

| Formulation | Additive | Additive Level (ppm) | % AA Reduction | GC-FID avg. ppm AA |
|---|---|---|---|---|
| Control 3a | none | none | none | 3.34 |
| Control 3b | amine^{a)} | 1000 | none | 4.40 |
| Control 3c | amine^{a)} | 2500 | none | 4.70 |
| Example 3a | 0611^{b)} | 1000 | 10.2 | 3.00 |
| Example 3b | 0611^{b)} | 1000 | 56.0 | 1.47 |
| | amine^{a)} | 500 | | |
| Example 3c | 0611^{b)} | 1000 | 58.7 | 1.38 |
| | amine^{a)} | 1000 | | |
| Example 3d | 0611^{b)} | 1000 | 42.8 | 1.91 |
| | amine^{a)} | 2000 | | |
| Example 3e | 0611^{b)} | 5000 | 88.6 | 0.38 |
| | amine^{a)} | 2500 | | |
| Example 3f | 0611^{b)} amine^{a)} | 5000 | 71.0 | 0.97 |
| | | 5000 | | |

| | | | | |
|---|---|---|---|---|
| a) amine is trimethylene-dipiperidine, available form Adrich Chem. Co., CAS# [16898-52-5]. b) 0611 is a thermal product of the Mannich base 1071 (Example A) with the formula 0611 | | | | |

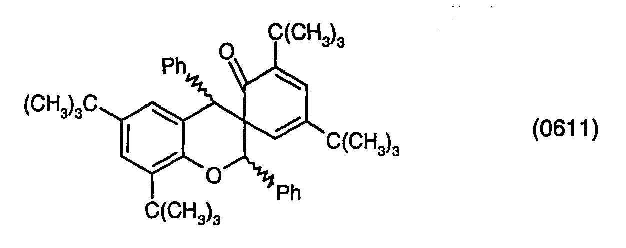

These results show that the thermal products of the present Mannich bases are effective as AA scavengers, especially in the presence of an amine.

### Example 4: Stabilization of poly(ethylene terephthalate) (PET).

In this study the efficacy of Mannich base compounds with either a 2-substitution or 4-substitution is evaluated. Upon a single extrusion heat history, the unstabilized PET increases in acetaldehyde (AA) content to an avg. of 3.07 ppm, indicating that PET produces undesirable AA upon heated melt processing. In all cases where compounds of the invention are evaluated, a high AA reduction is observed with either the 4-substituted or 2-substitued Mannich base compounds. The results are summarized in Table 4.

**Table 4:**

| Formulaton | Additive | Additive Level (ppm) | % AA Reduction | GC-FID avg. ppm AA |
|---|---|---|---|---|
| Control | none | none | none | 3.07 |
| Example 4a | 1071 | 1000 | 94.1 | 0.18 |
| Example 4b | 0888 | 1000 | 90.9 | 0.28 |
| Example 4c | 0888 | 5000 | 94.1 | 0.18 |
| Example 4d | 0867 | 1000 | 47.6 | 1.61 |
| Example 4e | 0868 | 5000 | 48.9 | 1.57 |
| Example 4f | 0858 | 1000 | 91.2 | 0.27 |
| Example 4g | 0858 | 5000 | 88.6 | 0.35 |

### Example 5: Stabilization of poly(ethylene terephthalate) (PET).

Unstabilized commercial PET (CLEARTUF 8006, M&G) is used as a control PET. Upon a single extrusion heat history, the unstabilized PET increases in acetaldehyde (AA) content to an average of 3.27 ppm, indicating that PET produces undesirable AA upon heated melt processing. When PET is extrusion compounded, a significant reduction in the amount of acetaldehyde (AA) is observed in samples stabilized with additives of the present invention compared to unstabilized PET. The % AA reduction is the amount less compared to the amount of AA in the control, all measured by GC-FID. The results are summarized in Table 5.

**Table 5:**

| Formulation | Additive | Additive Level (ppm) | % AA Reduction | GC-FID avg. ppm AA |
|---|---|---|---|---|
| Control | none | none | none | 3.27 |
| Example 5a | 1070 | 250 | 39.4 | 1.98 |
| Example 5b | 1070 | 500 | 65.4 | 1.13 |
| Example 5c | 1070 | 1000 | 80.7 | 0.63 |
| Example 5d | 1070 | 5000 | 96.3 | 0.12 |
| Example 5e | 1071 | 1000 | 83.8 | 0.53 |

### Example 6: Color stabilization of of poly(ethylene terephthalate) (PET) with a pigment.

In this example the b* color of the polyester is improved when a certain pigment is used in combination with an additive of the instant invention (compound 1071). The pigment is first prepared as a 0.025% masterbatch in Shell 8006 PET via extrusion compounding. The pigment is then let-down into virgin Shell 8006 PET, along with compound 1071, and extrusion compounded. Test plaques of 60 mm thickness are prepared by injection molding on a BOY 50 machine. Color (b*) is measured per the experimental. It is seen that a b* color value for the composition of PET, compound 1071 and Ciba Chromophtal Violet B pigment close to the control PET is achieved. The lower the b* color value, the less yellow or discolored is the PET. Ciba Chromophtal Violet B is of the dioxazine class. The results are summarized in Table 6.

**Table 6:**

| Formulation | Additive | Additive Level ppm | Color b* |
|---|---|---|---|
| Control 6a | none | none | 2.74 |
| Control 6b | 1071 | 500 | 4.24 |
| Example 6a | 1071 | 500 | 3.26 |
| | violet B | 2 | |
| Example 6b | 1071 | 500 | 1.68 |
| | Violet B | 5 | |
| Example 6c | 1071 | 500 | 0.83 |
| | Violet B | 7 | |
| Example 6d | 1071 | 500 | -1.20 |
| | Violet B | 10 | |

### Example 7: Color stabilization of poly(ethylene terephthalate) in the presence of a dye.

In this example the b* color of the polyester is improved when a certain dye is used in combination with the additive of the instant invention (compound 1071). The dye is first prepared as a 0.025% masterbatch in Shell 8006 PET via extrusion compounding. The dye is then let-down into virgin Shell 8006 PET, along with compound 1071, and extrusion compounded. Test plaques of 60 mm thickness are prepared by injection molding on a BOY 50 machine. Color (b*) is measured per the experimental. It is seen that a b* color value for the composition of PET, compound 1071 and Bayer Macrolex Violet B Gran, SV-13, close to the control PET is achieved. The lower the b* color value, the less yellow or discolored is the PET. The results are summarized in the Table 7.

**Table 7:**

| Formulation | Additive | Additive Level (ppm) | Color b* |
|---|---|---|---|
| Control 7a | none | none | 2.7 |
| Control 7b | 1071 | 500 | 4.2 |
| Example 7a | 1071 | 500 | 3.4 |
| | SV-13 | 2 | |
| Example 7b | 1071 | 500 | 1.8 |
| | SV-13 | 5 | |
| Example 7c | 1071 | 500 | 1.3 |
| | SV-13 | 7 | |
| Example 7d | 1071 | 500 | -0.5 |
| | SV-13 | 10 | |

### Example 8: Stabilization of poly(ethylene terephthalate) (PET).

Unstabilized commercial PET (CLEARTUF 8006, M&G) is used as a control PET. Upon a single extrusion heat history, the unstabilized PET increases in acetaldehyde (AA) content to an average of 4.21 ppm, indicating that PET produces undesirable AA upon heated melt processing. When PET is extrusion compounded, a significant reduction in the amount of acetaldehyde (AA) is observed in samples stabilized with additives of the present invention compared to unstabilized PET. The % AA reduction is the amount less compared to the amount of AA in the control, all measured by GC-FID. The results are summarized in the Table 8 below.

**Table 8:**

| Formulation | Additive | Additive Level (ppm) | % AA Reduction | GC-FID avg. ppm AA |
|---|---|---|---|---|
| Control | none | none | none | 4.21 |
| Example 8a | 1457 | 250 | 28.0 | 3.03 |
| Example 8b | 1457 | 1000 | 86.0 | 0.59 |
| Example 8c | 1457 | 2500 | 85.5 | 0.61 |
| Example 8d | 1402 | 250 | 41.3 | 2.47 |
| Example 8e | 1402 | 1000 | 87.9 | 0.51 |
| Example 8f | 1402 | 2500 | 90.3 | 0.41 |

### Example 9: Stabilization of poly(ethylene terephthalate) (PET).

Unstabilized commercial PET (CLEARTUF 8006, M&G) is used as a control PET. Upon a single extrusion heat history, the unstabilized PET increases in acetaldehyde (AA) content to an avg. of 5.20 ppm, indicating that PET produces undesirable AA upon heated melt processing. When PET is extrusion compounded, a significant reduction in the amount of acetaldehyde (AA) is observed in samples stabilized with additives of the present invention compared to unstabilized PET. The % AA reduction is the amount less compared to the amount of AA in the control, all measured by GC-FID. The results are summarized Table 9.

**Table 9:**

| Formulation | Additive | Additive Level (ppm) | % AA Reduction | GC-FID avg. ppm AA |
|---|---|---|---|---|
| Control | none | none | none | 5.20 |
| Example 9a | 1655 | 500 | 31.3 | 3.57 |
| Example 9b | 1655 | 1000 | 53.1 | 2.44 |
| Example 9c | 1655 | 2500 | 81.5 | 0.96 |

### Example 10: Stabilization of poly(ethylene terephthalate) (PET).

Unstabilized commercial PET (CLEARTUF 8006, M&G) is used as a control PET. Upon a single extrusion heat history, the unstabilized PET increases in acetaldehyde (AA) content to an avg. of 6.05 ppm, indicating that PET produces undesirable AA upon heated melt processing. When PET is extrusion compounded, a significant reduction in the amount of acetaldehyde (AA) is observed in samples stabilized with additives of the present invention compared to unstabilized PET. The % AA reduction is the amount less compared to the amount of AA in the control, all measured by GC-FID. The results are summarized in Table 10.

**Table 10:**

| Formulation | Additive | Additive Level (ppm) | %AA Reduction | GC-FID avg. ppm AA |
|---|---|---|---|---|
| Control | none | none | none | 6.05 |
| Example 10a | 1672 | 250 | 66.1 | 1.89 |
| Example 10b | 1672 | 500 | 89.4 | 0.59 |
| Example 10c | 1673 | 250 | 82.9 | 0.95 |
| Example 10d | 1673 | 500 | 95.7 | 0.24 |
| Example 10e | 1678 | 250 | 63.7 | 2.02 |
| Example 10f | 1678 | 500 | 94.3 | 0.32 |
| Example 10g | 1596 | 250 | 63.2 | 2.05 |
| Example 10h | 1596 | 500 | 77.7 | 1.24 |

The additives in Table 10 are highly effective and at low loading levels (250-500 ppm) which is advantageous.

### Example 11: Stabilization of poly(ethylene terephthalate) (PET).

This example illustrates the general concept where the novel compounds provide efficacy in reducing the acetaldehyde content in a lower molecular weight, non-bottle grade of PET. The utility of this example indicates that it is possible to take a lower molecular weight polyester such as the fiber grade of PET below and reduce the acetaldehyde content to a level approaching usefulness for the beverage bottling market. Unstabilized commercial PET (IMPET 100, Hoechst Celanese Corp., CAS# 25038-59-9) is used as a control PET. Upon a single extrusion heat history, the unstabilized PET increases in acetaldehyde (AA) content to an avg. of 4.21 ppm, indicating that PET produces undesirable AA upon heated melt processing. When PET is extrusion compounded, a significant reduction in the amount of acetaldehyde (AA) is observed in samples stabilized with additives of the present invention compared to unstabilized PET. The % AA reduction is the amount less compared to the amount of AA in the control, all measured by GC-FID. The results are summarized in Table 11.

**Table 11:**

| Formulation | Additive | Additive Level (ppm) | % AA Reduction | GC-FID avg. ppm AA |
|---|---|---|---|---|
| Example 11a | 1071 | 500 | 66.8 | 23.5 |
| Example 11b | 1071 | 1000 | 93.7 | 4.5 |

The IMPET 100 polyester is analyzed to contain approximately 154 ppm of acetaldehyde, as received and prior to any thermal processing. The compound of the instant invention (1071) provided excellent reduction in acetaldehyde content after thermal processing of the polyester.

### Example 12: Stabilization of poly(ethylene terephthalate) (PET).

Unstabilized commercial PET (CLEARTUF 8006, M&G) is used as a control PET. Upon a single extrusion heat history, the unstabilized PET increases in acetaldehyde (AA) content to an avg. of 3.79 ppm, indicating that PET produces undesirable AA upon heated melt processing. When PET is extrusion compounded, a significant reduction in the amount of acetaldehyde (AA) is observed in samples stabilized with additives of the present invention compared to unstabilized PET. The % AA reduction is the amount less compared to the amount of AA in the control, all measured by GC-FID. The results are summarized in Table 12.

**Table 12:**

| Formulation | Additive | Additive Level (ppm) | % AA Reduction | GC-FID avg. ppm AA |
|---|---|---|---|---|
| Control | none | none | none | 3.79 |
| Example 12a | 0263 | 125 | 48.0 | 1.97 |
| Example 12b | 0263 | 250 | 79.7 | 0.77 |
| Example 12c | 0263 | 500 | 89.4 | 0.40 |
| Example 12d | 0486 | 125 | 18.5 | 3.09 |
| Example 12e | 0486 | 250 | 34.8 | 2.47 |
| Example 12f | 0486 | 500 | 53.6 | 1.76 |
| Example 12g | 0485 | 125 | 29.8 | 2.66 |
| Example 12h | 0485 | 250 | 20.6 | 3.01 |
| Example 12i | 0485 | 500 | 37.5 | 2.37 |

### Example 13: Stabilization of poly(ethylene terephthalate) (PET).

The compounds of the present invention are incorporated into polyester with either a solid or liquid carrier as a masterbatch. Samples of PET (M&G Cleartuf® 8006) are admixed with the compounds 1070 and 1071, respectively, as dispersions in a liquid carrier, into an Arburg 420C injection molder operated at 268 - 271 °C. AA is measured on cryogenically ground molded preforms by gas chromatography. Significant reduction in AA formation is observed in molded preforms. Blow molding is done on a Sidel SBO-2/3, to produce 20 ounce bottles with mid-panel thickness of 0.012 inches. The b* yellowness color measurements are made on bottle sidewall cutouts. Bottle sidewall color is not changed significantly by the addition of the additives as a masterbatch. The results are summarized in Table 13.

**Table 13:**

| Formulation | Additive | Additive Level (ppm) | % AA Reduction | GC-FID avg. ppm AA | b* color bottle sidewall |
|---|---|---|---|---|---|
| Control | none | none | none | 10.15 | 2.64 |
| Example 13a | 1071 | 250 | 28.0 | 7.32 | 3.34 |
| Example 13b | 1071 | 500 | 70.6 | 2.98 | 3.48 |
| Example 13c | 1070 | 250 | 31.5 | 6.95 | 3.02 |
| Example 13d | 1070 | 500 | 63.1 | 3.75 | 3.30 |

### Example 14: Stabilization of poly(ethylene terephthalate) (PET) bottles.

The additives of the invention are incorporated into PET and injection molded into 24 gram weight bottle preforms which are in turn subsequently blow molded into 20 fluid ounce bottles. Measurement of AA in the preforms indicated that the additives are effective at reducing the level of AA to a significant extent as desired by the bottling industry. Measurement of 24 hour headspace AA in the freshly blown bottles (ASTM D4509) likewise indicates a significant reduction in AA.

Example 15: The previous Examples are repeated with the further inclusion of polyols selected from the group consisting of pentaerythritol, dipentaerythritol and trimethylolpropane. The co-use of the Mannich base compounds of this invention and a polyol provides significant reduction of acetaldehyde vs. a control sample of PET without any undesirable side effects.

Example 16: The previous Examples are repeated with the further inclusion of additives selected from the group consisting of the N,N-di(alkyl)hydroxylamine produced by the direct oxidation of N,N-di(hydrogenated tallow)amine (Irgastab^{®} FS-042), O-allyl-N,N-dioctadecylhydroxylamine, N-octadecyl-a-heptadecylnitrone, and Genox^{™} EP, a di(C₁₆-C₁₈)alkyl methyl amine oxide, CAS# 204933-93-7. The co-use of the Mannich bases of this invention and an additional additive as above provides significant reduction of acetaldehyde vs. a control sample of PET without any undesirable side effects.

Example 17: Polyamide 4; 6,6; 6; 12; and 6,4 molded articles, fibers and films and PET fibers and films, are prepared by melt extrusion with additives as in the previous Examples. Significant reduction in aldehydic contaminants is observed.

### Example 18: Stabilization of polyester during synthesis.

1621.3 g of ethylene glycol, 3338.5 g of terephthalic acid, 66.8 g of isophthalic acid, 1.36 g of antimony trioxide and 1000 ppm (0.1 %) of the stabilizer according to Table 14 are mixed within a metal container. The mixture is transferred into a 10 liter stainless steel reactor fitted with stirrer, refluxing unit and an outlet-die at the bottom of the reactor. The reaction mixture is heated to 250°C within 30 minutes. The pressure increases to 4 bars. A water/ethylene glycol mixture is distilled off during 3.5 hours. The temperature is increased consecutively to 280°C. During the next 5 hours the pressure is continuously reduced to further distill off water and ethylene glycol. The polyester product is then extruded through the bottom die, cooled to room temperature in a water bath and pelletized to yield clear PET granules. The Intrinsic Viscosity (I.V.) is measured by dissolving 1 g of formed the polyester in 100 g of a mixture of phenol/dichlorobenzene = 1 : 1. The viscosity of this solution is measured at 30°C in an Ubelodeviscosimeter and recalculated to the intrinsic viscosity. The results are summarized in Table 14.

**Table 14:**

| Formulation | Additive | Additive Level (ppm) | I.V. dl/g | GC-FID avg. ppm AA |
|---|---|---|---|---|
| Control | none | none | 0.75 | 170 |
| Example 18a | 1071 | 1000 | 0.45 | 53 |
| Example 18b | 0888 | 1000 | 0.33 | 30 |

## Claims

1. A composition, stabilized against the formation of aldehydic contaminants during melt processing of said composition, which comprises
(a) a polyester or polyamide, and
(b) an effective stabilizing amount of at least one effective stabilizing amount of at least one compound selected from the group consisting of the Mannich base compounds of formulae (Ia), (Ib), (IIa), (IIb), (IIc), (IIIa), (IIIb), (IIIc) (IVa), (IVb) and (IVc) 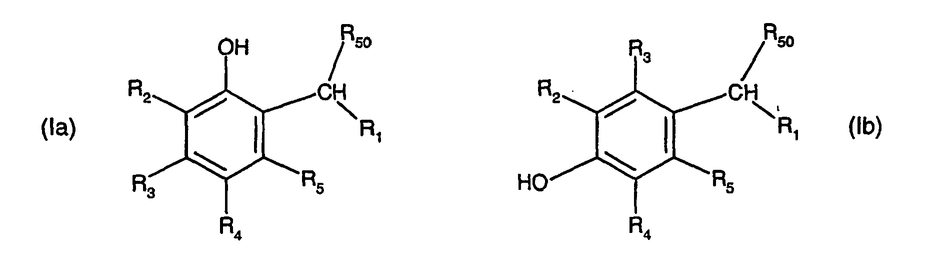 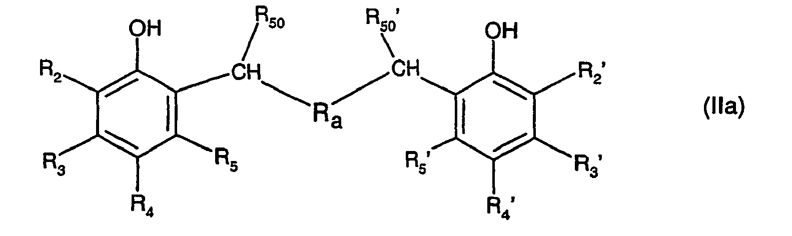 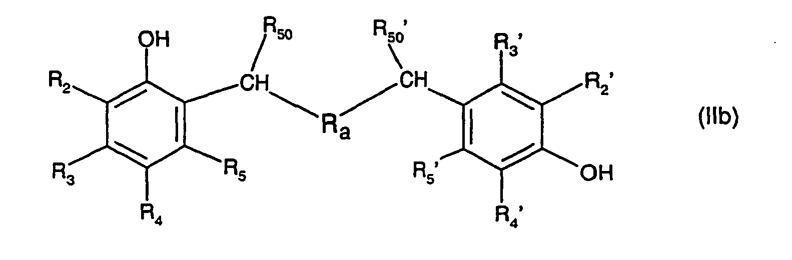 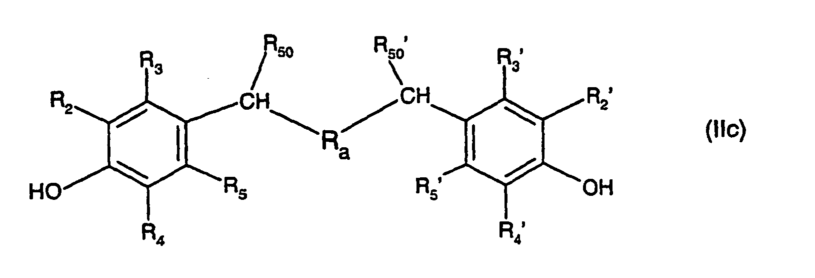 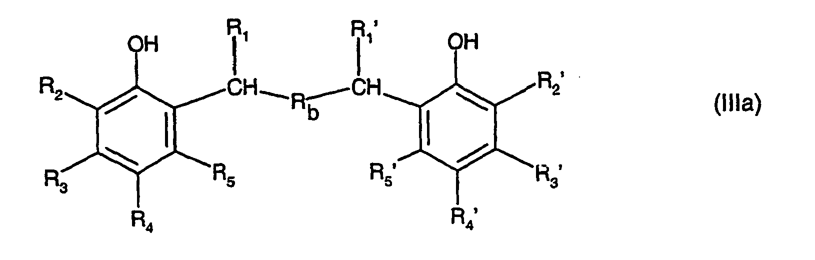 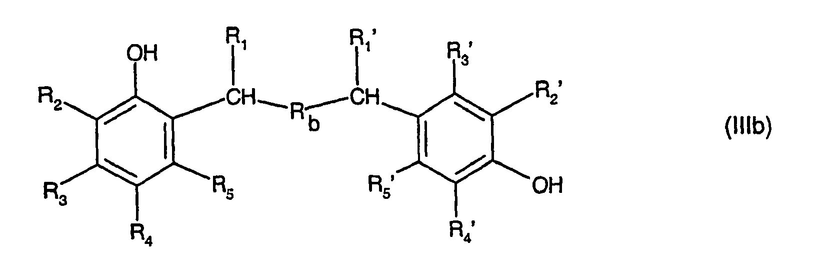 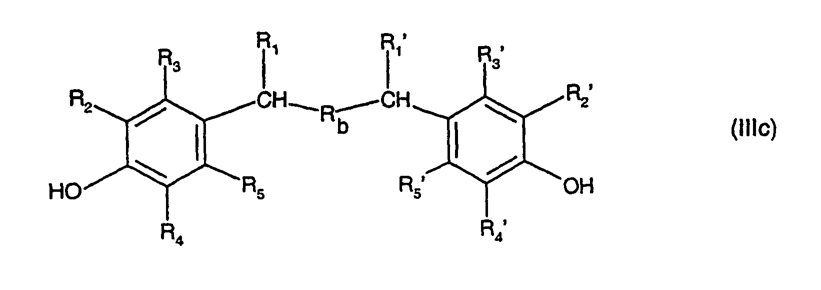 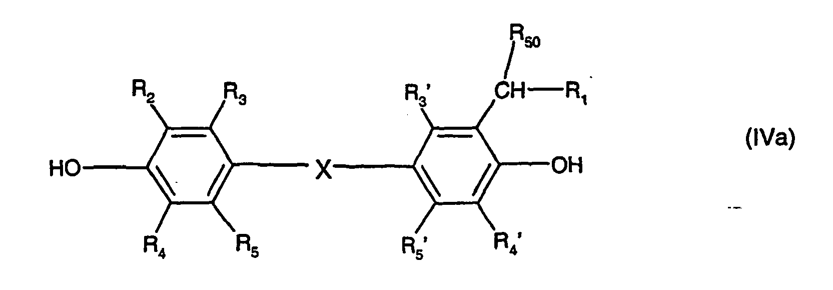 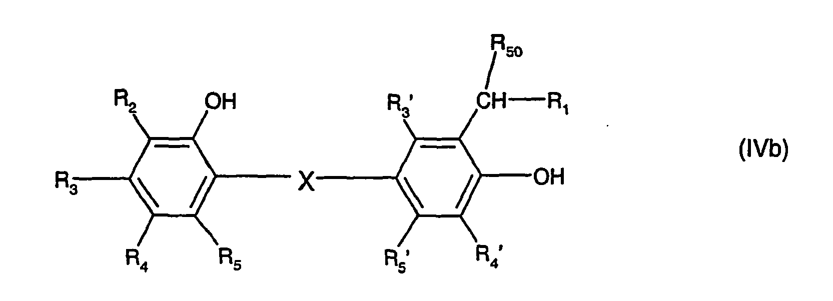 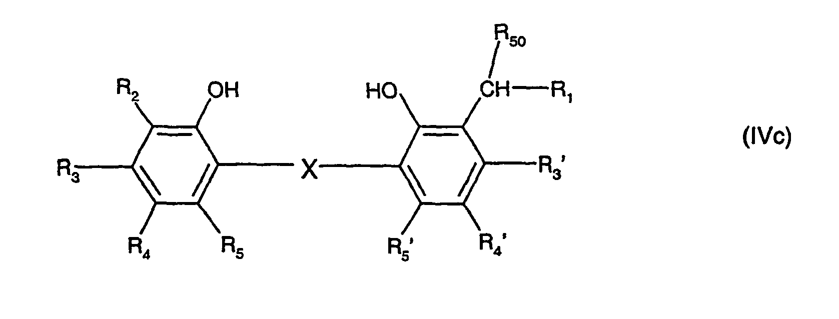
wherein
R₁ is hydrogen, hydroxy, C₁-C₂₅alkyl, C₇-C₉phenylalkyl, unsubstituted or C₁-C₄alkyl-substituted C₅-C₈cycloalkyl; naphthyl, phenanthryl, anthryl, 5,6,7,8-tetrahydro-2-naphthyl, thienyl, benzo[b]thienyl, naphtho[2,3-b]thienyl, thianthrenyl, furyl, benzofuryl, isobenzofuryl, dibenzofuryl, xanthenyl, phenoxathiinyl, pyrrolyl, imidazolyl, pyrazolyl, pyridinyl, pyrazinyl, pyrimidinyl, pyridazinyl, indolizinyl, isoindolyl, indolyl, indazolyl, purinyl, quinolizinyl, isoquinolyl, quinolyl, phthalazinyl, naphthyridinyl, quinoxalinyl, quinazolinyl, cinnolinyl, pteridinyl, carbazolyl, β-carbolinyl, phenanthridinyl, acridinyl, perimidinyl, phenanthrolinyl, phenazinyl, isothiazolyl, phenothiazinyl, isoxazolyl, furazanyl, biphenyl, terphenyl, fluorenyl or phenoxazinyl, each of which is unsubstituted or substituted by fluorine, hydroxy, C₁-C₁₈alkyl, C₁-C₁₈alkoxy, C₁-C₁₈alkylthio, di(C₁-C₄alkyl)amino, phenyl, benzyl, benzoyl or by benzoyloxy or R₁ is a radical of formula 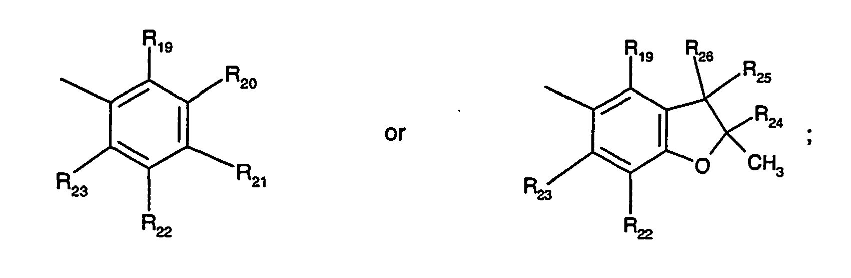
**R₂, R₃, R₄ and R₅** are each independently hydrogen, fluorine, hydroxy, C₁-C₂₅alkyl, C₁-C₂₅alkenyl, C₇-C₉phenylalkyl, C₇-C₉phenylalkenyl, unsubstituted or C₁-C₄alkyl- or alkenyl- substituted phenyl, unsubstituted or C₁-C₄alkyl-substituted C₅-C₈cycloalkyl, C₁-C₁₈alkoxy, C₁-C₁₈alkylthio, C₁-C₄alkylamino, di(C₁-C₄alkyl)amino, C₁-C₂₅alkanoyloxy, C₁-C₂₅alkanoylamino, C₃-C₂₅-alkanoyloxy interrupted by oxygen, sulfur or by >NR₈; -(CH₂)ₚ-C(O)OR₈, C₆-C₉cycloalkylcarbonyloxy, benzoyloxy or C₁-C₁₂alkyl-substituted benzoyloxy, or adjacent radicals R₂ and R₃ or R₃ and R₄ or R₄ and R₅, together with the carbon atoms to which they are bonded, form a benzo ring, or R₂ and R₄ may each be -(CH₂)ₚ-COR₉ or -(CH₂)_{q}OH, or
**R₂ and R₄** may each be -CH(R₁)R₅₀;
**R₁', R₂', R₃', R₄'** and **R₅'** are independently defined as for R₁, R₂, R₃, R₄ and R₅ respectively; **Rₐ** is C₁-C₁₈alkylene; C₂-C₁₈alkylene interrupted by oxygen, sulfur or by >NR₁₄; or Rₐ is C₂-C₂₀alkylidene, C₇-C₂₀phenylalkylidene, C₅-C₈cycloalkylene, C₇-C₈bicycloalkylene, phenylene or naphthylene each unsubstituted or substituted by C₁-C₄alkyl or by fluorine; or is -R₆-Y-R₇-;
**R_{b}** is -NR₅₃, C₁-C₂₅alkylenediimino, C₁-C₂₅alkylenetriimino, C₁-C₂₅alkylenetetraimino, or C₅-C₈cycloalkylenediimino;
**X** is defined as for Rₐ or is a direct bond, -CR₁R₂-, -O-, -NR₁₀- or -S-, or X is phenylene substituted by R₂, R₃, R₄ and R₅, or X is alkylene substituted by -CF₃, C₁-C₁₂alkyl or phenyl, or X is a C₅-C₈cycloalkylene ring unsubstituted or substituted by 1 to 3 C₁-C₄alkyl groups;
**Y** is a direct bond, oxygen, sulfur or -NR₁₀-;
**R₆ and R₇** are each independently of the other phenylene or naphthylene each unsubstituted or substituted by C₁-C₄alkyl;
**R₈** is C₁-C₂₅alkyl;
**R₉** is hydroxy, 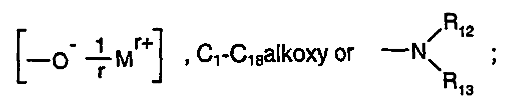
**R₁₀** is hydrogen, hydroxy, C₁-C₂₅alkyl or said alkyl unsubstituted or substituted by -OH, -OR₈, -NH(R₈) or -N(R₈)₂; C₂-C₂₅alkyl interrupted by oxygen or by sulfur, C₇-C₉phenylalkyl, unsubstituted or C₁-C₄alkyl-substituted C₅-C₈cycloalkyl, or a dendrimeric, oligomeric or polymeric C₄-C₁₀ohydrocarbon radical;
**R₁₂** and **R₁₃** are each independently of the other hydrogen or C₁-C₁₈alkyl;
**R₁₄** is hydrogen or C₁-C₁₈alkyl;
**R₁₉, R₂₀, R₂₁, R₂₂** and **R₂₃** are each independently hydrogen, cyano, perfluoroalkyl of 1 to 12 carbon atoms, fluoro, chloro, hydroxy, C₁-C₂₅alkyl; C₂-C₂₅alkyl interrupted by oxygen, sulfur or by >NR₈; C₁-C₂₅alkoxy; C₂-C₂₅alkoxy interrupted by oxygen, sulfur or by >NR₈; C₁-C₄alkylamino, di(C₁-C₄alkyl)amino, C₁-C₂₅alkanoyl, C₁-C₂₅alkanoyloxy, C₁-C₂₅alkanoylamino; C₁-C₂₅alkylthio, C₇-C₉phenylalkyl, C₇-C₉phenylalkoxy, unsubstituted or C₁-C₄alkyl-substituted phenyl; unsubstituted or C₁-C₄alkyl-substituted phenoxy; unsubstituted or C₁-C₄alkyl-substituted C₅-C₈cycloalkyl; unsubstituted or C₁-C₄alkyl-substituted C₅-C₈cycloalkoxy; C₃-C₂₅alkanoyl interrupted by oxygen, sulfur or by >NR₈; C₁-C₂₅alkanoylcarbonyl; C₃-C₂₅alkanoylcarbonyl interrupted by oxygen, sulfur or by >NR₈; C₁-C₂₅alkylaminocarbonyl; C₃-C₂₅alkylaminocarbonyl interrupted by oxygen, sulfur or by >NR₈; di-C₁-C₂₅alkylaminocarbonyl; di-C₃-C₂₅alkylaminocarbonyl interrupted by oxygen, sulfur or by >NR₈; C₁-C₂₅alkanoyloxy; C₃-C₂₅alkanoyloxy interrupted by oxygen, sulfur or by >NR₈; C₁-C₂₅alkanoylamino, C₆-C₉cycloalkylcarbonyl, C₆-C₉cycloalkylcarbonyloxy, benzoyl or C₁-C₁₂alkyl-substituted benzoyl; benzoyloxy or C₁-C₁₂alkyl-substituted benzoyloxy; 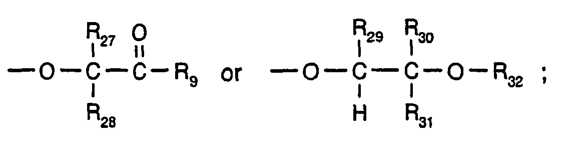
**R**_{**2**4} is hydrogen, C₁-C₄alkyl, or unsubstituted or C₁-C₄alkyl-substituted phenyl;
**R₂₅ and R₂₆** are hydrogen, C₁-C₄alkyl or phenyl, with the proviso that at least one of the radicals R₂₅ and R₂₆ is hydrogen;
**R₂₇ and R₂₈** are each independently of the other hydrogen, C₁-C₄alkyl or phenyl;
**R₂₉** is hydrogen or C₁-C₄alkyl;
**R₃₀** is hydrogen, unsubstituted or C₁-C₄alkyl-substituted phenyl; C₁-C₂₅alkyl; C₂-C₂₅alkyl interrupted by oxygen, sulfur or by >NR₈; C₇₋C₉phenylalkyl unsubstituted or substituted on the phenyl radical by from 1 to 3 C₁-C₄alkyl groups; or C₇-C₂₅phenylalkyl interrupted by oxygen, sulfur or by >NR₈ and unsubstituted or substituted on the phenyl radical by from 1 to 3 C₁-C₄alkyl groups;
**R₃₁** is hydrogen or C₁-C₄alkyl;
**R₃₂** is hydrogen, C₁-C₂₅alkanoyl; C₃-C₂₅alkanoyl interrupted by oxygen, sulfur or by >NR₈; C₂-C₂₅alkanoyl substituted by a di(C₁-C₆alkyl) phosphonate group; C₆-C₉cycloalkylcarbonyl, thenoyl, furoyl, benzoyl or C₁-C₁₂alkyl-substituted benzoyl, 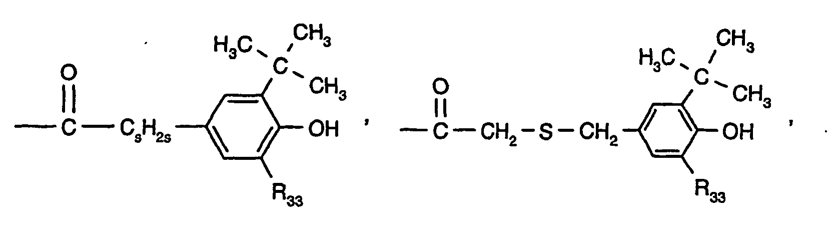 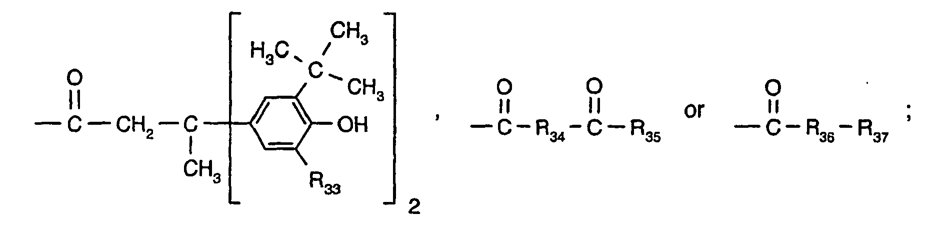
**R₃₃** is hydrogen or C₁-C₈alkyl;
**R₃₄** is a direct bond, C₁-C₁₈alkylene; C₂-C₁₈alkylene interrupted by oxygen, sulfur or by >NR₈;
C₂-C₂₀alkylidene, C₇-C₂₀phenylalkylidene, C₅-C₈cycloalkylene, C₇-C₈bicycloalkylene, unsubstituted or C₁-C₄alkyl-substituted phenylene, 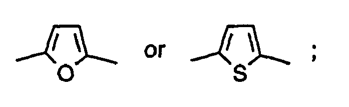
**R₃₅** is hydroxy, 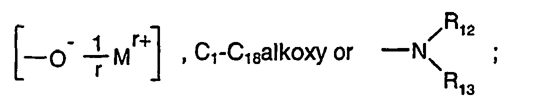
**R₃₆** is oxygen, 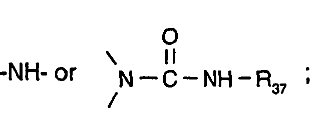
**R₃₇** is C₁-C₁₈alkyl or phenyl;
**R₅₀** is -OR₅₁, -O-C(O)-R₅₁, -SR₅₂, -S(O)R₅₂, -S(O)₂R₅₂, -N(H)R₅₃, pyrrolino, pyrrolidino, 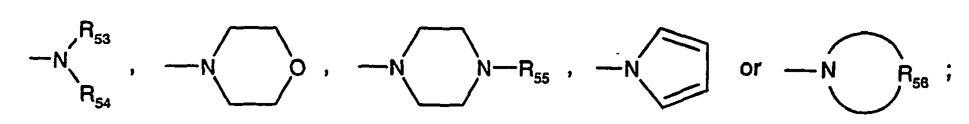
**R₅₀'** is independently defined as for R₅₀;
**R₅₁** is C₁-C₂₅alkyl, unsubstituted or substituted by -OH, -OR₈, -NH(R₈) or -N(R₈)₂; C₂-C₂₅alkyl interrupted by oxygen or by sulfur; C₇-C₉phenylalkyl, unsubstituted or C₁-C₄alkyl-substituted C₅-C₈cycloalkyl; unsubstituted or C₁-C₄alkyl-substituted phenyl;
**R₅₂** is C₁-C₂₅alkyl, unsubstituted or substituted by -OH, -OR₈, -NH(R₈) or -N(R₈)₂; C₂-C₂₅alkyl interrupted by oxygen or by sulfur; C₇-C₉phenylalkyl, unsubstituted or C₁-C₄alkyl-substituted C₅-C₈cycloalkyl; unsubstituted or C₁-C₄alkyl-substituted phenyl;
**R₅₃ and R₅₄** are each independently of the other hydrogen, hydroxy; C₁-C₂₅alkyl, unsubstituted or substituted by -OH, -OR₈, -NH(R₈) or -N(R₈)₂; C₂-C₂₅alkyl interrupted by oxygen or by sulfur; C₇-C₉phenylalkyl, unsubstituted or C₁-C₄alkyl-substituted C₅-C₈cycloalkyl; or a dendrimeric, oligomeric or polymeric C₄-C₁₀₀hydrocarbon radical;
**R₅₅** is C₁-C₂₅alkyl; C₂-C₂₅alkyl interrupted by oxygen or by sulfur; C₇-C₉phenylalkyl, unsubstituted or C₁-C₄alkyl-substituted C₅-C₈cycloalkyl; unsubstituted or C₁-C₄alkyl-substituted phenyl;
**R₅₆** is unsubstituted or C₁-C₄alkyl-substituted C₂-C₁₂alkylene;
**M** is an r-valent metal cation;
**p** is 0, 1 or 2;
**q** is 1, 2, 3, 4, 5 or 6;
**r** is 1, 2 or 3; and
**s** is 0, 1 or 2.

2. A composition according to claim 1 wherein component (b) is a compound selected from the group consisting of the Mannich base compounds of formulae (Ia), (Ib), (IIa), (IIb) and (IIc).

3. A composition according to claim 1 wherein the polyester or polyamide of component (a) is 95-99.99 % by weight and the stabilizers of component (b), in total, are 5 to 0.01 % by weight, based on the total weight of (a) and (b).

4. A composition according to claim 1 wherein the polyester of component (a) is poly(ethylene terephthalate) PET or poly(ethylene 2,6-naphthalene-2,6-dicarboxylate).

5. A composition according to claim 1 in which in the compounds of formulae (Ia), (Ib), (IIa), (IIb), (IIc), (IIIa), (IIIb), (IIIc), (IVa), (IVb) and (IVc)
R₁ is hydrogen, C₁-C₂₅alkyl or C₁-C₁₈alkylene;
Rₐ is C₁-C₁₈alkylene, phenylene or naphthylene each unsubstituted or substituted by C₁-C₄alkyl or by fluorine; or is -R₆-Y-R₇-;
R_{b} is -NR₅₃, C₁-C₂₅alkylenedimino or C₅-C₈cycloalkylenediimino; and
X is C₁-C₁₈alkylene, -O-, -NR₁₀- or -S-.

6. A composition according to claim 1 in which R₂, R₃, R₄ and R₅ are each independently hydrogen, fluorine, hydroxy or C₁-C₂₅alkyl.

7. A composition according to claim 1 in which R₂, R₃, R₄ and R₅ are each hydrogen or tert-butyl.

8. A composition according to claim 1 in which the compounds of formulae (Ia)-(IVc) are selected from the group consisting of
2,4-di-tert-butyl-6-(phenyl-piperidin-1-yl-methyl)-phenol,
2,4-di-tert-butyl-6-(dimethylamino-phenyl-methyl)-phenol,
2,6-bis-dimethylaminomethyl-4-(1,1,3,3-tetramethyl-butyl)-phenol,
2,4-di-tert-butyl-6-piperidin-1-ylmethyl-phenol,
2,6-di-tert-butyl-4-(phenyl-piperidin-1-yl-methyl)-phenol,
2,6-di-tert-butyl-4-piperidin-1-yl-methyl-phenol,
3-[3-tert-Butyl-4-hydroxy-5-(phenyl-piperidin-1-yl-methyl)-phenyl]-propionic acid methyl ester,
2,4-di-tert-butyl-6-dimethylaminomethyl-phenol,
2,4-di-tert-butyl-6-N-morpholino-4-ylmethyl-phenol,
2,4-di-tert-butyl-6-di-n-butylaminomethyl-phenol,
2,4-di-tert-butyl-6-cyclohexylaminomethyl-phenol,
2,6-bis-dimethylaminomethyl-4-(1,1,3,3-tetramethyl-butyl)-phenol,
2,4,6-tris-dimethylaminomethyl-phenol,
2,4-bis-dimethylaminomethyl-6-methyl-phenol,
2,6,2',6'-tetrakis(dimethylaminomethyl)-4,4'-isopropylidene-diphenol,
1-(N-morpholino-4-yl-methyl)-2-naphthol,
n-butyl-bis-(2-hydroxy-1-naphthylmethyl)-amine,
3,5-di-tert-butyl-2-hydroxy-benzyl-acetate,
2,4-di-tert-butyl-6-methoxymethyl-phenol and
2,4-bis-(n-octadecylthiomethyl)-6-methyl-phenol.

9. A mono- or multi-layered plastic container or film, stabilized against the formation of aldehydic contaminants during melt processing of said container or film, comprising at least one layer which comprises (a) a polyester or polyamide, and (b) an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc) according to claim 1.

10. A plastic container according to claim 9 which is a rigid bottle.

11. A process for preventing the formation of aldehydic contaminants during melt processing of a polyester or polyamide which comprises incorporating into said polyester or polyamide an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc) according to claim 1.

12. A composition, stabilized against the formation of aldehydic contaminants during melt processing of said composition, which comprises
(a) a polyester or polyamide, and
(b) an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc) according to claim 1; and optionally
(c) an effective stabilizing amount of a polymer which is poly(vinyl alcohol) or an ethylene/vinyl alcohol copolymer; and optionally
(d) an effective stabilizing amount of a polyhydric alcohol; and optionally
(e) an effective stabilizing amount of a polymer which is polyacrylamide, polymethacrylamide or an acrylamide or methacrylamide copolymer with at least one ethylenically unsaturated comonomer; and optionally
(f) an effective stabilizing amount of at least one compound selected from the group consisting of
i.) hydroxylamine stabilizers,
ii.) substituted hydroxylamine stabilizers,
iii.) nitrone stabilizers, and
iv.) amine oxide stabilizers; and optionally
(g) an effective stabilizing amount of at least one polymer or copolymer derived from at least one 2-propenoic acid ester monomer wherein the polyhydric alcohol of (d) is of the formula G-(OH)ₐ where a is 2 to 4000, and G is a hydrocarbyl moiety, and wherein the polymer or copolymer of component (g) is of the formula 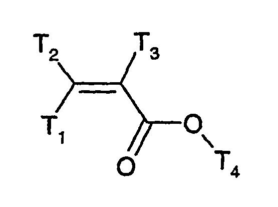
where T₁, T₂ and T₃ are independently hydrogen, straight or branched chain alkyl of 1 to 24 carbon atoms, cycloalkyl of 5 to 12 carbon atoms, aralkyl of 7 to 15 carbon atoms, or said alkyl, cycloalkyl or aralkyl which is further substituted by one or more -OT₅, -NT₆T₇, -CO₂T₈ or -CONT₉T₁₀ wherein T₅, T₆, T₇, T₈, T₉, and T₁₀ are independently hydrogen or straight or branched chain alkyl of 1 to 18 carbon atoms; or T₁, T₂, T₃ are independently a group -CO₂T₄,
T₄ is a polyhydric alcohol substituent of the formula -E-(OH)ₐ where a is 2 to 4000, and E is a hydrocarbylene moiety.

13. A composition according to claim 12 in which the alcohols of component (d) are selected from the group consisting of pentaerythritol, dipentaerythritol and trimethylolpropane and the compounds of component (f) are selected from the group consisting of the N,N-di(alkyl)-hydroxylamine produced by the direct oxidation of N,N-di(hydrogenated tallow)amine, O-allyl-N,N-dioctadecylhydroxylamine, N-octadecyl-α-heptadecylnitrone and di(C₁₆-C₁₈)alkyl methyl amine oxide.

14. A composition, stabilized against the formation of aldehydic contaminants during melt processing of said composition, which comprises
(a) a polyester or polyamide, and
(b) an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc) according to claim 1, and
(c) at least one compound selected from the group consisting of the amine compounds.

15. A composition, stabilized against the formation of aldehydic contaminants during melt processing of said composition, which comprises
(a) a polyester or polyamide, and
(b) an effective stabilizing amount of at least one compound selected from the group consisting of the thermal products of the Mannich base compounds of formulae (Ia), (Ib), (IIa), (IIb), (IIc), (IIIa), (IIIb), (IIIc), (IVa), (IVb) and (IVc) according to claim 1, and
(c) at least one compound selected from the group consisting of the amine compounds.

16. A composition, stabilized against the formation of aldehydic contaminants and against yellowing during melt processing of said composition, which comprises
(a) a polyester or polyamide, and
(b) an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc) according to claim 1, and
(c) one or more colorants selected from the group consisting of pigments and dyes.

17. A fiber, film or molded article stabilized against the formation of aldehydic contaminants during melt processing of said fiber, film or article, which comprises
(a) a polyester or polyamide, and
(b) an effective stabilizing amount of at least one compound selected from the group consisting of the Mannich base compounds of formulae (Ia), (Ib), (IIa), (IIb), (IIc), (IIIa), (IIIb), (IIIc), (IVa), (IVb) and (IVc) according to claim 1.

18. A process for the preparation of a stabilized polyester or polyamide that is low in the generation of aldehydes during subsequent melt processing, which process comprises preparing the polyester or polyamide from its monomer components in the presence of an effecttive amount of a stabilizer selected from the group consisting of the Mannich base compounds of formulae (Ia), (Ib), (IIa), (IIb), (IIc), (IIIa), (IIIb), (IIIc), (IVa), (IVb) and (IVc) according to claim 1.

19. A process according to claim 18 for the preparation of a stabilized polyester that is low in the generation of aldehydes during subsequent melt processing, which process comprises reacting one or more diacids with one or more diols in an esterification process, and/or one or more diesters with one or more diols in a transesterification process in the presence of an effective amount of a stabilizer selected from the group consisting of the Mannich base compounds of formulae (Ia), (Ib), (IIa), (IIb), (IIc), (IIIa), (IIIb), (IIIc), (IVa), (IVb) and (IVc).

20. A polyester or a polyamide obtained by the process according to claim 18.

21. Use of component (b) according to claim 1 for preventing the formation of aldehydic contaminants during melt processing of a polyester or a polyamide.

## Patentansprüche

1. Zusammensetzung, stabilisiert gegen die Bildung von Aldehydverunreinigungen während des Schmelzverarbeitens der Zusammensetzung, umfassend
(a) einen Polyester oder ein Polyamid, und
(b) eine effektive stabilisierende Menge mindestens einer Verbindung, ausgewählt aus der Gruppe, bestehend aus den Mannich-Basen-Verbindungen der Formeln (Ia), (Ib), (IIa), (IIb), (IIc), (IIIa), (IIIb), (IIIc) (IVa), (IVb) und (IVc) 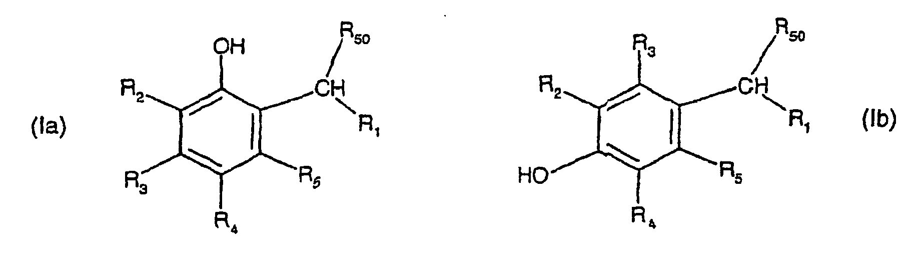 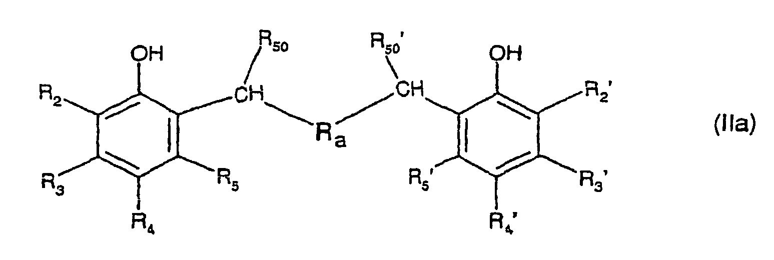 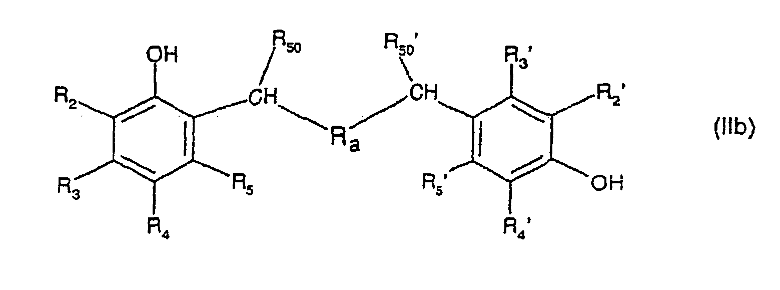 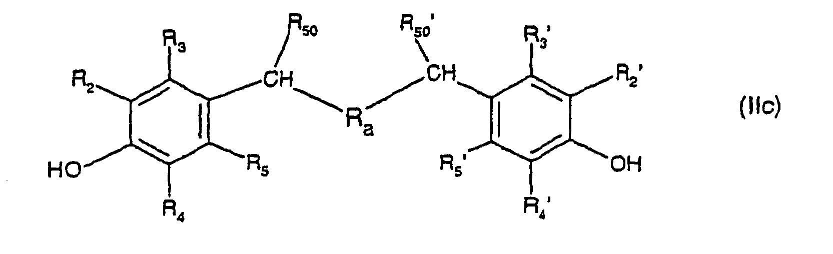 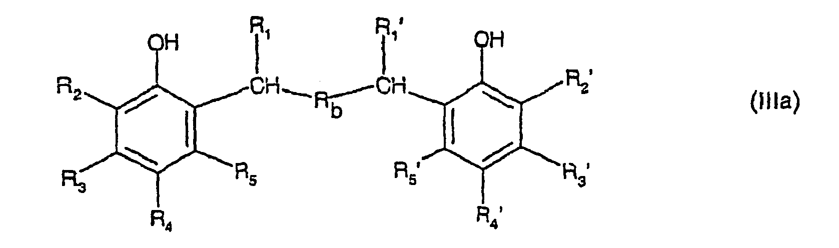 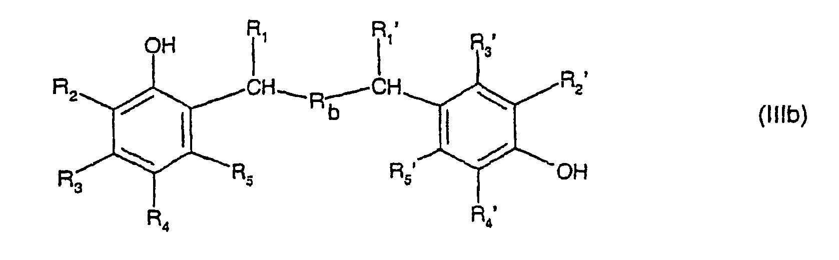 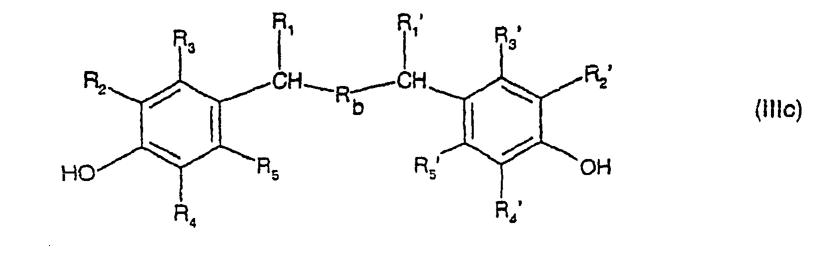 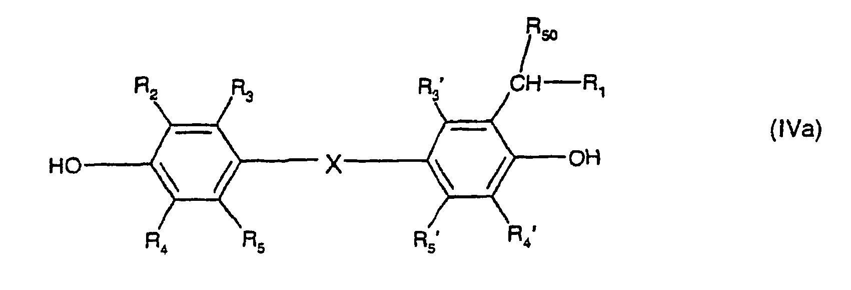 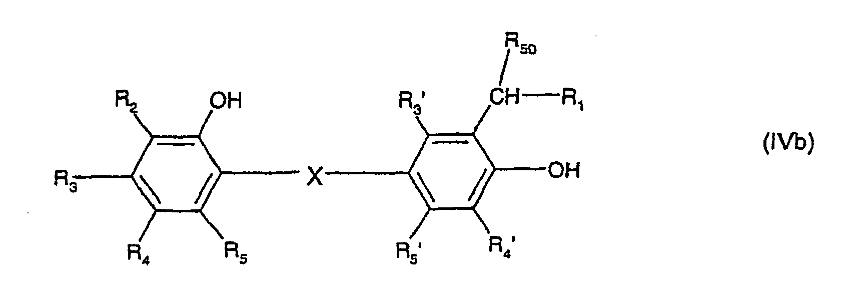 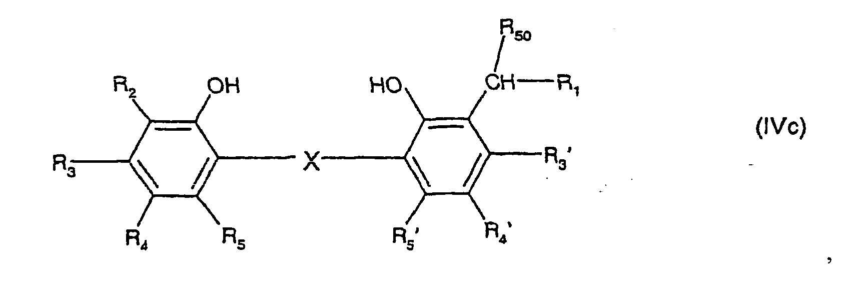
worin
R₁ Wasserstoff, Hydroxy, C₁-C₂₅-Alkyl, C₇-C₉-Phenylalkyl, unsubstituiertes oder C₁-C₄-Alkyl-substituiertes C₅-C₈-Cycloalkyl; Naphthyl, Phenanthryl, Anthryl, 5,6,7,8-Tetrahydro-2-naphthyl, Thienyl, Benzo[b]thienyl, Naphtho[2,3-b]thienyl, Thianthrenyl, Furyl, Benzofur-yl, Isobenzofuryl, Dibenzo-furyl, Xanthenyl, Phenoxathiinyl, Pyrrolyl, Imidazolyl, Pyrazolyl, Pyridinyl, Pyrazinyl, Pyrimidinyl, Pyridazinyl, Indolizinyl, Isoindolyl, Indolyl, Indazolyl, Purinyl, Chinolizinyl, Isochinolyl, Chinolyl, Phthalazinyl, Naphthyridinyl, Chinoxalinyl, Chinazolinyl, Cinnolinyl, Pteridinyl, Carbazolyl, β-Carbolinyl, Phenanthridinyl, Acridinyl, Perimidinyl, Phenanthrolinyl, Phenazinyl, Isothiazolyl, Phenothiazinyl, Isoxazolyl, Furazanyl, Biphenyl, Terphenyl, Fluorenyl oder Phenoxazinyl ist, wobei jedes unsubstituiert oder durch Fluor, Hydroxy, C₁-C₁₈-Alkyl, C₁-C₁₈-Alkoxy, C₁-C₁₈-Alkylthio, Di(C₁-C₄-alkyl)amino, Phenyl, Benzyl, Benzoyl oder durch Benzoyloxy substituiert ist, oder R₁ ein Rest der Formel 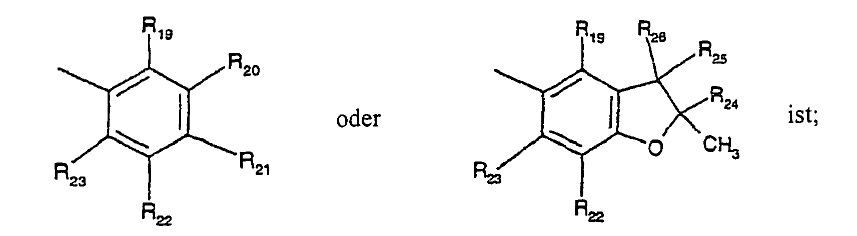
R₂, R₃, R₄ und R₅ jeweils unabhängig Wasserstoff, Fluor, Hydroxy, C₁-C₂₅-Alkyl, C₁-C₂₅-Alkenyl, C₇-C₉-Phenylalkyl, C₇-C₉-Phenylalkenyl, unsubstituiertes oder C₁-C₄-Alkyl- oder -Alkenyl-substituiertes Phenyl, unsubstituiertes oder C₁-C₄-Alkyl-substituiertes C₅-C₈-Cycloalkyl, C₁-C₁₈-Alkoxy, C₁-C₁₈-Alkylthio, C₁-C₄-Alkylamino, Di(C₁-C₄-alkyl)amino, C₁-C₂₅-Alkanoyloxy, C₁-C₂₅-Alkanoylamino, C₃-C₂₅-Alkanoyloxy, das durch Sauerstoff, Schwefel oder durch >NR₈ unterbrochen ist; -(CH₂)ₚ-C(O)OR₈, C₆-C₉-Cycloalkylcarbonyloxy, Benzoyloxy oder C₁-C₁₂-Alkyl-substituiertes Benzoyloxy sind, oder nachbarständige Reste R₂ und R₃ oder R₃ und R₄ oder R₄ und R₅ zusammen mit den Kohlenstoffatomen, an die sie gebunden sind, einen Benzoring bilden, oder R₂ und R₄ jeweils -(CH₂)ₚ-COR₉ oder -(CH₂)_{q}OH sein können, oder
R₂ und R₄ jeweils -CH(R₁)R₅₀ sein können;
R₁', R₂', R₃', R₄' und R₅' unabhängig wie für R₁, R₂, R₃, R₄ bzw. R₅ definiert sind;
Rₐ C₁-C₁₈-Alkylen; C₂-C₁₈-Alkylen, das durch Sauerstoff, Schwefel oder durch >NR₁₄ unterbrochen ist, ist; oder Rₐ C₂-C₂₀-Alkyliden, C₇-C₂₀-Phenylalkyliden, C₅-C₈-Cycloalkylen, C₇-C₈-Bicycloalkylen, Phenylen oder Naphthylen ist, jeweils unsubstituiert oder durch C₁-C₄-Alkyl oder durch Fluor substituiert; oder -R₆-Y-R₇- ist;
R_{b} -NR₅₃, C₁-C₂₅-Alkylendiimino, C₁-C₂₅-Alkylentriimino, C₁-C₂₅-Alkylentetraimino oder C₅-C₈-Cycloalkylendiimino ist;
X wie für Rₐ definiert ist oder eine direkte Bindung, -CR₁R₂-, -O-, -NR₁₀- oder -S- ist, oder X Phenylen ist, das durch R₂, R₃, R₄ und R₅ substituiert ist, oder X Alkylen ist, das durch -CF₃, C₁-C₁₂-Alkyl oder Phenyl substituiert ist, oder X ein C₅-C₈-Cycloalkylenring ist, unsubstituiert oder durch 1 bis 3 C₁-C₄-Alkylgruppen substituiert;
Y eine direkte Bindung, Sauerstoff, Schwefel oder -NR₁₀- ist;
R₆ und R₇ jeweils unabhängig voneinander Phenylen oder Naphthylen sind, jeweils unsubstituiert oder durch C₁-C₄-Alkyl substituiert;
R₈ C₁-C₂₅-Alkyl ist;
R₉ Hydroxy, 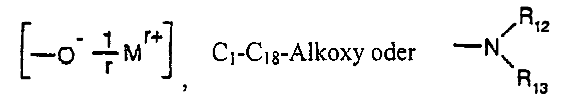 ist;
R₁₀ Wasserstoff, Hydroxy, C₁-C₂₅-Alkyl oder das Alkyl, das unsubstituiert oder durch -OH, -OR₈, -NH(R₈) oder -N(R₈)₂ substituiert ist; C₂-C₂₅-Alkyl, das durch Sauerstoff oder durch Schwefel unterbrochen ist, C₇-C₉-Phenylalkyl, unsubstituiertes oder C₁-C₄-Alkylsubstituiertes C₅-C₈-Cycloalkyl oder ein dendrimerer, oligomerer oder polymerer C₄-C₁₀₀-Kohlenwasserstoffrest ist;
R₁₂ und R₁₃ jeweils unabhängig voneinander Wasserstoff oder C₁-C₁₈-Alkyl sind; R₁₄ Wasserstoff oder C₁-C₁₈-Alkyl ist;
R₁₉, R₂₀, R₂₁, R₂₂ und R₂₃ jeweils unabhängig Wasserstoff, Cyano, Perfluoralkyl mit 1 bis 12 Kohlenstoffatomen, Fluor, Chlor, Hydroxy, C₁-C₂₅-Alkyl; C₂-C₂₅-Alkyl, das durch Sauerstoff, Schwefel oder durch >NR₈ unterbrochen ist; C₁-C₂₅-Alkoxy; C₂-C₂₅-Alkoxy, das durch Sauerstoff, Schwefel oder durch >NR₈ unterbrochen ist; C₁-C₄-Alkylamino, Di(C₁-C₄-alkyl)amino, C₁-C₂₅-Alkanoyl, C₁-C₂₅-Alkanoyloxy, C₁-C₂₅-Alkanoylamino; C₁-C₂₅-Alkylthio, C₇-C₉-Phenylalkyl, C₇-C₉-Phenylalkoxy, unsubstituiertes oder C₁-C₄-Alkyl-substituiertes Phenyl; unsubstituiertes oder C₁-C₄-Alkyl-substituiertes Phenoxy; unsubstituiertes oder C₁-C₄-Alkyl-substituiertes C₅-C₈-Cycloalkyl; unsubstituiertes oder C₁-C₄-Alkyl-substituiertes C₅-C₈-Cycloalkoxy; C₃-C₂₅-Alkanoyl, das durch Sauerstoff, Schwefel oder durch >NR₈ unterbrochen ist; C₁-C₂₅-Alkanoylcarbonyl; C₃-C₂₅-Alkanoylcarbonyl, das durch Sauerstoff, Schwefel oder durch >NR₈ unterbrochen ist; C₁-C₂₅-Alkylaminocarbonyl; C₃-C₂₅-Alkylaminocarbonyl, das durch Sauerstoff, Schwefel oder durch >NR₈ unterbrochen ist; Di-C₁-C₂₅-alkylaminocarbonyl; Di-C₃-C₂₅-alkylaminocarbonyl, das durch Sauerstoff, Schwefel oder durch >NR₈ unterbrochen ist; C₁-C₂₅-Alkanoyloxy; C₃-C₂₅-Alkanoyloxy, das durch Sauerstoff, Schwefel oder durch >NR₈ unterbrochen ist; C₁-C₂₅-Alkanoylamino, C₆-C₉-Cycloalkylcarbonyl, C₆-C₉-Cycloalkylcarbonyloxy, Benzoyl oder C₁-C₁₂-Alkyl-substituiertes Benzoyl; Benzoyloxy oder C₁-C₁₂-Alkyl-substituiertes Benzoyloxy; 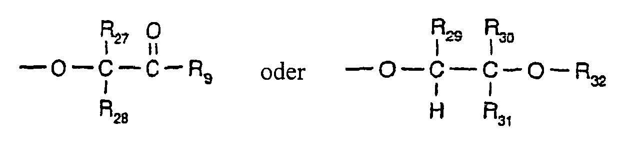 sind;
R₂₄ Wasserstoff, C₁-C₄-Alkyl oder unsubstituiertes oder C₁-C₄-Alkyl-substituiertes Phenyl ist;
R₂₅ und R₂₆ Wasserstoff, C₁-C₄-Alkyl oder Phenyl sind, mit der Maßgabe, daß mindestens einer der Reste R₂₅ und R₂₆ Wasserstoff ist;
R₂₇ und R₂₈ jeweils unabhängig voneinander Wasserstoff, C₁-C₄-Alkyl oder Phenyl sind; R₂₉ Wasserstoff oder C₁-C₄-Alkyl ist;
R₃₀ Wasserstoff, unsubstituiertes oder C₁-C₄-Alkyl-substituiertes Phenyl; C₁-C₂₅-Alkyl; C₂-C₂₅-Alkyl, das durch Sauerstoff, Schwefel oder durch >NR₈ unterbrochen ist; C₇-C₉-Phenylalkyl, das unsubstituiert oder an dem Phenylrest durch 1 bis 3 C₁-C₄-Alkylgruppen substituiert ist; oder C₇-C₂₅-Phenylalkyl, das durch Sauerstoff, Schwefel oder durch >NR₈ unterbrochen ist und unsubstituiert oder an dem Phenylrest durch 1 bis 3 C₁-C₄-Alkylgruppen substituiert ist, ist;
R₃₁ Wasserstoff oder C₁-C₄-Alkyl ist;
R₃₂ Wasserstoff, C₁-C₂₅-Alkanoyl; C₃-C₂₅-Alkanoyl, das durch Sauerstoff, Schwefel der durch >NR₈ unterbrochen ist; C₂-C₂₅-Alkanoyl, das durch eine Di(C₁-C₆-alkyl)phosphonatgruppe substituiert ist; C₆-C₉-Cycloalkylcarbonyl, Thenoyl, Furoyl, Benzoyl oder C₁-C₁₂-Alkyl-substituiertes Benzoyl, 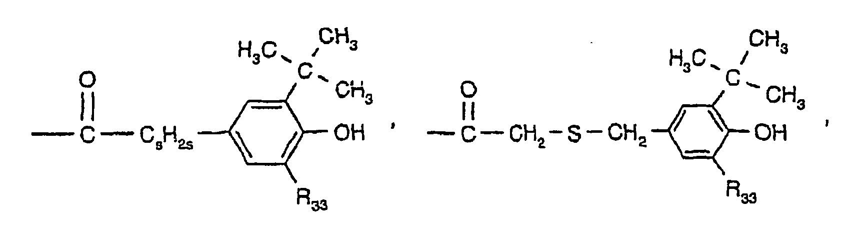 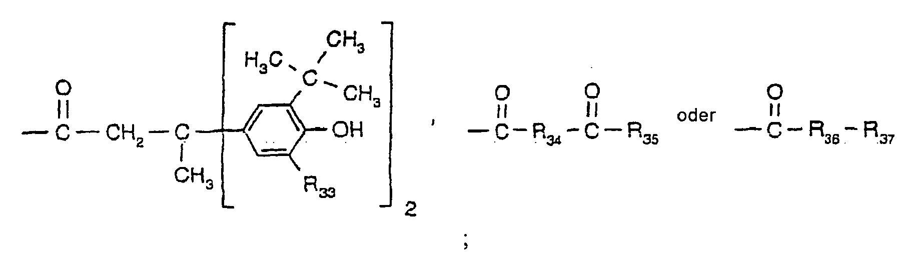 ist;
R₃₃ Wasserstoff oder C₁-C₈-Alkyl ist;
R₃₄ eine direkte Bindung, C₁-C₁₈-Alkylen; C₂-C₁₈-Alkylen, das durch Sauerstoff, Schwefel oder durch >NR₈ unterbrochen ist; C₂-C₂₀-Alkyliden, C₇-C₂₀-Phenylalkyliden, C₅-C₈-Cycloalkylen, C₇-C₈-Bicycloalkylen, unsubstituiertes oder C₁-C₄-Alkyl-substituiertes Phenylen, 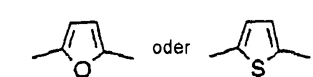 ist;
R₃₅ Hydroxy, 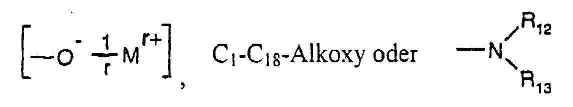 ist;
R₃₆ Sauerstoff, -NH- oder 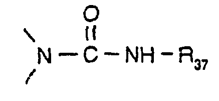 ist;
R₃₇ C₁-C₁₈-Alkyl oder Phenyl ist;
R₅₀ -OR₅₁, -O-C(O)-R₅₁, -SR₅₂, -S(O)R₅₂, -S(O)₂R₅₂, -N(H)R₅₃, Pyrrolino, Pyrrolidino, 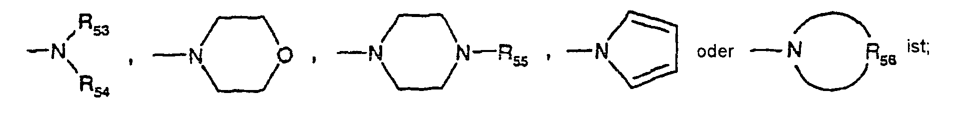
R₅₀' unabhängig wie für R₅₀ definiert ist;
R₅₁ C₁-C₂₅-Alkyl, das unsubstituiert oder durch -OH, -OR₈, -NH(R₈) oder -N(R₈)₂ substituiert ist; C₂-C₂₅-Alkyl, das durch Sauerstoff oder durch Schwefel unterbrochen ist; C₇-C₉-Phenylalkyl, unsubstituiertes oder C₁-C₄-Alkyl-substituiertes C₅-C₈-Cycloalkyl; unsubstituiertes oder C₁-C₄-Alkyl-substituiertes Phenyl ist;
R₅₂ C₁-C₂₅-Alkyl, das unsubstituiert oder durch -OH, -OR₈, -NH(R₈) oder -N(R₈)₂ substituiert ist; C₂-C₂₅-Alkyl, das durch Sauerstoff oder durch Schwefel unterbrochen ist; C₇-C₉-Phenylalkyl, unsubstituiertes oder C₁-C₄-Alkyl-substituiertes C₅-C₈-Cycloalkyl; unsubstituiertes oder C₁-C₄-Alkyl-substituiertes Phenyl ist;
R₅₃ und R₅₄ jeweils unabhängig voneinander Wasserstoff, Hydroxy; C₁-C₂₅-Alkyl, das unsubstituiert oder durch -OH, -OR₈, -NH(R₈) oder -N(R₈)₂ substituiert ist; C₂-C₂₅-Alkyl, das durch Sauerstoff oder durch Schwefel unterbrochen ist; C₇-C₉-Phenylalkyl, unsubstituiertes oder C₁-C₄-Alkyl-substituiertes C₅-C₈-Cydoalkyl; oder ein dendrimerer, oligomerer oder polymerer C₄-C₁₀₀-Kohlenwasserstoffrest sind;
R₅₅ C₁-C₂₅-Alkyl; C₂-C₂₅-Alkyl, das durch Sauerstoff oder durch Schwefel unterbrochen ist; C₇-C₉-Phenylalkyl, unsubstituiertes oder C₁-C₄-Alkyl-substituiertes C₅-C₈-Cycloalkyl; unsubstituiertes oder C₁-C₄-Alkyl-substituiertes Phenyl ist;
R₅₆ unsubstituiertes oder C₁-C₄-Alkyl-substituiertes C₂-C₁₂-Alkylen ist;
M ein r-wertiges Metallkation ist;
p 0, 1 oder 2 ist;
q 1, 2, 3, 4, 5 oder 6 ist;
r 1, 2 oder 3 ist und
s 0, 1 oder 2 ist.

2. Zusammensetzung nach Anspruch 1, wobei Komponente (b) eine Verbindung ist, ausgewählt aus der Gruppe, bestehend aus den Mannich-Basen-Verbindungen der Formeln (Ia), (Ib), (IIa), (IIb) und (IIc).

3. Zusammensetzung nach Anspruch 1, wobei der Polyester oder das Polyamid von Komponente (a) 95 bis 99,99 Gew.-% beträgt, und die Stabilisatoren von Komponente (b) insgesamt 5 bis 0,01 Gew.-% betragen, bezogen auf das Gesamtgewicht von (a) und (b).

4. Zusammensetzung nach Anspruch 1, wobei der Polyester von Komponente (a) Poly(ethylenterephthalat) PET oder Poly(ethylen-2,6-naphthalin-2,6-dicarboxylat) ist.

5. Zusammensetzung nach Anspruch 1, wobei in den Verbindungen der Formeln (Ia), (Ib), (IIa), (IIb), (IIc), (IIIa), (IIIb), (IIIc), (IVa), (IVb) und (IVc)
R₁ Wasserstoff, C₁-C₂₅-Alkyl oder C₁-C₁₈-Alkylen ist;
Rₐ C₁-C₁₈-Alkylen, Phenylen oder Naphthylen ist, jeweils unsubstituiert oder durch C₁-C₄-Alkyl oder durch Fluor substituiert; oder -R₆-Y-R₇- ist;
R_{b} -NR₅₃, C₁-C₂₅-Alkylendiimino oder C₅-C₈-Cycloalkylendiimino ist und
X C₁-C₁₈-Alkylen, -O-, -NR₁₀- oder -S- ist.

6. Zusammensetzung nach Anspruch 1, wobei R₂, R₃, R₄ und R₅ jeweils unabhängig Wasserstoff, Fluor, Hydroxy oder C₁-C₂₅-Alkyl sind.

7. Zusammensetzung nach Anspruch 1, wobei R₂, R₃, R₄ und R₅ jeweils Wasserstoff oder tert-Butyl sind.

8. Zusammensetzung nach Anspruch 1, wobei die Verbindungen der Formeln (Ia) bis (IVc) aus der Gruppe ausgewählt sind, bestehend aus
2,4-Di-tert-butyl-6-(phenyl-piperidin-1-yl-methyl)-phenol,
2,4-Di-tert-butyl-6-(dimethylamino-phenyl-methyl)-phenol,
2,6-Bis-dimethylaminomethyl-4-(1,1,3,3-tetramethyl-butyl)-phenol,
2,4-Di-tert-butyl-6-piperidin-1-ylmethyl-phenol,
2,6-Di-tert-butyl-4-(phenyl-piperidin-1-yl-methyl)-phenol,
2,6-Di-tert-butyl-4-piperidin-1-yl-methyl-phenol,
3-[3-tert-Butyl-4-hydroxy-5-(phenyl-piperidin-1-yl-methyl)-phenyl]-propionsäuremethylester,
2,4-Di-tert-butyl-6-dimethylaminomethyl-phenol,
2,4-Di-tert-butyl-6-N-morpholino-4-ylmethyl-phenol,
2,4-Di-tert-butyl-6-di-n-butylaminomethyl-phenol,
2,4-Di-tert-butyl-6-cyclohexylaminomethyl-phenol,
2,6-Bis-dimethylaminomethyl-4-(1,1,3,3-tetramethyl-butyl)-phenol,
2,4,6-Tris-dimethylaminomethyl-phenol,
2,4-Bis-dimethylaminomethyl-6-methyl-phenol,
2,6,2',6'-Tetrakis(dimethylaminomethyl)-4,4'-isopropyliden-diphenol,
1-(N-Morpholino-4-yl-methyl)-2-naphthol,
n-Butyl-bis-(2-hydroxy-1-naphthylmethyl)-amin,
3,5-Di-tert-butyl-2-hydroxy-benzyl-acetat,
2,4-Di-tert-butyl-6-methoxymethyl-phenol und
2,4-Bis-(n-octadecylthiomethyl)-6-methyl-phenol.

9. Ein- oder mehrschichtige(r) Kunststoffbehälter- oder -folie, stabilisiert gegen die Bildung von Aldehydverunreinigungen während des Schmelzverarbeitens des Behälters oder der Folie, umfassend mindestens eine Schicht, die (a) einen Polyester oder ein Polyamid und (b) eine effektive stabilisierende Menge von mindestens einer Verbindung, ausgewählt aus der Gruppe, bestehend aus den Mannich-Basen-Verbindungen der Formeln (Ia), (Ib), (IIa), (IIb), (IIc), (IIIa), (IIIb), (IIIc), (IVa), (IVb) und (IVc) nach Anspruch 1, umfaßt.

10. Kunststoffbehälter nach Anspruch 9, der eine stabile Flasche ist.

11. Verfahren zum Verhindern der Bildung von Aldehydverunreinigungen während des Schmelzverarbeitens eines Polyesters oder Polyamids, umfassend das Einführen in den Polyester oder das Polyamid einer effektiven stabilisierenden Menge von mindestens einer Verbindung, ausgewählt aus der Gruppe, bestehend aus den Mannich-Basen-Verbindungen der Formeln (Ia), (Ib), (IIa), (IIb), (IIc), (IIIa), (IIIb), (IIIc), (IVa), (IVb) und (IVc) nach Anspruch 1.

12. Zusammensetzung, stabilisiert gegen die Bildung von Aldehydverunreinigungen während des Schmelzverarbeitens der Zusammensetzung, umfassend
(a) einen Polyester oder ein Polyamid, und
(b) eine effektive stabilisierende Menge von mindestens einer Verbindung, ausgewählt aus der Gruppe, bestehend aus den Mannich-Basen-Verbindungen der Formeln (Ia), (Ib), (IIa), (IIb), (IIc), (IIIa), (IIIb), (IIIc) (IVa), (IVb) und (IVc) nach Anspruch 1; und gegebenenfalls
(c) eine effektive stabilisierende Menge eines Polymers, das Poly(vinylalkohol) oder ein Ethylen/Vinylalkohol-Copolymer ist; und gegebenenfalls
(d) eine effektive stabilisierende Menge eines mehrwertigen Alkohols; und gegebenenfalls
(e) eine effektive stabilisierende Menge eines Polymers, das Polyacrylamid, Polymethacrylamid oder ein Acrylamid- oder Methacrylamid-Copolymer mit mindestens einem ethylenisch ungesättigtem Comonomer ist; und gegebenenfalls
(f) eine effektive stabilisierende Menge von mindestens einer Verbindung, ausgewählt aus der Gruppe, bestehend aus
i.) Hydroxylaminstabilisatoren,
ii.) substituierten Hydroxylaminstabilisatoren,
iii.) Nitronstabilisatoren und
iv.) Aminoxidstabilisatoren; und gegebenenfalls
(g) eine effektive stabilisierende Menge von mindestens einem Polymer oder Copolymer, abgeleitet von mindestens einem 2-Propensäureestermonomer, wobei der mehrwertige Alkohol von (d) die Formel G-(OH)ₐ aufweist, worin a 2 bis 4000 ist und G eine Hydrocarbyleinheit ist, und wobei das Polymer oder Copolymer von Komponente (g) die Formel 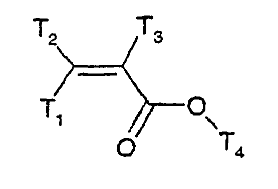 aufweist, worin T₁, T₂ und T₃ unabhängig Wasserstoff, gerad- oder verzweigtkettiges Alkyl mit 1 bis 24 Kohlenstoffatomen, Cycloalkyl mit 5 bis 12 Kohlenstoffatomen, Aralkyl mit 7 bis 15 Kohlenstoffatomen oder das Alkyl, Cycloalkyl oder Aralkyl sind, das weiter durch ein oder mehrere -OT₅, -NT₆T₇, -CO₂T₈ oder -CONT₉T₁₀ substituiert ist, worin T₅, T₆, T₇, T₈, T₉ und T₁₀ unabhängig Wasserstoff oder gerad- oder verzweigtkettiges Alkyl mit 1 bis 18 Kohlenstoffatomen sind; oder T₁, T₂, T₃ unabhängig eine Gruppe -CO₂T₄ sind,
T₄ ein mehrwertiger Alkoholsubstituent der Formel -E-(OH)ₐ ist, worin a 2 bis 4000 ist, und E eine Hydrocarbyleneinheit ist.

13. Zusammensetzung nach Anspruch 12, wobei die Alkohole von Komponente (d) aus der Gruppe ausgewählt sind, bestehend aus Pentaerythritol, Dipentaerythritol und Trimethylolpropan, und die Verbindungen von Komponente (f) aus der Gruppe ausgewählt sind, bestehend aus dem N,N-Di(alkyl)hydroxylamin, das durch direkte Oxidation von N,N-Di(hydriertem Talg)amin, O-Allyl-N,N-dioctadecylhydroxylamin, N-Octadecyl-α-heptadecylnitron und Di(C₁₆-C₁₈)alkylmethylaminoxid hergestellt wird.

14. Zusammensetzung, stabilisiert gegen die Bildung von Aldehydverunreinigungen während des Schmelzverarbeitens der Zusammensetzung, umfassend
(a) einen Polyester oder ein Polyamid, und
(b) eine effektive stabilisierende Menge von mindestens einer Verbindung, ausgewählt aus der Gruppe, bestehend aus den Mannich-Basen-Verbindungen der Formeln (Ia), (Ib), (IIa), (IIb), (IIc), (IIIa), (IIIb), (IIIc), (IVa), (IVb) und (IVc) nach Anspruch 1, und
(c) mindestens eine Verbindung, ausgewählt aus der Gruppe, bestehend aus den Aminverbindungen.

15. Zusammensetzung, stabilisiert gegen die Bildung von Aldehydverunreinigungen während des Schmelzverarbeitens der Zusammensetzung, umfassend
(a) einen Polyester oder ein Polyamid, und
(b) eine effektive stabilisierende Menge von mindestens einer Verbindung, ausgewählt aus der Gruppe, bestehend aus den thermischen Produkten der Mannich-Basen-Verbindungen der Formeln (Ia), (Ib), (IIa), (IIb), (IIc), (IIIa), (IIIb), (IIIc), (IVa), (IVb) und (IVc) nach Anspruch 1, und
(c) mindestens eine Verbindung, ausgewählt aus der Gruppe, bestehend aus den Aminverbindungen.

16. Zusammensetzung, stabilisiert gegen die Bildung von Aldehydverunreinigungen und gegen Vergilben während des Schmelzverarbeitens der Zusammensetzung, umfassend
(a) einen Polyester oder ein Polyamid, und
(b) eine effektive stabilisierende Menge von mindestens einer Verbindung, ausgewählt aus der Gruppe, bestehend aus den Mannich-Basen-Verbindungen der Formeln (Ia), (Ib), (IIa), (IIb), (IIc), (IIIa), (IIIb), (IIIc), (IVa), (IVb) und (IVc) nach Anspruch 1, und
(c) ein oder mehrere Farbmittel, ausgewählt aus der Gruppe, bestehend aus Pigmenten und Farbstoffen.

17. Faser, Folie oder Formgegenstand, stabilisiert gegen die Bildung von Aldehydverunreinigungen während des Schmelzverarbeitens der Faser, der Folie oder des Formgegenstandes, umfassend
(a) einen Polyester oder ein Polyamid, und
(b) eine effektive stabilisierende Menge von mindestens einer Verbindung, ausgewählt aus der Gruppe, bestehend aus den Mannich-Basen-Verbindungen der Formeln (Ia), (Ib), (IIa), (IIb), (IIc), (IIIa), (IIIb), (IIIc), (IVa), (IVb) und (IVc) nach Anspruch 1.

18. Verfahren zur Herstellung eines stabilisierten Polyesters oder Polyamids, der/das während des anschließenden Schmelzverarbeitens wenig Aldehyde erzeugt, wobei das Verfahren das Herstellen des Polyesters oder Polyamids aus seinen Monomerkomponenten in Gegenwart einer effektiven Menge eines Stabilisators, ausgewählt aus der Gruppe, bestehend aus den Mannich-Basen-Verbindungen der Formeln (Ia), (Ib), (IIa), (IIb), (IIc), (IIIa), (IIIb), (IIIc), (IVa), (IVb) und (IVc) nach Anspruch 1, umfaßt.

19. Verfahren nach Anspruch 18 zur Herstellung eines stabilisierten Polyesters der während des anschließenden Schmelzverarbeitens wenig Aldehyde erzeugt, wobei das Verfahren das Umsetzen von einer oder mehreren Disäure(n) mit einem oder mehreren Diol(en) in einem Veresterungsverfahren und/oder einem oder mehreren Diester(n) mit einem oder mehren Diol(en) in einem Umesterungsverfahren in Gegenwart einer effektiven Menge eines Stabilisators, ausgewählt aus der Gruppe, bestehend aus den Mannich-Basen-Verbindungen der Formeln (Ia), (Ib), (IIa), (IIb), (IIc), (IIIa), (IIIb), (IIIc), (IVa), (IVb) und (IVc), umfaßt.

20. Polyester oder Polyamid, erhalten durch das Verfahren nach Anspruch 18.

21. Verwendung von Komponente (b) nach Anspruch 1 zur Verhinderung der Bildung von Aldehydverunreinigungen während des Schmelzverarbeitens eines Polyesters oder eines Polyamids.

## Revendications

1. composition stabilisée contre la formation de contaminants aldéhydiques au cours de la transformation à chaud de ladite composition, qui comprend
(a) un polyester ou polyamide, et
(b) une quantité à efficacité stabilisante d'au moins une quantité à efficacité stabilisante d'au moins un composé pris dans le groupe constitué par les composés base de Mannich de formules (Ia), (Ib), (IIa), (IIb), (IIc), (IIIa), (IIIb), (IIIc) (IVa), (IVb) et (IVc) 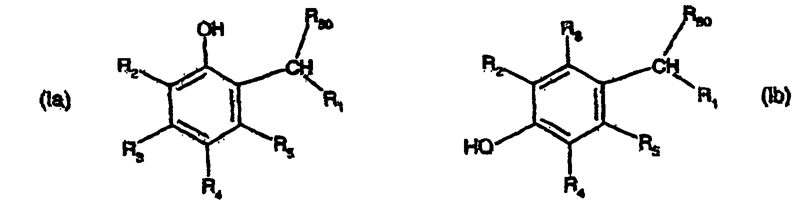 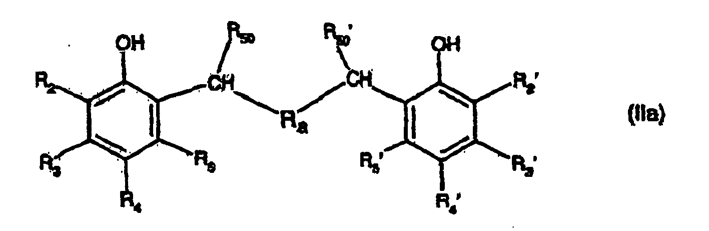 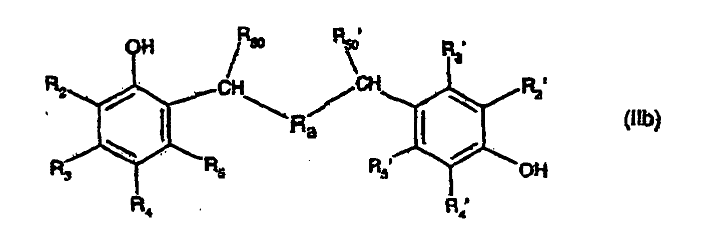 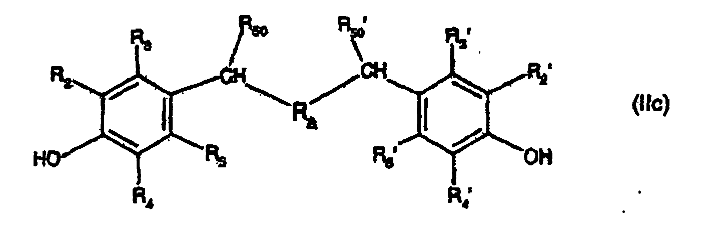 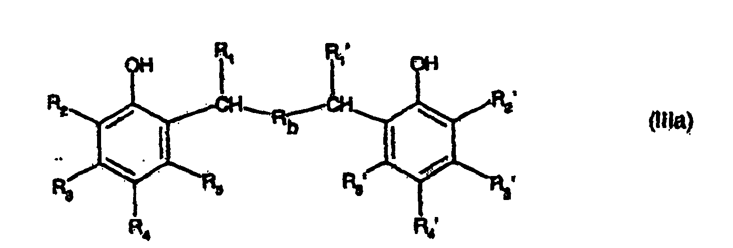 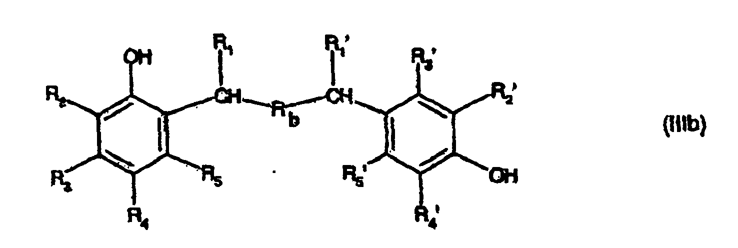 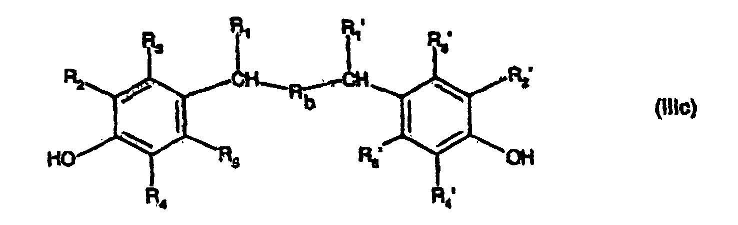 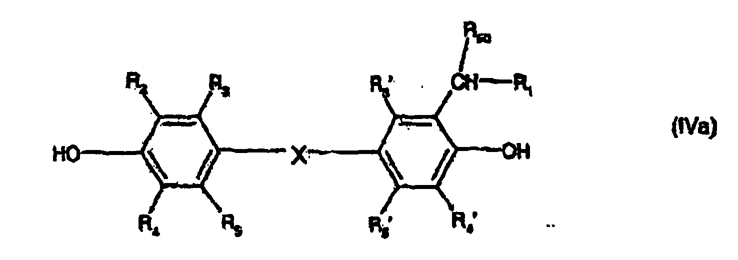 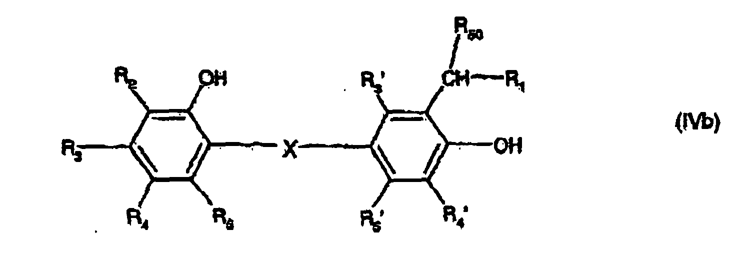 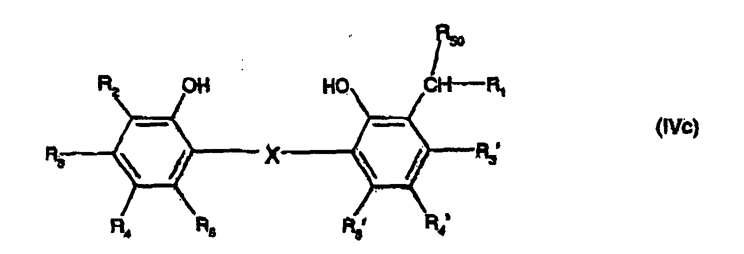
dans lesquelles
**R₁** représente un atome d'hydrogène, un groupe hydroxy, alkyle en C₁-C₂₅, phénylalkyle en C₇-C₉, cycloalkyle en C₅-C₈ non substitué ou substitué par un substituant alkyle en C₁-C₄ ; naphtyle, phénanthryle, anthryle, 5,6,7,8-tétrahydro-2-naphtyle, thiényle, benzo[b]thiényle, naphto[2,3-b]thiényle, thianthrényle, furyle, benzofuryle, isobenzofuryle, dibenzofuryle, xanthényle, phénoxathiinyle, pyrrolyle, imidazolyle, pyrazolyle, pyridinyle, pyrazinyle, pyrimidinyle, pyridazinyle, indolizinyle, isoindolyle, indolyle, indazolyle, purinyle, quinolizinyle, isoquinolyle, quinolyle, phtalazinyle, naphtyridinyle, quinoxalinyle, quinazolinyle, cinnolinyle, ptéridinyle, carbazolyle, β-carbolinyle, phénanthridinyle, acridinyle, périmidinyle, phénanthrolinyle, phénazinyle, isothiazolyle, phénothiazinyle, isoxazolyle, furazanyle, biphényle, terphényle, fluorényle ou phénoxazinyle, dont chacun est non substitué ou substitué par un substituant fluor, hydroxy, alkyle en C₁-C₁₈, alkoxy en C₁-C₁₈, (alkyl en C₁-C₁₈)thio, di (alkyl en C₁-C₄)amino, phényle, benzyle, benzoyle ou par benzoyloxy ou **R₁** est un radical de formule 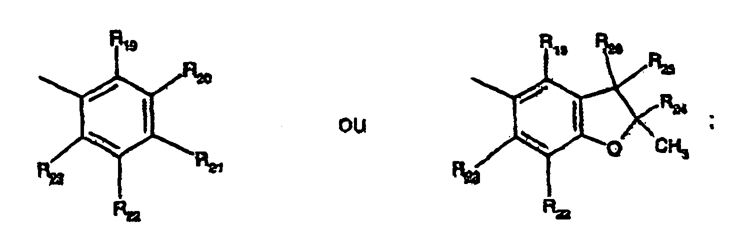
**R₂, R₃, R₄ et R₅,** indépendamment les uns des autres, chacun représente un atome d'hydrogène, un atome de fluor, un groupe hydroxy, alkyle en C₁-C₂₅, alcényle en C₁-C₂₅, phénylalkyle en C₇-C₉, phénylalcényle en C₇-C₉, phényle non substitué ou substitué par un substituant alkyle ou alcényle en C₁-C₄, cycloalkyle en C₅-C₈ non substitué ou substitué par un substituant alkyle en C₁-C₄, alkoxy en C₁-C₁₈, (alkyl en C₁-C₁₈)-thio, (alkyl en C₁-C₄)amino, di (alkyl en C₁-C₄)-amino, (alcanoyl en C₁-C₂₅)oxy, (alcanoyl en C₁-C₂₅)-amino, (alcanoyl en C₃-C₂₅)oxy interrompu par un atome d'oxygène, de soufre ou par un groupe >NR₈ ; -(CH₂)ₚ-C(O)OR₈, cyclo(alkyl en C₆-C₉)-carbonyloxy, benzoyloxy ou benzoyloxy substitué par un substituant alkyle en C₁-C₁₂, ou les radicaux adjacents R₂ et R₃ ou R₃ et R₄ ou R₄ et R₅, conjointement avec les atomes de carbone auxquels 11 sont liés, forment un cycle benzo, ou R₂ et R₄ chacun peut représenter un groupe -(CH₂)ₚ-COR₉ ou -(CH₂)_{q}OH, ou
**R₂et R₄** chacun peut représenter un groupe -CH(R₁)R₅₀ ;
**R₁', R₂', R₃'**, **R₄' et R₅',** indépendamment, sont définis comme respectivement R₁, R₂, R₃, R₄ et R₅ ;
**Rₐ** représente un groupe alkylène en C₁-C₁₈, alkylène en C₂-C₁₈ interrompu par un atome d'oxygène, de soufre ou un groupe >NR₁₄; ou Rₐ représente un groupe alkylidène en C₂-C₂₀, phénylalkylidène en C₇-C₂₀, cycloalkylène en C₅-C₈, bicycloalkylène en C₇-C₈, phénylène ou naphtylène chacun non substitué ou substitué par un substituant alkyle en C₁-C₄ ou fluor ; ou représente un groupe -R₆-Y-R₇ ;
**R_{b}** représente un groupe -NR₅₃, (alkylène en C₁-C₂₅)diimino, (alkylène en C₁-C₂₅)triimino, (alkylène en C₁-C₂₅)tétraimino, ou cyclo(alkylène en C₅-C₈)diimino ;
**x** est défini comme pour Rₐ ou est une liaison directe, un groupe -CR₁R₂-, -O-, -NR₁₀- ou -S-, ou X représente un groupe phénylène substitué par R₂, R₃, R₄ et R₅, ou X représente un groupe alkylène substitué par un substituant -CF₃, alkyle en C₁-C₁₂ ou phényle, ou X représente un cycle cycloalkylène en C₅-C₈ non substitué ou substitué par 1 à 3 groupes alkyle en C₁-C₄ ;
**Y** est une liaison directe, un atome d'oxygène, de soufre ou -NR₁₀- ;
**R₆ et R₇**, indépendamment l'un de l'autre, chacun représente un groupe phénylène ou naphtylène chacun non substitué ou substitué par un substituant alkyle en C₁-C₄ ;
**R₈** représente un groupe alkyle en C₁-C₂₅;
**R₉** représente un groupe hydroxy, 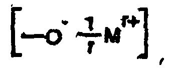 alkoxy en C₁-C₁₈ ou 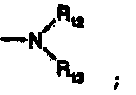
**R₁₀** représente un atome d'hydrogène, un groupe hydroxy, alkyle en C₁-C₂₅ ou ledit alkyle est non substitué ou substitué par un substituant -OH, -OR₈, -NH(R₈) ou -N(R₈)₂ ; alkyle en C₂-C₂₅ interrompu par un atome d'oxygène ou de soufre, phénylalkyle en C₇-C₉, cycloalkyle en C₅-C₈ non substitué ou substitué par un substituant alkyle en C₁-C₄, ou est un radical hydrocarboné en C₄-C₁₀₀ dendrimère, oligomère ou polymère;
**R₁₂et R₁₃**, indépendamment l'un de l'autre, chacun représente un atome d'hydxogène ou un groupe alkyle en C₁-C₁₈,
**R₁₄** représente un atome d'hydrogène ou un groupe alkyle en C₁-C₁₈,
**R₁₉, R₂₀, R₂₁, R₂₂ et R₂₃**, indépendamment les uns des autres, chacun représente un atome d'hydrogène, un groupe cyano, perfluoroalkyle ayant 1 à 12 atomes de carbone, fluoro, chloro, hydroxy, alkyle en C₁-C₂₅ : alkyle en C₂-C₂₅ interrompu par un atome d'oxygène, de soufre ou un groupe >NR₈ ; alkoxy en C₁-C₂₅ ; alkoxy en C₂-C₂₅ interrompu par un atome d'oxygène, de soufre ou un groupe >NR₈ ; (alkyl en C₁-C₄)amino, di (alkyl en C₁-C₄)amino, alcanoyle en C₁-C₂₅, (alcanoyl en C₁-C₂₅) oxy, (alcanoyl en C₁-C₂₅) amino ; (alkyl en C₁-C₂₅)thio, phénylalkyle en C₇-C₉, phénylalkoxy en C₇-C₉, phényle non substitué ou substitué par un substituant alkyle en C₁-C₄ ; phénoxy non substitué ou substitué par un substituant alkyle en C₁-C₄ ; cycloalkyle en C₅-C₈ non substitué ou substitué par un substituant alkyle en C₁-C₄ ; cycloalkoxy en C₅-C₈ non substitué ou substitué par un substituant alkyle en C₁-C₄ ; alcanoyle en C₃-C₂₅ interrompu par un atome d'oxygène, de soufre ou un groupe >NR₈ : (alcanoyl en C₁-C₂₅)carbonyle ; (alcanoyl en C₃-C₂₅)caxbonyle interrompu par un atome d'oxygène, de soufre ou un groupe >NR₈ ; (alkyl en C₁-C₂₅)amino-carbonyle ; (alkyl en C₃-C₂₅)aminocarbonyle interrompu par un atome d'oxygène, de soufre ou un groupe >NR₈ ; di-(alkyl en C₁-C₂₅) amino-carbonyle, di-(alkyl en C₃-C₂₅)-aminocarbonyle interrompu par un atome d'oxygène, de soufre ou un groupe >NR₈ ; (alcanoyl en C₁-C₂₅) oxy ; (alcanoyl en C₃-C₂₅)oxy interrompu par un atome d'oxygène, de soufre ou un groupe >NR₈ ; (alcanoyl en C₁-C₂₅)amino, cyclo(alkyl en C₆-C₉)-carbonyle, cyclo(alkyl en C₆-C₉)carbonyloxy, benzoyle ou benzoyle substitué par un substituant alkyle en C₁-C₁₂ ; benzoyloxy ou ou benzoyloxy substitué par un substituant alkyle en C₁-C₁₂ ; 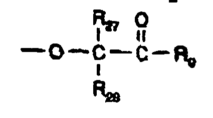 ou 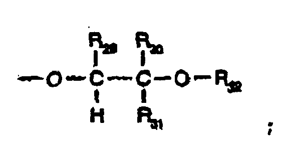
**R₂₄** représente un atome d'hydrogène, un groupe alkyle en C₁-C₄ ou phényle non substitué ou substitué par un substituant alkyle en C₁-C₄ ;
**R₂₅et R₂₆** représentent un atome d'hydrogène, un groupe alkyle en C₁-C₄ ou phényle, à condition qu'au moins un des radicaux R₂₅ et R₂₆ représente un atome d'hydrogène ;
**R₂₇ et R₂₈,** indépendamment l'un de l'autre, chacun représente un atome d'hydrogène, un groupe alkyle en C₁-C₄ ou phényle ;
**R₂₉** représente un atome d'hydrogène ou un groupe alkyle en C₁-C₄ ;
**R₃₀** représente un atome d'hydrogène, un groupe phényle non substitué ou substitué par un substituant alkyle en C₁-C₄ ; alkyle en C₁-C₂₅ ; alkyle en C₂-C₂₅ interrompu par un atome d'oxygène, de soufre ou un groupe >NR₈ ; phénylalkyle en C₇-C₉ non substitué ou substitué sur le radical phényle par 1 à 3 groupes alkyle en C₁-C₄ ; ou phénylalkyle en C₇-C₂₅ interrompu par un atome d'oxygène, de soufre ou un groupe >NR₈ et non substitué ou substitué sur le radical phényle par 1 à 3 groupes alkyle en C₁-C₄ ;
**R₃₁** représente un atome d'hydrogène ou un groupe alkyle en C₁-C₄ ;
**R₃₂** représente un atome d'hydrogène, un groupe alcanoyle en C₁-C₂₅ ; alcanoyl, en C₃-C₂₅ interrompu par un atome d'oxygène, de soufre ou un groupe >NR₈ ; alcanoyle en C₂-C₂₅ substitué par un groupe di (alkyl en C₁-C₆) phosphonate ; cyclo(alkyl en C₆-C₉)-carbonyle, thénoyle, furoyle, benzoyle ou benzoyle substitué par un substituant alkyle en C₁-C₂₅, 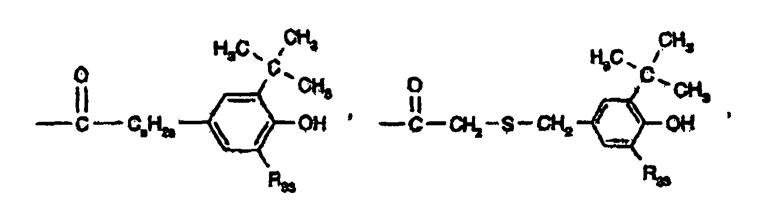 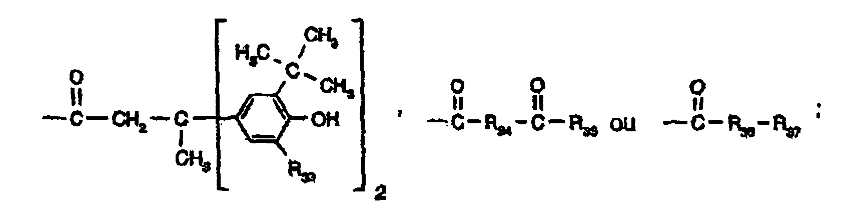
**R₃₃** représente un atome d'hydrogène ou un groupe alkyle en C₁-C₈ ;
**R₃₄** représente une liaison directe, un groupe alkylène en C₁-C₁₈, alkylène en C₂-C₁₈ interrompu par un atome d'oxygène, de soufre ou un groupe >NR₈, alkylidène en C₂-C₂₀, phénylalkylidène en C₇-C₂₀, cycloalkylène en C₅-C₈, bicycloalkylène en C₇-C₈, phénylène non substitué ou substitué par un substituant alkyle en C₁-C₄, 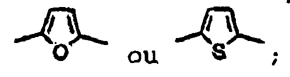
**R₃₅** représente un groupe hydroxy, 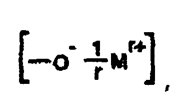 alkoxy en C₁-C₁₈ ou 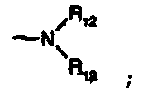
**R₃₆** représente un atome d'oxygène, un groupe -NH- ou 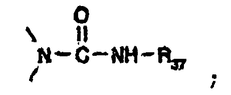
**R₃₇** représente un groupe alkyle en C₁-C₁₈ ou phényle ;
**R₅₀** représente un groupe -OR₅₁, -OC(O)R₅₁, -SR₅₂, -S(O)R₅₂, -S(O)₂R₅₂, -N(H)R₅₃, pyrrolino, pyrrolidino, 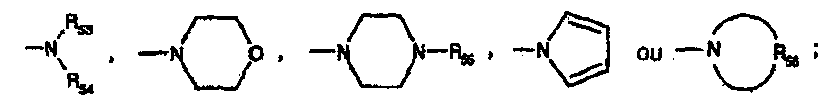
**R₅₀'** indéprendamment est défini comme R₅₀ ;
**R₅₁** représente un groupe alkyle en C₁-C₂₅, non substitué ou substitué par un substituant -OH, -OR₈, -NH(R₈) ou -NH(R₈)₂ ; alkyle en C₂-C₂₅ interrompu par un atome d'oxygène ou de soufre ; phénylalkyle en C₇-C₉, cycloalkyle en C₅-C₈ non substitué ou substitué par un substituant alkyle en C₁-C₄ ; phényle non substitué ou substitué par un substituant alkyle en C₁-C₄ ;
**R₅₂** représente un groupe alkyle en C₁-C₂₅, non substitué ou substitué par un substituant -OH, -OR₈, -NH(R₈) ou -NH(R₈)₂ ; alkyle en C₂-C₂₅ interrompu par un atome d'oxygène ou de soufre; phénylalkyle en C₇-C₉, cycloalkyle en C₅-C₈ non substitué ou substitué par un substituant alkyle en C₁-C₄ ; phényle non substitué ou substitué par un substituant alkyle en C₁-C₄ ;
**R₅₃et R₅₄,** indépendamment l'un de l'autre, chacun représente un atome d'hydrogène, un groupe hydroxy ; alkyle en C₁-C₂₅, non substitué ou substitué par un substituant -OH, -OR₈, -NH(R₈) ou -NH(R₈)₂ ; alkyle en C₂-C₂₅ interrompu par un atome d'oxygène ou de soufre ; phénylalkyle en C₇-C₉, cycloalkyle en C₅-C₈ non substitué ou substitué par un, substituant alkyle en C₁-C₄ ; ou un radical hydrocarboné en C₄-C₁₀₀ dendrimère, oligomère ou polymère;
**R₅₅** représente un groupe alkyle en C₁-C₂₅ ; alkyle en C₂-C₂₅ interrompu par un atome d'oxygène ou par un atome de soufre ; phénylalkyle en C₇-C₉, cycloalkyle en C₅-C₈ non substitué ou substitué par un substituant alkyle en C₁-C₄ ; phényle non substitué ou substitué par un substituant alkyle en C₁-C₄ ;
**R₅₆** représente un groupe alkylène en C₂-C₁₂ non substitué ou substitué par un substituant alkyle en C₁-C₄ ;
**M** est un cation métal r-valent ;
**p** vaut 0, 1 ou 2 ;
**q** vaut 1, 2, 3, 4, 5 ou 6 ;
**r** vaut 1, 2 ou 3 ; et
**s** vaut 0, 1 ou 2.

2. Composition selon la revendication 1, dans laquelle le composant (b) est un composé pris dans le groupe constitué par les composés base de Mannich de formules (Ia), (Ib), (IIa), (IIb) et (IIc).

3. Composition selon la revendication 1, dans laquelle le polyester ou le polyamide du composant (a) est présent en une quantité de 95 à 99,99 % en masse et les stabilisants du composant (b), au total, de 5 à 0,01 % en masse, à base de la masse totale de (a) et (b).

4. Composition selon la revendication 1, dans laquelle le polyester du composant (a) est le poly(téréphtalate d'éthylène) PET ou le poly(2,6-naphtalène-2,6-dicarboxylate d'éthylène).

5. Composition selon 1a revendication 1, dans laquelle dans les composés de formules (Ia), (Ib), (IIa), (IIb), (IIc), (IIIa), (IIIb), (IIIc), (IVa), (IVb) et (IVc)
R₁ représente un atome d'hydrogène, un groupe alkyle en C₁-C₂₅ ou alkylène en C₁-C₁₈ ;
Rₐ représente un groupe alkylène en C₁-C₁₈, phénylène ou naphtylène, chacun non substitué ou substitué par un substituant alkyle en C₁-C₄ ou par fluor ; ou représente un groupe -R₆-Y-R₇- ;
R_{b} représente un groupe -NR₅₃, (alkylène en C₁-C₂₅)diimino ou cyclo(alkylène en C₅-C₈)diimino; et
X représente un groupe alkylène en C₁-C₁₈, -O-, -NR₁₀- ou -S-.

6. Composition selon la revendication 1, dans laquelle R₂, R₃, R₄ et R₅, indépendamment, chacun représente un atome d'hydrogène, un atome de fluor, un groupe hydroxy ou alkyle en C₁-C₂₅.

7. Composition selon la revendication 1, dans laquelle R₂, R₃, R₄ et R₅, indépendamment, chacun représente un atome d'hydrogène ou un groupe tert-butyle.

8. Composition selon la revendication 1, dans laquelle les composés de formules (Ia)-(IVc) sont pris dans le groupe constitué par
2,4-di-tert-butyl-6-(phényl-pipéridin-1-yl-méthyl)-phénol,
2,4-di-tert-butyl-6-(diméthylamino-phényl-méthyl)-phénol,
2,6-bis-diméthylaminométhyl-4-(1,1,3,3-tétraméthyl-butyl)-phénol,
2,4-di-tert-butyl-6-pipéridin-1-yl-méthyl-phénol,
2,6-di-tert-butyl-4-(phényl-pipéridin-1-yl-méthyl)-phénol,
2,6-di-tert-butyl-4-pipéridin-1-yl-méthyl-phénol,
3-[3-tert-butyl-4-hydroxy-5-(phényl-pipéridirin-1-yl-méthyl)-phényl]-propionate de méthyle,
2,4-di-tert-butyl-6-diméthylaminométhyl-phénol,
2,4-di-tert-butyl-6-N-morpholino-4-ylméthyl-phénol,
2,4-di-tert-butyl-6-di-n-butylaminométhyl-phénol,
2,4-di-tert-butyl-6-cyclohexylaminométhyl-phénol,
2,6-bis-diméthylaminométhyl-4-(1,1,3,3-tétraméthyl-butyl)-phénol,
2,4,6-tris-diméthylaminométhyl-phénol,
2,4-bis-diméthylaminométhyl-6-méthyl-phénol,
2,6,2',6'-tétrakis(diméthylaminométhyl)-4,4'-isopropylidène-diphénol,
1-(N-morpholino-4-yl-méthyl)-2-naphtol,
n-butyl-bis-(2-hydroxy-1-naplitylméthyl)-amine,
acétate de 3,5-di-tert-butyl-2-hydroxy-benzyle,
2,4-di-tert-butyl-6-méthoxyméthyl-phénol et
2,4-bis-(n-octadécylthiométhyl)-6-méthyl-phénol.

9. Contenant ou film de plastique mono- ou multicouches, stabilisé contre la formation de contaminants aldéhydiques au cours de la transformation à chaud dudit contenant ou film, comprenant au moins une couche qui comprend (a) un polyester ou polyamide, et (b) une quantité à efficacité stabilisante d'au moins un composé pris dans le groupe constitué par les composé base de Mannich de formules (Ia), (Ib), (IIa), (IIb), (IIc), (IIIa), (IIIb), (IIIc), (IVa), (IVb) et (IVc) selon la revendication 1.

10. Contenant plastique selon la revendication 9, qui est une bouteille rigide.

11. Procédé pour la prévention de la formation de contaminants aldéhydiques au cours de la transformation à chaud d'un polyester ou polyamide qui comprend l'incorporation audit polyester ou polyamide d'une quantité à efficacité stabilisante d'au moins un composé pris dans le groupe constitué par les composés base de Mannich de formules (Ia), (Ib), (IIa), (IIb), (IIc), (IIIa). (IIIb), (IIIc), (IVa), (IVb) et (IVc) selon la revendication 1.

12. composition, stabilisée contre la formation de contaminants aldéhydiques au cours de la transformation à chaud de ladite composition, qui comprend
(a) un polyester ou polyamide, et
(b) une quantité à efficacité stabilisante d'au moins un composé pris dans le groupe constitué par les composés base de Mannich de formules (Ia), (Ib), (IIa), (IIb), (IIc), (IIIa), (IIIb), (IIIc), (IVa), (IVb) et (IVc) selon la revendication 1 ; et facultativement
(c) une quantité à efficacité stabilisante d'un polymère qui est le poly(alcool vinylique) ou d'un copolymère d'éthylène/alcool vinylique ; et facultativement
(d) une quantité à efficacité stabilisante d'un alcool polyhydroxylique ; et facultativement
(e) une quantité à efficacité stabilisante d'un polymère qui est le polyacrylamide, le polyméthacrylamide ou un copolymère d'acrylamide ou de méthacrylamide avec au moins un comonomère à insaturation éthylénique ; et facultativement
(f) une quantité à efficacité stabilisante d'au moins un composé pris dans le groupe constitué par
i.) les stabilisants de type hydroxylamine,
ii.) les stabilisants de type hydroxylamine substituée,
iii.) les stabilisants de type nitrone, et
iv.) les stabilisants de type oxyde d'amine ; et facultativement
(g) une quantité à efficacité stabilisante d'au moins un polymère ou copolymère dérivé d'au moins un monomère ester de l'acide 2-propénoique, où l'alcool polyhydroxylique de (d) répond à la formule G-(OH)ₐ,
où a va de 2 à 4000, et Q est un fragment hydrocarbyle, et où le polymère ou le copolymère du composant (g) répond à la formule 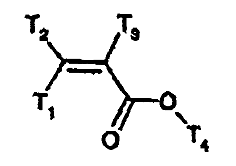 dans laquelle T₁, T₂ et T₃, indépendamment les uns des autres, représentent un atome d'hydrogène, une groupe alkyle présentant 1 à 24 atomes de carbone à chaîne droite ou ramifiée, cycloalkyle présentant 5 à 12 atomes de carbone, aralkyle présentant 7 à 15 atomes de carbone, ou lesdits alkyle, cycloalkyle ou aralkyle, qui sont substitués davantage par un ou plusieurs substituants -OT₅, -NT₆T₇, -CO₂T₈ ou -CONT₉T₁₀ où T₅, T₆, T₇, T₈, T₉ et T₁₀, indépendamment, représentent un atome d'hydrogène ou un groupe alkyle présentant 1 à 18 atomes de carbone à chaîne droite ou ramifiée ; ou T₁, T₂, T₃, indépendamment, représentent un groupe -CO₂T₄, T₄ représente un substituant alcool polyhydroxylique de formule -E-(OH)ₐ, où a va de 2 à 4000, et E représente un fragment hydrocarbylène.

13. composition selon la revendication 12 dans laquelle les alcools du composant (d) sont pris dans le groupe constitué par le pentaérythritol, le dipentaérythritol et le triméthylolpropane et les composés du composant (f) sont pris dans le groupe constitué par la N,N-di(alkyl)-hydroxylamine produite par oxydation directe de la N,N-di(suif hydrogénée)-amine, de l'O-allyl-N,N-dioctadécylhydroxylamine, de la N-octadécyl-α-heptadécylnitrone et de l'oxyde de di(alkyl en C₁₆-C₁₈)méthylamine.

14. Composition stabilisée contre la formation de contaminants aldéhydiques au cours de la transformation à chaud de ladite composition, qui comprend
(a) un polyester ou polyamide, et
(b) une quantité à efficacité stabilisante d'au moins un composé pris dans le groupe constitué par les composés base de Mannich de formules (Ia), (Ib), (IIa), (IIb), (IIc), (IIIa), (IIIb), (IIIc) (IVa), (IVb) et (IVc) selon la revendication 1, et
(c) au moins un composé pris dans le groupe constitué par les composés amine.

15. Composition stabilisée contre la formation de contaminants aldéhydiques au cours de la transformation à chaud de ladite composition, qui comprend
(a) un polyester ou polyamide, et
(b) une quantité à efficacité stabilisante d'au moins un composé pris dans le groupe constitué par les produits thermiques des composés base de Mannich de formules (Ia), (Ib), (IIa), (IIb), (IIc), (IIIa), (IIIb), (IIIc) (IVa), (IVb) et (IVc) selon la revendication 1, et
(c) au moins un composé pris dans le groupe constitué par des composés amine.

16. Composition stabilisée contre la formation de contaminants aldéhydiques et contre le jaunissement au cours de la transformation à chaud de ladite composition, qui comprend
(a) un polyester ou polyamide, et
(b) une quantité à efficacité stabilisante d'au moins un composé pris dans le groupe constitué par les composés base de Mannich de formules (Ia), (Ib), (IIa), (IIb), (IIc), (IIIa), (IIIb), (IIIc) (IVa), (IVb) et (IVc) selon la revendication 1, et
(c) un ou plusieurs colorants pris dans le groupe constitué par des pigments et colorants.

17. Fibre, film ou article moulé stabilisé contre la formation de contaminants aldéhydiques au cours de la transformation à chaud de ladite composition, qui comprend
(a) un polyester ou polyamide, et
(b) une quantité à efficacité stabilisante d'au moins un composé pris dans le groupe constitué par les composés base de Mannich de formules (Ia), (Ib), (IIa), (IIb), (IIc), (IIIa), (IIIb), (IIIc) (IVa), (IVb) et (IVc) selon la revendication 1.

18. Procédé pour la préparation d'un polyester ou polyamide stabilisé qui génère un faible niveau d'aldéhydes au cours de la transformation à chaud ultérieure, lequel procédé comprend la préparation du polyester ou du polyamide à partir de ses composants monomères en présence d'une quantité efficace d'un stabilisant pris dans le groupe constitué par les composés base de Mannich de formules (Ia), (Ib), (IIa), (IIb), (IIc), (IIIa), (IIIb), (IIIc) (IVa), (IVb) et (IVc) selon la revendication 1.

19. Procédé selon la revendication 18 pour la préparation d'un polyester stabilisé qui génère une faible quantité d'aldéhydes au cours de la transformation à chaud ultérieure, lequel procédé comprend la réaction d'un ou plusieurs diacides avec un ou plusieurs diols dans un procédé d'estérification et/ou un ou plusieurs diesters avec un ou plusieurs diols dans un procédé de transestérification en présence d'une quantité efficace d'un stabilisant pris dans le groupe constitué par les composés base de Mannich de formules (Ia), (Ib), (IIa), (IIb), (IIc), (IIIa), (IIIb), (IIIc) (IVa), (IVb) et (IVc).

20. Polyester ou polyamide obtenu par le procédé selon la revendication 18.

21. utilisation du composant (b) selon la revendication 1 pour empêcher la formation de contaminants aldéhydiques au cours de la transformation à chaud d'un polyester ou polyamide.
